(19) Europäisches Patentamt
European Patent Office
Office européen des brevets

(11) EP 3 805 323 B1

(12) **EUROPEAN PATENT SPECIFICATION**

(45) Date of publication and mention of the grant of the patent:
**07.06.2023 Bulletin 2023/23**

(21) Application number: **19814581.5**

(22) Date of filing: **07.06.2019**

(51) International Patent Classification (IPC):
***C09D 11/322*** *(2014.01)* ***B41J 2/01*** *(2006.01)*
***B41M 5/00*** *(2006.01)*

(52) Cooperative Patent Classification (CPC):
**C09D 11/38; C09D 11/322; C09D 11/40**

(86) International application number:
**PCT/JP2019/022800**

(87) International publication number:
**WO 2019/235628 (12.12.2019 Gazette 2019/50)**

(54) **INKJET MAGENTA INK, INK SET, AND PRINTED MATTER PRODUCTION METHOD USING SAID INKJET MAGENTA INK AND INK SET**

TINTENSTRAHL-MAGENTA-TINTE, TINTENSATZ UND VERFAHREN ZUR HERSTELLUNG VON DRUCKERZEUGNISSEN UNTER VERWENDUNG DIESER TINTENSTRAHL-MAGENTA-TINTE UND DIESES TINTENSATZES

ENCRE MAGENTA POUR JET D'ENCRE, JEU D'ENCRES ET PROCÉDÉ DE PRODUCTION DE MATIÈRE IMPRIMÉE UTILISANT LADITE ENCRE MAGENTA POUR JET D'ENCRE ET LEDIT ENSEMBLE D'ENCRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2018 JP 2018109736**

(43) Date of publication of application:
**14.04.2021 Bulletin 2021/15**

(73) Proprietors:
- **Toyo Ink SC Holdings Co., Ltd.**
  **Tokyo 104-8377 (JP)**
- **TOYOCOLOR CO., LTD.**
  **Tokyo, 104-8381 (JP)**

(72) Inventors:
- **YODA, Atsushi**
  **Tokyo 104-8378 (JP)**
- **SUZUKI, Norio**
  **Tokyo 104-8378 (JP)**
- **JONAI, Kazuhiro**
  **Tokyo 104-8378 (JP)**

(74) Representative: **Grünecker Patent- und Rechtsanwälte**
**PartG mbB**
**Leopoldstraße 4**
**80802 München (DE)**

(56) References cited:
**WO-A1-2015/105503**
**WO-A1-2015/187143**
**JP-A- 2015 013 971**
**JP-A- 2015 030 801**
**JP-A- 2016 074 749**
**JP-A- 2018 196 952**
**JP-B1- 6 061 008**
**US-A1- 2002 096 085**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 805 323 B1

## Description

### Technical Field

The present invention relates to an ink set including a cyan ink, a yellow ink and a magenta ink, and a method for producing a printed matter using it.

### Background Art

Unlike conventional offset printing or gravure printing, digital printing does not require a plate, and can therefore realize cost reduction utilizing a small lot printing and downsizing of a printing device. Accordingly, digital printing is utilized in various applications.

There are two digital printing techniques currently in use on the market. One is called electrophotography, which is a method of printing using a powder or liquid toner, and is widely used in color printers or office multifunction devices. The other digital printing technique is the inkjet method, which is also used in various applications such as consumer printers.

The inkjet method is a recording method in which ink droplets are directly discharged from extremely fine nozzles onto a printing substrate and adhered to the printing substrate to obtain text and/or images. The inkjet method is an excellent printing technology that not only offers the advantage that noise from the printing apparatus is small and operability is excellent, but also offers, for example, simple color production.

Other features of the inkjet method include the capability of the use of many types of inks, such as a water-based ink, an oil-based ink, a solvent-based ink, or an ultraviolet curable (UV) ink, and the capability of printing on a variety of printing substrates in a non-contacting manner. Since the inkjet method is capable of printing on substrates other than paper substrates, the inkjet method is expected to be used not only for commercial printing applications but also for various applications such as sign and display printing.

For example, in sign and display applications, a printing apparatus capable of printing on a plastic substrate such as a polyvinyl chloride sheet or a PET film using a solvent-based ink or UV ink has actually been commercially available. In recent years, however, there has been a growing demand for water-based inks in terms of safety and environmental considerations.

In order to meet these requirements, a water-based ink capable of producing a printed matter which has high color development (high density), high sharpness (high chroma saturation), and high color reproducibility, and is also excellent in image quality, regardless of the substrate used, is required. In particular, magenta inks, for which such requirements are strong, have been investigated in various ways as disclosed in Patent Literatures (PLT) 1 to 4. However, these investigations have been mainly made for high-absorption substrates such as plain paper or special paper.

In recent years, there has been a growing need for direct printing on low-absorption substrates such as art paper, coated paper, or finely coated paper, with the expectation of further expanding applications of the inkjet method. Therefore, it is also required that, with respect to these substrates, a printed matter having high color development, high sharpness, high color reproducibility, and high image quality can be produced. However, water-based inks have a high surface tension due to water, and therefore, they are unlikely to penetrate into low-absorption substrates, and are extremely unlikely to undergo wet spreading on low-absorption substrates. As a result, poor drying and/or voids due to insufficient wet spreading of the water-based ink are likely to occur on the low-absorption substrate. Further, since the surface tension of water-based inks is high, coalescence of the droplets are caused on the substrate at the time of impact, resulting in deterioration of image quality such as uneven density.

Furthermore, in order to realize high color development, high sharpness, and high color reproducibility, it is also important to select a color material to be used. Generally, a quinacridone pigment or an azo pigment is used as a color material in water-based magenta inks (also refer to Patent Literatures 2 to 4). However, quinacridone pigments have a low coloring power, and the color reproduction region thereof is not sufficiently satisfactory. On the other hand, azo pigments have high coloring power and sharpness, and have a large color reproduction region, but have poor stability to organic solvents, and in some cases, a problem arises in that the pigment is dissolved in an organic solvent, and the original color development properties and/or sharpness properties of the pigment cannot be exhibited on the substrate. In addition, another problem arises in that when an ink containing an azo pigment dissolved in an organic solvent is allowed to stand by in an inkjet head for a long period of time, the pigment is deposited in the process of concentrating the water-based ink by volatilization of water, resulting in nozzle blockages.

The present applicants have previously proposed a water-based ink in which C. I. Pigment Red 150, which is an azo pigment, and a basic organic compound are used, in Patent Literature 5. According to Patent Literature 5, an inkjet ink excellent in color reproducibility of red and excellent in discharge stability without causing failure such as nozzle blockages can be obtained.

Patent Literature 6 relates to a magenta pigment blend comprising a quinacridone pigment and an azo pigment.

Patent Literature 7 relates to an aqueous ink composition containing at least one pigment selected from the group consisting of a condensed azo pigment, a condensed polycyclic pigment, a phthalocyanine pigment, and a nickel complex azo pigment, at least an anionic surfactant with ethylene oxide group or a nonionic surfactant with ethylene oxide group as a dispersant, a wetting agent, a penetrating agent, and water.
Patent Literature 8 relates to an inkjet magenta ink comprising at least a pigment, a pigment dispersing resin, a water-soluble organic solvent and water.
Patent Literature 9 relates to magenta inkjet inks having a quinacridone pigment and an azo pigment.
Patent Literature 10 relates to a method for producing a water-based ink for ink-jet recording.
Patent Literature 11 relates to a magenta ink for an inkjet containing at least two pigments different in hue.
Patent Literature 12 relates to a pigment composition comprising a quinacridone pigment and a monoazo pigment.

Citation List

Patent Literature

PLT 1: JP H9-279070 A
PLT 2: JP H10-219166A
PLT 3: JP 2005-29626A
PLT 4: JP 2007-99997A
PLT 5: JP 2014-214277A
PLT 6: WO 2015/187143 A1
PLT 7: US 2002/096085 A1
PLT 8: JP 6061008 B
PLT 9: WO 2015/105503 A1
PLT 10: JP 2015-013971 A
PLT 11: JP 2015-030801 A
PLT 12: JP 2016-074749 A


Summary of Invention

Technical Problem

The present invention has an object of providing an ink set that contains a magenta ink for an inkjet and that can realize high color reproducibility and can produce a high-quality image without mixed color bleeding and the like, even on a low-absorption substrate, and also providing a method for producing a printed matter using the ink set.
The present invention also has an object of providing a printed matter that includes a low-absorption substrate and that has high color reproducibility and a high-quality image.

Solution to Problem

The inventors of the present invention conducted intensive research with the aim of achieving above objects, and discovered that the magenta ink for an inkjet containing two or more pigments containing an azo pigment and a diol-based solvent having a specific structure, in which the blending amounts of these components are prescribed, and a blending amount of a cyclic amide-based solvent is a specific amount or less, and the ink set containing the magenta ink for an inkjet, were able to achieve the object described above.
The subject matter of the invention is as set out in the appended claims.
The present invention provides an inkjet ink set comprising at least a cyan ink, a yellow ink and a magenta ink, wherein

the cyan ink and the yellow ink comprise a diol-based solvent (A-1), and
the magenta ink comprises:
two or more pigments, a water-soluble organic solvent (A), a surfactant and water, wherein the two or more pigments comprise an azo pigment, wherein the azo pigment comprises a naphthol AS pigment and/or a β-oxynaphthoic acid-based lake pigment,

an amount of the azo pigment is from 0.5 to 8% by mass of a total mass of the magenta ink for an inkjet, and from 35 to 100% by mass of a total mass of the pigments,
the water-soluble organic solvent (A) comprises a diol-based solvent (A-1) that is a diol-based solvent represented by formula (1) shown below and has n of 1 and/or 2, in a molar amount of from 5 to 250 times a molar amount of the azo pigment,
a molar amount of a diol-based solvent (A-2) that is a diol-based solvent represented by formula (1) shown below and has n of 3 and/or 4 is 0.1 times or less the molar amount of the diol-based solvent (A-1), and
an amount of a cyclic amide-based solvent in the water-soluble organic solvent (A) is not more than 4.5% by mass of the total mass of the magenta ink for an inkjet:

$$HO\text{-}(AO)n\text{-}H \qquad (1)$$

wherein, in formula (1), AO represents an ethylene oxide group or a propylene oxide group, and n represents an integer of from 1 to 4,

and wherein the molar amount of the diol-based solvent (A-1) is 5 to 250 times the molar amount of the azo pigment contained, calculated using an ink obtained by mixing all the inks included in the ink set except for black ink in equal amounts.

Also provided is a method for producing an inkjet printed matter according to appended claim 11 and an inkjet printed matter according to appended claim 13.
Preferred embodiments of the present invention are set forth in the dependent claims.

Advantageous Effects of Invention

The present disclosure relates to a magenta ink for an inkjet that can produce a high-quality image having high color development and high sharpness without voids, regardless of a substrate, and that has excellent storage stability, discharge stability and drying properties, and a method for producing a printed matter using the magenta ink.
The present invention is able to provide an ink set that contains a magenta ink for an inkjet and that can realize high color reproducibility and can produce a high-quality image without mixed color bleeding and the like, even on a low-absorption substrate, and a method for producing a printed matter using the ink set.
The present invention is also able to provide a printed matter that includes a low-absorption substrate and that has high color reproducibility and a high-quality image.

Description of Embodiments

The present invention is described below with reference to preferred embodiments. However, the embodiments described below are illustrative of embodiments of the present invention and are not intended to limit the scope of the present invention.
In the present invention, two or more pigments including an azo pigment and a diol-based solvent having a specific structure are contained, the blending amounts of these components are prescribed, and the blending amount of a cyclic amide-based solvent is a specific amount or less. As a result, a magenta ink for an inkjet (hereinafter also referred to simply as "ink") capable of obtaining a high-quality image having high color development, high sharpness, and high color reproducibility without voids, regardless of a substrate, and having excellent storage stability, excellent discharge stability, and excellent drying properties can be realized.
As described in the "Background Art" section, since the surface tension of water contained as the main component of water-based inks is generally very high, when a water-based ink is printed on a substrate using an inkjet head, poor drying and/or voids occur due to poor permeability to the substrate and poor wet spreadability. In particular, in the case of low-absorption substrates, ink droplets landing adjacent to each other may coalesce before they undergo sufficient wet spreading, resulting in mixed color bleeding and/or density unevenness. Therefore, in order to obtain a printed matter having excellent printing image quality and drying properties, it is very important to improve penetration properties and wet spreading properties of the ink. In general, an organic solvent and/or a surfactant are used to improve ink penetration and wet spreadability. In this case, the higher the hydrophobicity of the organic solvent used, the greater the effect of improving the permeability and the wet spreadability.
On the other hand, azo pigments have high color development and excellent sharpness, but have poor stability to an organic solvent and to a surfactant, particularly to a highly hydrophobic organic solvent. Therefore, when an organic solvent and/or a surfactant is used for the purpose of improving the wet spreadability, the azo pigment may be dissolved in such a solvent or the dispersion state of the azo pigment may be destroyed by the surfactant, whereby the storage stability of the ink and the color development and sharpness of the printed matter may be deteriorated. Further, a problem also arises in that when the ink is allowed to stand by in the inkjet head for a long period of time, the azo pigment dissolved in the organic solvent is precipitated during the process of concentrating the ink, causing nozzle blockage or the like, resulting in non-discharge.

As described above, conventional inks using an azo pigment have a problem in that it is difficult to achieve a combination of favorable storage stability, favorable discharge stability, favorable color development and sharpness of images, excellent print quality, and excellent drying properties. As a result of the intensive investigation by the present inventors aimed at addressing the problem, the inventors discovered that the above problem could be solved by containing two or more of pigments including an azo pigment and a diol-based solvent having a specific structure, regulating the blending amount these components, and regulating the blending amount of a cyclic amide-based solvent to a specific amount or less. The following reasons can be considered as the reasons why a magenta ink capable of obtaining an image having high color development, high sharpness, high color reproducibility without voids, and having excellent storage stability, discharge stability, and drying properties can be obtained by the above constitution, although the following are conjecture.

First, in the present invention, two or more pigments including an azo pigment and a diol-based solvent (A-1) that is a diol-based solvent represented by formula (1) and has n of 1 and/or 2 are used in combination, and the amount of the diol-based solvent (A-1) is 5 to 250 times the molar amount of the azo pigment. By using two or more pigments including an azo pigment, the spectral reflectance described below is adjusted while utilizing the color development properties and sharpness of the azo pigment, and a printed matter that is also excellent in color reproducibility is obtained. The "diol-based solvent (A-1) that has n of 1 and/or 2" means "'a diol-based solvent wherein, in formula (1), n is 1' and/or 'a diol-based solvent wherein, in formula (1), n is 2'".

Further, it is thought that since the diol-based solvent (A-1) has a small molecular size and contains a large amount of oxygen atoms in the molecular structure, the diol-based solvent is strongly bonded to an amide bond and a hydroxyl group present in an azo pigment molecule by hydrogen bonding, and exists in close proximity of the azo pigment molecule. It is thought that, due to this, the azo pigment molecule is protected by the diol-based solvent (A-1) present in the surroundings, and the dissolution and the destruction of dispersed state are prevented. It is thought that, as a result, even when the azo pigment is used in combination with a highly hydrophobic organic solvent and/or surfactant, deterioration of storage stability, deterioration of color development and sharpness of printed matter, and non-discharge (deterioration in discharge stability) due to the dissolution and the destruction of the dispersed state of the azo pigment as described above are suppressed. Further, the diol-based solvent (A-1) molecules are bonded to other diol-based solvent (A-1) molecules and other materials present in the ink by intermolecular force-based interactions. As a result, it is thought that the viscoelasticity of the ink becomes favorable, and the discharge stability in high-speed printing can be further improved. The molar amount of the diol-based solvent (A-1) defined in embodiments of the present invention is sufficient to protect the azo pigment molecules and to form interactions with other materials.

On the other hand, it is thought that the diol-based solvent (A-2) that is a diol-based solvent represented by formula (1) and has n of 3 and/or 4 also forms a hydrogen bond with an azo pigment molecule. However, it is thought that since the diol-based solvent (A-2) has a larger molecular size than the diol-based solvent (A-1), the bond of the diol-based solvent (A-2) to the azo pigment molecule is weaker than that of the diol-based solvent (A-1), and the protection of the azo pigment molecule is insufficient. Therefore, the molar amount of the diol-based solvent (A-2) is limited to 0.1 times or less the molar amount of the diol-based solvent (A-1), so that the effect of the pigment protection is favorably exhibited. The "diol-based solvent (A-2) that has n of 3 and/or 4" means "'a diol-based solvent wherein, in formula (1), n is 3' and/or 'a diol-based solvent wherein, in formula (1), n is 4 in formula (1)'".

Further, since cyclic amide-based solvents are generally very soluble, even if the azo pigment is protected by the diol-based solvent (A-1), it is difficult to suppress the dissolution of the azo pigment. Therefore, the amount of the cyclic amide-based solvent is also limited to 4.5% by mass or less of the total mass of the ink to suppress the insufficient expression of the effect of the protection.

As described above, in order to obtain an ink that simultaneously satisfies the above-described effects, an ink having a configuration of the present invention is preferable.

Next, each component contained in the ink contained in the ink set of the present invention is described.

<Pigment>

<Azo Pigment>

The magenta ink for an inkjet contains two or more pigments, one or more of which is an azo pigment. The azo pigment comprises naphthol AS pigment and/or a β-oxynaphthoic acid-based lake pigment. The amount of the azo pigment in the ink is in the range of from 0.5 to 8% by mass of the total mass of the ink, and from 35 to 100% by mass of the total mass of the pigments, from the viewpoints that a printed matter having excellent sharpness and gloss can be obtained, and the discharge stability, color development and sharpness can be improved by favorable compounding balance with a diol-based solvent (A-1). The amount of the azo pigment is preferably in the range of from 1 to 8% by mass of the total mass of the ink, and more preferably in the range of from 1.5 to 6.5% by mass of the total mass of the ink. From the viewpoint that an ink particularly excellent in storage stability, color development and sharpness can be obtained, the amount of the azo pigment of the total mass of the pigments is preferably in the range of from 50 to 100% by mass, more preferably in the range of from 65 to 100% by mass, and particularly preferably from 80 to 100% by mass.

Further, the magenta ink for an inkjet may contain two or more azo pigments as the azo pigment in order to obtain a spectral reflectance of the ink coating described below within a favorable range, to improve discharge stability and to obtain a printed matter having excellent color development, sharpness and color reproducibility. Examples of azo pigments that can be used in embodiments of the present invention include, but are not limited to, naphthol AS pigments, azo-lake pigments, other monoazo pigments, and disazo pigments.

It is preferable to use at least one pigment selected from among C. I. Pigment Red 31, C. I. Pigment Red 146, C. I. Pigment Red 147, C. I. Pigment Red 150, C. I. Pigment Red 170, C. I. Pigment Red 266 and C. I. Pigment Red 269. These pigments are also known as naphthol AS pigments. Since naphthol AS pigments have better stability to organic solvents than other azo pigments, and since naphthol AS pigments have an ether bond and an amino group in the structure, and thus are thought to have a strong interaction with a diol-based solvent (A-1), then the effect of the present invention can be especially preferably exhibited. In addition, the ink can be made to have excellent discharge stability and excellent color development and sharpness of an image regardless of the kind and amount of materials such as water-soluble organic solvents and/or surfactants used in combination therewith. Among the pigments exemplified above, in view of image sharpness, and, when used in an ink set, exhibiting of particularly high color reproducibility, the azo pigment more preferably contains at least one selected from among C. I. Pigment Red 146, C. I. Pigment Red 150, C. I. Pigment Red 170, and C. I. Pigment Red 266. From the viewpoints of a strong interaction with a diol-based solvent (A-1), excellent storage stability of the ink and excellent color development, sharpness, and color reproducibility of the printed matter, the azo pigment particularly preferably contains C. I. Pigment Red 150.

When, for example, C. I. Pigment Red 150 is used as an example of the naphthol AS pigment, C. I. Pigment Red 150 can be obtained by the coupling reaction of 3-amino-4 methoxybenzanilide with 3-hydroxy-2-naphthamide. It is known that a portion of these raw materials remains in commercial products of C. I. Pigment Red 150 (refer to Patent Literature 5). Since these raw materials also contain an amino group and a hydroxyl group, it is thought that the interaction with the diol-based solvent (A-1) described above occurs. If the amount of these raw materials contained as impurities is large, the amount of the diol-based solvent (A-1) that interacts with the C. I. Pigment Red 150 may decrease, and the protection of the pigment may become insufficient. Accordingly, it is preferable to reduce the amount of these impurities in order to sufficiently exhibit the effect according to one embodiment of the present invention. In the case of C. I. Pigment Red 150, each of the amount of 3-amino-4-methoxybenzanilide and the amount of 3-hydroxy-2-naphthamide is preferably 8,000 ppm or less, more preferably 6,000 ppm or less, still more preferably 4,000 ppm or less, and particularly preferably 3,000 ppm or less, relative to the total mass of the ink. The amount of impurities can be measured, for example, by an HPLC method (a high performance liquid chromatography method).

In the present invention, a specific azo lake pigment can be used as the azo pigment. In the present specification, the term "azo-lake pigment" refers to an insolubilized pigment obtained by imparting a polyvalent metal ion having a high insolubilizing effect, such as $Ca^{2+}$, $Ba^{2+}$, $Sr^{2+}$, $Mn^{2+}$, or $Al^{3+}$, to a water-soluble azo colorant. The azo lake pigments have very strong color development properties and coloring power, and even if the amount of the azo lake pigment in the ink is small, an image excellent in color development and sharpness can be obtained, and when used in an ink set, an image excellent in color reproducibility can be obtained. In addition, since the amount of the pigment itself that can cause non-discharge due to dissolution and precipitation can be suppressed, discharge stability can be improved.

In the present invention, a β-oxynaphthoic acid-based lake pigment can be used. As the β-oxynaphthoic acid-based lake pigment which can be used in the present invention, it is preferable to contain at least one selected from among C. I. Pigment Red 48:1, C. I. Pigment Red 48:2, C. I. Pigment Red 48:3, C. I. Pigment Red 52:1, C. I. Pigment Red 52:2, C. I. Pigment Red 57:1, and C. I. Pigment Red 57:2, and from the viewpoint of color development of an image and color reproducibility when used in an ink set, it is particularly preferred to contain C. I. Pigment Red 48:3.

Moreover, in one embodiment of the present invention, from the viewpoint of storage stability, image sharpness, and color reproducibility, at least one monoazo pigment and/or disazo pigment selected from among C. I. Pigment Red 1, C. I. Pigment Red 166, C. I. Pigment Red 185 and C. I. Pigment Red 242 can be preferably used.

In one preferred embodiment, a naphthol AS pigment and a β-oxynaphthoic acid-based lake pigment are preferably used in combination from the viewpoint of obtaining a magenta ink for an inkjet excellent in storage stability, drying properties, and discharge stability. In that case, as the naphthol AS pigment, it is preferable to contain one or more selected from among C. I. Pigment Red 146, C. I. Pigment Red 150, C. I. Pigment Red 170 and C. I. Pigment Red 266, and it is more preferable to contain at least one selected from among C. I. Pigment Red 146 and C. I. Pigment Red 150, and from the viewpoint of the storage stability of the ink and the color development, sharpness, and color reproducibility of the printed matter, it is particularly preferred to contain at least C. I. Pigment Red 150. As the β-oxynaphthoic acid-based lake pigment to be used in combination with the naphthol AS pigment, C. I. Pigment Red 48:1 and/or C. I. Pigment Red 48:3 are preferably used, and from the viewpoint of image sharpness and color reproducibility when used in an ink set, it is particularly preferred to contain at least C. I. Pigment Red 48:3.

When the naphthol AS pigment and the β-oxynaphthoic acid-based lake pigment are used together, the amount of the β-oxynaphthoic acid-based lake pigment relative to the total mass of the naphthol AS pigment and the β-oxynaphthoic acid-based lake pigment is preferably from 50 to 99% by mass, more preferably from 70 to 97% by mass, and particularly preferably from 90 to 95% by mass. Although the details are unknown, the ink having the above-mentioned amount is excellent in storage stability, discharge stability and drying properties.

In the present invention, the phrase that the ink contains "two or more pigments" as used herein means that the ink contains "two or more pigments that are not identical in chemical structure". As for the solid solution pigment, since the solid solution pigment itself contains "two or more pigments that are not identical in chemical structure", for example, an ink containing one solid solution pigment can be said to be an ink containing "two or more pigments". The phrase "two or more pigments include an azo pigment" means that "at least one selected from among two or more pigments is an azo pigment". For example, all of "two or more pigments" may be azo pigments. Only one of the "two or more pigments" may be an azo pigment, and the remaining one or more may be pigments other than azo pigments. One or more of the "two or more pigments" may be azo pigments, and only the remaining one may be a pigment other than azo pigments.

<Other Pigments>

In the inkjet magenta ink used in the present invention, a pigment other than the azo pigment (hereinafter also referred to as an "other pigment") may be used in the two or more pigments in order to obtain a spectral reflectance of an ink-coating described below within a favorable range and to impart characteristics such as high color development, high sharpness, high color reproducibility, light resistance, and water resistance to an inkjet printed matter. In particular, from the viewpoints that a printed matter excellent in light resistance and water resistance can be obtained and excellent discharge stability of the ink used in combination can be obtained, for this other pigment, it is preferable to select a quinacridone pigment, examples of which include C. I. Pigment Red 122, C. I. Pigment Red 202, C. I. Pigment Red 209, C. I. Pigment Red 282 and C. I. Pigment Violet 19, and/or a solid solution pigment containing a quinacridone pigment as described above. It is particularly preferred that the two or more pigments include at least C. I. Pigment Red 122 from among the quinacridone pigments exemplified above, from the viewpoint of obtaining high sharpness of printed matter and exhibiting high color reproducibility when used in an ink set.

In one embodiment of the present invention, when an azo pigment is used in combination with the above described other pigment, from the viewpoint of obtaining a spectral reflectance of 10% or less in the wavelength region of from 480 to 580 nm, which is described below, and providing an ink excellent in sharpness and color reproducibility of printed matter and excellent in discharge stability, the azo pigment used in combination with this other pigment is preferably one or more selected from among C. I. Pigment Red 146, C. I. Pigment Red 150, C. I. Pigment Red 170, C. I. Pigment Red 266, C. I. Pigment Red 48:1 and C. I. Pigment Red 48:3 are preferable, and C. I. Pigment Red 150 and/or C. I. Pigment Red 48:3 are particularly preferred.

When a naphthol AS pigment is contained as the azo pigment, the amount of the azo pigment relative to the total mass of the pigment is preferably from more than 50% by mass to 99% by mass, more preferably from 55 to 98% by mass, still more preferably from 60 to 97% by mass, and particularly preferably from 70 to 95% by mass.

On the other hand, when, as the azo pigment, a naphthol AS pigment is not contained, but a β-oxynaphthoic acid-based lake pigment is contained, the amount of the azo pigment relative to the total mass of the pigment is preferably from 35 to 55 % by mass, and more preferably from 35 to 50 % by mass.

As for each of the azo pigment and the above described other pigment, two or more pigments may be used.

<Water-soluble Organic Solvent (A)>

<Diol-based Solvents (A-1)>

The magenta ink for an inkjet contains, as a water-soluble organic solvent (A), a diol-based solvent (A-1) that is a diol-based solvent represented by formula (1) and has n of 1 and/or 2, in an amount of from 5 to 250 times the molar amount of the azo pigment.

As described above, it is thought that the diol-based solvent (A-1) is bonded to the azo pigment by hydrogen bonding and prevents the azo pigment from dissolving, thereby improving color development, sharpness, and color reproducibility of the printed matter, storage stability, and discharge stability. From the viewpoint of sufficiently protecting the azo pigment molecules and forming the interaction with other materials, the molar amount of the diol-based solvent (A-1) is preferably from 8 to 200 times the molar amount of the azo pigment, and particularly preferably from 10 to 160 times the molar amount of the azo pigment.

Specific examples of the diol-based solvent (A-1) in embodiments of the present invention include ethylene glycol, diethylene glycol, propylene glycol, and dipropylene glycol. Among them, it is preferable to contain ethylene glycol and/or propylene glycol from the viewpoint that the molecular size is small and the azo molecules can be suitably protected, and the viewpoint that the boiling point at one atmosphere is low and the drying properties of the ink can be improved, and it is particularly preferable to contain at least propylene glycol from the viewpoint that the surface tension is small and occurrence of voids of the printed matter can be prevented. In embodiments of the present invention, as the diol-based solvent (A-1), one of the above solvents may be used singly or two or more thereof may be used in combination. From the viewpoint of improving storage stability and drying properties of the ink, it is preferable that ethylene glycol and/or propylene glycol account for not less than 50 % by mass of the total mass of the diol-based solvent (A-1).

In one embodiment of the present invention, the amount of the diol-based solvent (A-1) is preferably from 2 to 40% by mass, more preferably from 5 to 37% by mass, and particularly preferably from 8 to 35% by mass of the total mass of the ink, from the viewpoints that the color development and color reproducibility of the printed matter can be improved and the storage stability and discharge stability of the ink can be improved. As described above, the amount of the diol-based solvent (A-1) is determined in consideration of the amount of the azo pigment.

<Diol-based Solvents (A-2)>

In the magenta ink for an inkjet, as the water-soluble organic solvent (A), a diol-based solvent (A-2) that is a diol-based solvent represented by formula (1) and has n of 3 and/or 4 may be contained, and when the diol-based solvent (A-2) is contained, the amount of the diol-based solvent (A-2) is 0.1 times or less the molar amount of the diol-based solvent (A-1). This is for preventing the protection of the azo pigment from being weakened by the diol-based solvent (A-1). From the viewpoint that an ink excellent in storage stability and discharge stability and excellent in color development and sharpness of printed matter can be obtained as a result, the molar amount of the diol-based solvent (A-2) is preferably 0.05 times or less the molar amount of the diol-based solvent (A-1), more preferably 0.02 times or less the molar amount of the diol-based solvent (A-1), and still more preferably 0.01 times or less the molar amount of the diol-based solvent (A-1).

In one embodiment of the present invention, it is preferable that the magenta ink for an inkjet contains substantially no diol-based solvent (A-2). In this specification, the phrases "to contain substantially no" means that the material is not intentionally added, and does not exclude the presence of a trace amount of impurities and/or by-products. Specifically, it means that the amount of the material is 1% by mass, preferably 0.5% by mass or less, more preferably 0.2% by mass or less, and particularly preferably 0.1% by mass or less, of the total mass of the ink.

Specific examples of the diol-based solvent (A-2) in embodiments of the present invention include triethylene glycol, tetraethylene glycol, tripropylene glycol, and tetrapropylene glycol. Among the above, when a diol-based solvent (A-2) is used for the ink, triethylene glycol and/or tripropylene glycol are preferably contained, because the boiling point is low. In one embodiment of the present invention, when a diol-based solvent (A-2) is used, one of the above solvents may be used singly, or two or more thereof may be used in combination.

<Cyclic Amide-based Solvent>

As described above, from the viewpoint of suppressing the dissolution of the azo pigment and suitably exhibiting the effect of the present invention, the magenta ink for an inkjet contains substantially no cyclic amide-based solvent, or when containing a cyclic amide-based solvent, the amount of the cyclic amide-based solvent is 4.5% by mass or less of the total mass of the magenta ink for an inkjet. From the above viewpoint, the amount of the azo pigment is preferably 2.0% by mass or less of the total mass of the ink, and it is particularly preferable that the ink contains substantially no azo pigment

Examples of the cyclic amide-based solvent include 2-pyrrolidone, N-methylpyrrolidone, N-ethylpyrrolidone, N-vinyl-2-pyrrolidone, ε-caprolactam, N-methyl-ε-caprolactam, N-ethyl-ε-caprolactam and N-vinyl-ε-caprolactam. When a cyclic amide-based solvent is used in the ink, it is preferable to contain one or more selected from among 2-pyrrolidone, N-methylpyrrolidone and ε-caprolactam among the solvents as described above, from the viewpoint of the boiling point of the solvent, the safety and the influence on the storage stability of the ink. In embodiments of the present invention, when a cyclic amide-based solvent is used, one of the above solvents may be used alone or two or more of the above solvents may be used in combination.

In the present invention, the term "cyclic amide-based solvent" refers to a compound that has at least one cyclic structure and has at least one amide bond in at least one cyclic structure, and that is a liquid at 25°C.

<Other Water-soluble Organic Solvents>

In the ink, any water-soluble organic solvent other than the water-soluble organic solvent (A-1) mentioned above can be used within a range not impairing the quality. In the present invention, the term "solvent" means one that is liquid at 25°C. In addition to those listed in the above, examples of water-soluble organic solvents that can be used in the ink include, but are not limited to:

monohydric alcohols such as ethanol, 1-propanol, 2-propanol, 1-butanol, 2-butanol, isobutyl alcohol, tert-butyl alcohol, 3-methoxy-1-butanol, and 3-methyl-3-methoxybutanol;
dihydric alcohols (diols) such as 1,3-propanediol, 2-methyl-1,3-propanediol, 1,2-butanediol, 1,3-butanediol, 1,4-butanediol, 1,2-pentanediol, 1,5-pentanediol, 3-methyl-1,5-pentanediol, 1,2-hexanediol, and 1,6-hexanediol;
polyhydric alcohols such as glycerol, diglycerol, butanetriol, and hexanetriol;
alkylene glycol monoalkylethers such as ethylene glycol monoethyl ether, ethylene glycol monopropyl ether, ethylene glycol monobutyl ether, diethylene glycol monomethyl ether, diethylene glycol monoethyl ether, diethylene glycol monopropyl ether, diethylene glycol isopropyl ether, diethylene glycol monobutyl ether, diethylene glycol isobutyl ether, diethylene glycol monopentyl ether, diethylene glycol monohexyl ether, triethylene glycol monomethyl ether, triethylene glycol monoethyl ether, triethylene glycol monopropyl ether, triethylene glycol monobutyl ether, tetraethylene glycol monomethyl ether, tetraethylene glycol monoethyl ether, tetraethylene glycol monopropyl ether, tetraethylene glycol monobutyl ether, propylene glycol monomethyl ether, propylene glycol monoethyl ether, propylene glycol monopropyl ether, dipropylene glycol monomethyl ether, dipropylene glycol monoethyl ether, dipropylene glycol monopropyl ether, dipropylene glycol monobutyl ether, tripropylene glycol monomethyl ether, and tripropylene glycol monoethyl ether; and
alkylene glycol dialkyl ethers such as diethylene glycol dimethyl ether, triethylene glycol dimethyl ether, tetraethylene glycol dimethyl ether, diethylene glycol diethyl ether, triethylene glycol diethyl ether, tetraethylene glycol diethyl ether, diethylene glycol methylethyl ether, triethylene glycol methylethyl ether, tetraethylene glycol methylethyl ether, diethylene glycol butyl methyl ether, triethylene glycol butyl methyl ether, and tetraethylene glycol butyl methyl ether.

When the water-soluble organic solvent other than the water-soluble organic solvent (A-1) is used, one of the above solvents may be used alone or two or more thereof may be used in combination.

In one embodiment of the present invention, as this other water-soluble organic solvent, a solvent having a static surface tension at 25°C of from 22 to 32 mN/m is preferably used. In embodiments of the present invention, the static surface tension of the ink refers to the surface tension measured by the Wilhelmy method in an environment of 25°C. The static surface tension of this other water-soluble organic solvent for use in the ink that represents one embodiment of the present invention is more preferably from 23 to 32 mN/m, and particularly preferably from 24 to 30 mN/m.

In one embodiment of the present invention, when the water-soluble organic solvent other than the water-soluble organic solvent (A-1) is used, it is preferable that at least one compound having a boiling point at one atmosphere of from 120 to 250°C is contained, it is more preferable that a compound having a boiling point of from 150 to 245°C is contained, and it is particularly preferable that a compound having a boiling point of from 180 to 240°C is contained. By ensuring that the boiling point of this other water-soluble organic solvent is 120°C or higher, the drying on the inkjet head can be suppressed and the discharge stability can be improved. By ensuring that the boiling point of this other water-soluble organic solvent is 250°C or lower, remaining of the ink after the drying process after printing can be prevented and the color development and sharpness of the printed matter can be improved. From the viewpoint of compatibility with an azo pigment and a diol-based solvent (A-1), among the compounds having the above boiling point, any of those having a total number of hydroxyl groups and/or ethylene oxide groups present in one molecule of 2 or more is preferably selected.

From the above, in one embodiment of the present invention, from the viewpoint that it is suitably compatible with azo pigments and diol solvents (A-1) and does not inhibit the expression of the effects of the present invention, when the water-soluble organic solvent other than the water-soluble organic solvent (A-1) is used, it is particularly preferable that this other water-soluble organic solvent includes a dihydric alcohol (diol) and/or alkylene glycol monoalkyl ether having a boiling point of from 120 to 250°C at one atmosphere and having a total number of hydroxyl groups and/or ethylene oxide groups present in one molecule of 2 or more.

As described above, in one embodiment of the present invention, other water-soluble organic solvents can be used within a range that does not impair the quality of the present invention, and specifically, the amount thereof is preferably from 5 to 50% by mass, more preferably from 10 to 45% by mass, and even more preferably from 15 to 40% by mass of the total mass of magenta ink for an inkjet. Particularly preferably, the amount is from 20 to 35% by mass, and by ensuring that the amount is within the range, the storage stability of the ink is also improved.

<Boiling Point of Water-soluble Organic Solvents>

It is preferable that the magenta ink for an inkjet contains substantially no water-soluble organic solvent having a boiling point at one atmosphere of 250°C or higher, or, when containing a water-soluble organic solvent having a boiling point at one atmosphere of 250°C or higher, the amount thereof is preferably 9.5% by mass or less relative to the total mass of the magenta ink. By controlling the amount of the organic solvent to be within the above range, a printed matter excellent in printing image quality and drying properties and free from blocking (the phenomenon of ink staining on the back of a printing substrate when printed materials are stacked or rolled up) can be obtained even when printing is performed on a low-absorption substrate. From the viewpoint of more favorably exhibiting the above effect, the amount of the water-soluble organic solvent having a boiling point of less than 250 °C at one atmosphere is more preferably 6.5% by mass or less (the ink may contain substantially no such solvent), more preferably 3.5% by mass or less (the ink may contain substantially no such solvent), particularly preferably 1.5% by mass or less (the ink may contain substantially no such solvent) relative to the total mass of the magenta ink, and it is extremely preferable that the ink contains substantially no such solvent. When calculating the amount of the water-soluble organic solvent having a boiling point of 250°C or higher at one atmosphere, the diol-based solvent (A-1), the diol-based solvent (A-2), and the cyclic amide-based solvent are also taken into consideration. That is, "the amount of water-soluble organic solvents having a boiling point of 250°C or higher at one atmosphere" is the total amount of all the solvents that fall under "a water-soluble organic solvent having a boiling point of 250°C or higher at one atmosphere" contained in the ink.

For the same reason as described above, it is preferable that the magenta ink for an inkjet contains substantially no water-soluble organic solvent having a boiling point of 290°C or higher at one atmosphere. Examples of water-soluble organic solvents having a boiling point of 290°C or higher at one atmosphere include glycerol, diglycerol, butanetriol, and hexanetriol.

The weighted average boiling point of the water-soluble organic solvent contained in the magenta ink for an inkjet at one atmosphere is preferably from 150 to 245°C, more preferably from 170 to 235°C, still more preferably from 180 to 220°C, and particularly preferably from 185 to 210°C. By ensuring that the weighted average boiling point of the water-soluble organic solvent is within the above range, a printed matter excellent in printing image quality and drying properties can be obtained even in the case in which printing is performed on a low-absorption substrate, and excellent discharge stability is also achieved. The diol-based solvent (A-1), the diol-based solvent (A-2), and the cyclic amide-based solvent are also taken into account in the calculation of the weighted average boiling point. That is, the "weighted average boiling point of water-soluble organic solvents at one atmosphere" is a weighted average boiling point of all the solvents that fall under the "water-soluble organic solvent" included in the ink. The weighted average boiling point at one atmosphere is a value obtained by calculating, for each water-soluble organic solvent, a multiplication value of the boiling point at one atmosphere and the mass ratio of that water-soluble organic solvent relative to the total mass of all of the water-soluble organic solvents, and then adding together the calculated multiplication values for the various water-soluble organic solvents.

<HLB Values of Water-soluble Organic Solvents>

As the water-soluble organic solvent contained in the magenta ink for an inkjet, one having an HLB value of from 7 to 11 calculated by a method described below can be favorably used. Further, it is particularly preferable to use the one having an HLB value of from 7.5 to 10. The HLB (Hydrophile-Lipophile Balance) value is one of the parameters representing the hydrophilicity and/or hydrophobicity of material, and the smaller the HLB value, the higher the hydrophobicity of the material, whereas the larger the HLB value, the higher the hydrophilicity of the material. The water-soluble organic solvent having an HLB value of from 7 to 11 is favorably balanced in hydrophilicity and hydrophobicity, and can suppress the dissolution of the azo pigment in the water-soluble organic solvent and the destruction of the dispersion state of the azo pigment, and as a result, the magenta ink excellent in storage stability and discharge stability can be obtained. As shown in the tables of the Examples described below, all compounds used as the diol-based solvents (A-1), which is an essential component in the magenta ink for an inkjet, have an HLB value of from 7 to 11.

<Surfactant>

The magenta ink for an inkjet contains a surfactant. By containing the surfactant, the wet spreading on the substrate can be controlled to prevent occurrence of the voids of the printed matter, and the meniscus in the inkjet head can be suitably controlled to improve the discharge stability.

In particular, in one embodiment of the present invention, since compatibility with a diol-based solvent (A-1) can be ensured, and it can also contribute to protection of an azo pigment together with the diol-based solvent (A-1), the HLB value of the surfactant is preferably from 7 to 20. In particular, from the viewpoint of uniformly orienting a surfactant which does not contribute to the protection of the azo pigment on the interface between the ink and the substrate, improving the wet spreadability on various substrates including a low-absorption substrate, and obtaining a printed matter having an excellent printing image quality, the HLB value of the surfactant is more preferably from 9 to 19, and particularly preferably from 12 to 18.

On the other hand, when the azo pigment and a pigment other than azo pigments are used together as the above two or more pigments, it is preferable to use a surfactant having an HLB value of from 2 to 7, and it is particularly preferable to use a surfactant having an HLB value of from 2.5 to 6, from the viewpoint of preventing occurrence of voids of the printed matter without deteriorating the storage stability of the ink, and obtaining a magenta ink having excellent discharge stability.

There are various methods for calculating the HLB value, including Griffin's method, Davies' method, and the Kawakami method, and various methods for measuring the HLB value are also known, but in embodiments of the present invention, if the structure of the compound is clearly known, such as the water-soluble organic solvents described above, and the acetylene-based surfactant, and the glycol ether-based surfactant described below, the HLB value is calculated using Griffin's method. Griffin's method is a method for obtaining an HLB value in accordance with formula (1), using the molecular structure and the molecular weight of the target material.

Formula (I):

$$\text{HLB value} = 20 \times (\text{sum of molecular weights of hydrophilic portions}) \div (\text{molecular weight of material})$$

On the other hand, in the case where a compound of unknown structure such as a siloxane-based surfactant is contained, for example, the HLB value of the surfactant can be experimentally obtained in accordance with a method disclosed on page 324 in "Surfactant Handbook" (Edited by Ichiro NISHI, Sangyo Tosho Co., Ltd., 1960). Specifically, 0.5 g of the surfactant is dissolved in 5 mL of ethanol, and the resulting solution is titrated with a 2% by mass aqueous solution of phenol with stirring at 25°C until the end point at which the solution becomes turbid. The HLB value can be calculated by the following formula (II), where A (mL) is the amount of the phenol aqueous solution required to reach the end point.

Formula (II):

$$\text{HLB value} = 0.89 \times A + 1.11$$

Various surfactants such as acetylene-based, siloxane-based, fluorine-based, and glycol ether-based surfactants are known depending on the application, but in embodiments of the present invention, any one or a plurality of surfactants can be used.

Among them, from the viewpoint of interaction with a diol-based solvent (A-1), it is preferable that at least one selected from among an acetylene-based surfactant, a siloxane-based surfactant and a glycol ether-based surfactant is used, and it is more preferable that at least an acetylene-based surfactant is used. In a preferred embodiment, a combination of an acetylene-based surfactant with a siloxane-based surfactant and/or a glycol ether-based surfactant is also preferred. When both are used together, the dynamic surface tension and the static surface tension of the ink can be favorably adjusted, and a combination of favorable image quality of the printed matter, favorable drying properties and favorable discharge stability can be achieved.

In one embodiment of the present invention, it is preferable that the surfactant has an ethylene oxide group and/or a propylene oxide group from the viewpoint of miscibility with the diol-based solvent (A-1). For example, in the case of a siloxane-based surfactant, a polyether-modified polydimethylsiloxane is preferably used, and among the polyether-modified polydimethylsiloxanes, one having a polyether group at a side chain and/or both ends of the polydimethylsiloxane chain is extremely preferably used. Further, it is most preferable that a siloxane-based surfactant having a polyether group in a side chain of the polydimethylsiloxane chain from the viewpoint that the speed of the orientation to the interface between the ink and the substrate is high and especially excellent printing image quality can be obtained.

In the case of the acetylene-based surfactant, for example, an ethylene oxide adduct and/or a propylene oxide adduct of a compound selected from among 2,4,7,9-tetramethyl-5-decine-4,7-diol, 2,5,8,11-tetramethyl-6-dodecine-5,8-diol, hexadeca-8-yne-7,10-diol, 6,9-dimethyl-tetradeca-7-yne-6,9-diol, and 7,10-dimethylhexadeca-8-yne-7,10-diol are preferable. The surfactant may have both an ethylene oxide group and a propylene oxide group in one molecule. In this case, the addition order of the ethylene oxide group and the propylene oxide group is not limited, and the addition form may be block or random.

Further, in the case of the glycol ether-based surfactant, a compound represented by formula (2) can be preferably used.

Formula (2): RO-(AO)m-H

In formula (2), R represents an alkyl group having 8 to 22 carbon atoms which may be branched, an alkenyl group having 8 to 22 carbon atoms which may be branched, an alkylcarbonyl group having 8 to 22 carbon atoms which may be branched, or an alkenylcarbonyl group having 8 to 22 carbon atoms which may be branched. AO represents an ethylene oxide group or a propylene oxide group, and m represents an integer of from 1 to 100. However, the compound may have both an ethylene oxide group and a propylene oxide group in one molecule, and in this case, the addition order of the ethylene oxide group and the propylene oxide group is not limited, and the addition form may be block or random.

The content of the surfactant in the magenta ink for an inkjet is preferably from 0.1 to 5.0% by mass, more preferably from 0.3 to 4.5% by mass, still more preferably from 0.5 to 4.0 % by mass, and particularly preferably from 0.7 to 3.5% by mass, relative to the total mass of the ink.

<Pigment Dispersing Resin>

It is preferable to disperse the azo pigment in the ink in order to maintain the storage stability of the ink for a long period of time and to secure the discharge stability after standby. Examples of the method of dispersing the pigment include a method of dispersing the pigment without a dispersant by surface modification of the pigment using an oxidation treatment or the like, and a method of dispersing the pigment using a surfactant and/or a resin as a dispersant. In order to obtain an ink having better storage stability and discharge stability, it is preferable to disperse a pigment using a pigment dispersing resin.

The term "pigment dispersing resin" is a general term for both (1) a water-soluble pigment-dispersing resin to be used by being adsorbed on the pigment surface, and (2) a pigment-dispersing resin (which may be either water-soluble or water-insoluble) to be used for coating the pigment. The term "water-soluble resin" refers to a resin, a 1% by mass aqueous solution of which is transparent to the naked eye at 25°C.

Examples of the pigment dispersing resin include a (meth)acrylic resin, a maleic acid resin, an $\alpha$-olefin maleic acid resin, a urethane resin, and an ester resin. Among them, it is preferable to use a (meth)acrylic resin from the viewpoint that the constitution thereof can be easily changed and/or adjusted so as to assist the interaction between the azo pigment and the diol-based solvent (A-1). Further, in view of improving the dispersion stability of the pigment by strengthening the adsorption of the pigment and stabilizing the pigment dispersion, and securing the discharge stability and excellent color development on the low-absorption substrate also by the use of the pigment dispersing resin, it is preferable to include a (meth)acrylic resin of which the copolymerization components contain a monomer containing an aromatic ring, among acrylic resins. In the present specification, the term "(meth)acrylic resin" means a resin that contains a constituent component including at least one monomer selected from among methacrylic-based monomers (for example, methacrylic acid, methyl methacrylate, butyl methacrylate, ethylhexyl methacrylate, lauryl methacrylate, stearyl methacrylate, benzyl methacrylate, phenoxyethyl methacrylate, and the like) and acrylic-based monomers (for example, acrylic acid, methyl acrylate, butyl acrylate, ethylhexyl acrylate, lauryl acrylate, stearyl acrylate, benzyl acrylate, phenoxyethyl acrylate, and the like). The (meth)acrylic resin which may be used in embodiments of the present invention may further contain a styrene-based monomer (for example, styrene, methylstyrene, methoxystyrene, and the like) as the constituent component.

Examples of the aromatic ring structure include a phenyl group, a naphthyl group, an anthryl group, a tolyl group, a xylyl group, a mesityl group, and an anisyl group. Among them, a phenyl group or a tolyl group is preferable from the viewpoint of dispersion stability of the pigment.

The weight average molecular weight of the pigment dispersing resin which can be used in embodiments of the present invention is preferably from 5,000 to 100,000. When the weight-average molecular weight is 5,000 or more, dispersion stabilization can be sufficiently realized, and a decrease in color development and a discharge failure after a long standby period can be prevented without causing aggregation of the azo pigment during drying. Further, if the weight-average molecular weight is 100,000 or less, the excessive increase in the ink viscosity can be prevented even after the volatilization of water. In particular, when the inkjet printer is allowed to stand by for a long period of time, water evaporates in the vicinity of the inkjet nozzle, and the ink viscosity increases when the ink is concentrated, which leads to a problem such as non-discharge, so that the ink discharge stability can be improved by ensuring that the weight average molecular weight is within the above range. The weight average molecular weight of the pigment dispersing resin is more preferably from 10,000 to 80,000, and particularly preferably from 15,000 to 50,000, in order to ensure discharge stability and to obtain excellent print quality.

The weight average molecular weight of the pigment dispersing resin in the present invention can be measured using a typical method. For example, the weight average molecular weight can be measured as a polystyrene-equivalent weight average molecular weight, using a TSKgel column (manufactured by Tosoh Corporation) and a GPC (HLC-8120 GPC, manufactured by Tosoh Corporation) fitted with an RI detector, and using THF (tetrahydrofuran) as the eluent.

Further, the copolymerization components of the pigment dispersing resin in embodiment of the present invention preferably contain a monomer containing an alkyl chain having 8 to 30 carbon atoms. From the viewpoint of improving the dispersion stability, securing the discharge stability from the inkjet head, and exhibiting color development properties and gloss also by the use of the pigment dispersing resin by securing the dispersion stability of the pigment in the drying process on the low-absorption substrate, it is more preferable to contain an alkyl chain having 10 to 28 carbon atoms, and it is particularly preferable to contain an alkyl chain having 12 to 24 carbon atoms.

The alkyl chain having 8 or more carbon atoms may be a linear chain or a branched chain, but preferably a linear chain. Examples of alkyl chains include an octyl group (C8), an ethylhexyl group (C8), a decyl group (C10), a lauryl group (C12), a myristyl group (C14), a cetyl group (C6), a stearyl group (C18), an aralkyl group (C20), a behenyl group (C22), a lignoceryl group (C24), a cerotoyl group (C26), a montanyl group (C28), and a melissyl group (C30).

The amount of the monomer containing an alkyl chain having 8 to 30 carbon atoms contained in the pigment dispersing resin as a constituent component is preferably from 5 to 60% by mass, more preferably from 15 to 55% by mass, and particularly preferably from 25 to 50% by mass, from the viewpoint of achieving a combination of lowering the viscosity of the pigment dispersion liquid, and favorable rub resistance, drying properties, blocking resistance, color development, and gloss of the printed matter.

The pigment dispersing resin preferably contains an alkylene oxide group in addition to the aromatic ring structure. By introducing an alkylene oxide group, the hydrophilicity and hydrophobicity of the pigment dispersing resin can be arbitrarily adjusted to improve the storage stability of the water-based ink. In addition, since the alkylene oxide group causes hydrogen bonding with the diol-based solvent (A) contained in the ink, the effect of protecting the azo pigment by the diol-based solvent (A) is favorably exhibited, which leads to the improvement of the above characteristics. When a water-soluble pigment dispersing resin is used as the pigment dispersing resin, an ethylene oxide group is preferably selected as the alkylene oxide group in order to suitably exhibit the above-descried function. Similarly, when a water-insoluble pigment dispersing resin is used as the pigment dispersing resin, a propylene oxide group is preferably selected as the alkylene oxide group.

The amount of the monomer having an alkylene oxide group contained in the pigment dispersing resin as a constituent component is preferably from 5 to 40% by mass, more preferably from 10 to 35% by mass, and particularly preferably from 15 to 30% by mass from the viewpoint of achieving a combination of lowering the viscosity of the pigment dispersion liquid, favorable storage stability of the ink, and favorable adhesiveness of the printed matter.

When a water-soluble pigment dispersing resin is used as the pigment dispersing resin, the acid value of the pigment dispersing resin preferably used in one embodiment of the present invention is from 30 to 400 mgKOH/g. By ensuring that the acid value is within the above range, the solubility of the pigment dispersing resin in the ink can be secured and the ink viscosity can be controlled to be within a favorable range. The acid value of the pigment dispersing resin is more preferably from 70 to 350 mgKOH/g, and further preferably from 100 to 300 mgKOH/g.

On the other hand, when a water-insoluble pigment dispersing resin is used as the pigment dispersing resin, the acid value thereof is preferably from 0 to 100 mg KOH/g, more preferably from 5 to 90 mg KOH/g, and still more preferably from 10 to 80 mg KOH/g. This is because a printed matter excellent in blocking resistance and rubbing resistance can be obtained by keeping the acid value within the above range.

The acid value of the pigment dispersing resin is the number of mg of potassium hydroxide (KOH) required to neutralize the acid contained in 1 g of the pigment dispersing resin, which is obtained by titration with a KOH solution in an ethanol/toluene mixed solvent. The measurement can be performed, for example, by using "automatic potentiometric titrator AT-610" manufactured by Kyoto Electronics Manufacturing Co., Ltd.

When a water-soluble pigment dispersing resin is used as the pigment dispersing resin, it is preferable that the acid groups in the resin are neutralized with a base in order to increase the solubility in water. Examples of the base, which may be used, include organic bases such as aqueous ammonia, dimethylaminoethanol, diethanolamine and triethanolamine, and inorganic bases such as lithium hydroxide, sodium hydroxide and potassium hydroxide. When an organic base is used, the base is volatilized when the ink is dried, and the water resistance of the printed matter may be improved, which is preferable.

The ratio of the pigment dispersing resin to the pigment in one embodiment of the present invention is preferably from 2 to 60 % by mass. When the ratio of the pigment dispersing resin to the pigment is 60% by mass or less, the viscosity of the ink can be suppressed to be low, and the discharge stability can be improved. When the ratio of the pigment dispersing resin to the pigment is 2% by mass or more, the storage stability is improved. The ratio of the pigment dispersing resin to the pigment is more preferably from 4 to 55% by mass, and more preferably from 5 to 50% by mass, from the viewpoint of ensuring excellent storage stability and discharge stability and obtaining a printed matter having further high color development.

<Binder Resin>

In the magenta ink for an inkjet, in order to achieve excellent drying properties and excellent resistance of the ink even on a low-absorption substrate, a binder resin can be used. In embodiments of the present invention, the "binder resin" is used to adhere the printed matter to the low-absorption substrate and to impart rubbing resistance and water resistance to the printed matter. The binder resin may also have a function of stabilizing the dispersion state of the azo pigment in the ink. However, in one embodiment of the present invention, it is preferable that the pigment dispersing resin and the binder resin have clearly different functions. Therefore, in one embodiment of the present invention, it is preferable that two or more resins having different configurations are contained in the ink. Note that the surfactant described above is not considered to be the "resin".

In those cases where the target resin is a water-soluble resin, it is possible to determine which of the functions of the pigment dispersing resin or the functions of the binder resin the water-soluble resin has, according to the ratio of adsorption ratio to the pigment. In other words, in a pigment dispersion liquid containing a pigment, a resin, and an aqueous medium (a liquid containing at least water), in which the pigment concentration is 5% by mass and the amount of water is 98% by mass or more of the total mass of the aqueous medium, a resin having a ratio of adsorption to the pigment of 35% by mass or more is a pigment dispersing resin, and a resin having a ratio of adsorption to the pigment of less than 35% by mass is a binder resin. The amount of the water is preferably 100% by mass of the total mass of the aqueous medium.

For example, in those cases where the magenta ink contains, as the pigment, C. I. Pigment Red 150 and C. I. Pigment Red 48:3 in a mass ratio of 1:1, the pigment dispersion liquid to be used for the measurement of the adsorption ratio can be prepared by preparing a high-concentration pigment dispersion liquid having a pigment concentration (total amount) of 20% by mass, in the same manner as in the production example of magenta pigment dispersion liquid 1 described in the Examples described below, and then diluting the high-concentration pigment dispersion liquid with water until the pigment concentration reaches 5% by mass. The ratio of adsorption can be obtained, for example, by, after performing an ultracentrifugal separation process (for example, at 30,000 rpm for 4 hours) on the pigment dispersion liquid, measuring the amount of resin contained in the supernatant liquid, and calculating using the following formula (3).

Formula (3):

$$\text{Adsorption ratio (\%)} = (WR1 - WR2) \times 100 / WR1$$

In formula (3), WR1 represents the amount of resin contained in the pigment dispersion liquid before the ultracentrifugation treatment, and WR2 represents the amount of resin contained in the supernatant liquid.

In the measurement of the adsorption ratio, the same pigment as the pigment actually contained in the magenta ink is used as the pigment.

As the binder resin in the ink, a water-soluble resin and resin fine particles are known, and both can be suitably used in embodiments of the present invention. In general, the resin fine particles have a higher molecular weight than that of the water-soluble resin, and, therefore, may realize impart of high resistance. On the other hand, the water-soluble resin can be easily re-dissolved even after the film is formed once, and the deterioration of the discharge stability can be prevented. In embodiments of the present invention, the water-soluble resin and the resin fine particles are distinguished by whether or not they have a specific particle size in water. Specifically, using a particle size distribution analyzer (for example, Microtrac UPA EX-150, manufactured by Microtrac BEL Corporation), those having a cumulative 50% diameter value (median diameter, hereinafter also referred to as "D50") on a volume basis measured by a dynamic light scattering method of 30 nm or more are defined as "resin particles", and those having a diameter of less than 30 nm or being unable to measure D50 are defined as "water-soluble resin". It should be noted that D50 is a measured value in an environment of 25°C, and when measuring with the above apparatus, if necessary, the sample is diluted with water so that the sample is adjusted to have a measurable concentration.

Examples of the binder resins used in embodiments of the present invention include, but are not limited to, (meth)acrylic resins, urethane resins, styrene-butadiene resins, vinyl chloride resins, polyolefin resins, and the like. From the viewpoint of ensuring the discharge stability from the inkjet nozzle, it is preferable to use a (meth)acrylic resin.

The weight average molecular weight of the binder resin used in embodiments of the present invention is preferably from 3,000 to 300,000, more preferably from 5,000 to 200,000, and particularly preferably from 10,000 to 100,000, from the viewpoint of ensuring discharge stability from the inkjet nozzle and obtaining excellent resistance even on a low-absorption substrate. When the weight-average molecular weight is within the above range, thickening and non-discharge of the ink can be prevented even when moisture in the ink is volatilized at the end face of the inkjet nozzle. The weight average molecular weight of the binder resin in the present invention can be measured in the same manner as that described for the pigment dispersing resin.

In one embodiment of the present invention, resistance such as rub resistance and chemical resistance can be further improved by increasing the glass transition temperature (Tg) of the binder resin. The glass transition temperature (Tg) of the binder resin is preferably in the range of from 40 to 120°C, more preferably in the range of from 50 to 110°C. The glass transition temperature (Tg) of 40°C or higher facilitates obtaining of further favorable resistance, and is preferable for practical use from the viewpoint of suppressing peeling of printing from the printed matter. The glass transition temperature (Tg) of 120°C or less facilitates maintaining of the hardness of the printed matter within a proper range, and is preferable from the viewpoint of suppressing the generation of cracking and splitting on the printed surface when the printed matter is bent.

As a result of the investigation by the present inventors, it has been found that a magenta ink excellent in storage stability, discharge stability, color development and sharpness of printed matter can be obtained using an azo lake pigment as the azo pigment and using it together with a binder resin having a glass transition temperature (Tg) of from 40 to 120°C. It is thought as follows, although the following is a hypothesis. In general, a resin having a high glass transition temperature (Tg) has, in the resin molecular structure, a substituent having a high polarity, an aromatic ring structure, and/or a functional group forming a hydrogen bond. On the other hand, the azo lake pigment is a combination of a water-soluble azo colorant and a polyvalent metal ion, and the polarity of the pigment molecule is thought to be larger than that of other pigments. As a result, it is thought that the azo lake pigment forms a bond with the resin having the glass transition temperature (Tg) based on, for example, the intermolecular force, and suppresses deterioration of storage stability, discharge stability, and color development and sharpness of the printed matter.

The glass transition temperature is a value obtained by using DSC (differential scanning calorimeter), and can be measured, for example, as follows. Approximately 2 mg of a sample that is a dried binder resin is weighed on an aluminum pan, a test vessel containing the sample is set in a DSC measuring holder, and the endothermic peak of a chart obtained under a temperature increasing condition of 5°C/min is read. The peak temperature at this time is referred to as the glass transition temperature in the present specification.

The acid value of the binder resin used in one embodiment of the present invention is preferably from 1 to 100 mgKOH/g, more preferably from 5 to 80 mgKOH/g, and particularly preferably from 10 to 60 mgKOH/g from the viewpoint of improving resistance such as rub resistance, water resistance, and chemical resistance. The acid value of the binder resin in embodiments of the present invention can be measured in the same manner as that described above for the pigment dispersing resin.

The amount of the binder resin, as the amount of non-volatile fraction, in the ink composition is preferably in the range of from 1 to 20% by mass, and more preferably from 3 to 15% by mass, of the total mass of the ink.

<Water>

The water contained in the magenta ink for an inkjet is preferably not a typical water containing various ions, and the use of an ion-exchanged water (deionized water) is preferred.

The amount of water that can be used in embodiments of the present invention is in the range of from 20 to 90% by mass of the total mass of the ink.

<Other Components>

In order to obtain an ink having certain desired physical property values, additives such as antifoaming agents and preservatives may be added besides the components as described above, as required. As an example of the addition amount of such additives, 0.01 to 10% by mass relative to the total mass of the ink is preferable.

<Dynamic Surface Tension of Ink>

In the magenta ink for an inkjet, the dynamic surface tension of the ink at 10 milliseconds calculated by the maximum bubble pressure method is preferably from 25 to 45 mN/m, and more preferably from 25 to 35 mN/m, in order to achieve excellent print image quality without voids and density unevenness by quickly wet spreading at the moment of impact on a low-absorption substrate. Specifically, the bubble pressure dynamic surface tension meter BP 100 (manufactured by Kruss) using the maximum bubble pressure method is used to measure the dynamic surface tension at 25°C, and the dynamic surface tension can be calculated from the dynamic surface tension at a life time of 10 milliseconds.

<Ink Particle Size Distribution>

In the magenta ink for an inkjet, it is preferable to control the particle size distribution of the pigment contained in the ink by, for example, selecting suitable materials and controlling a dispersion process described below from the viewpoint of obtaining an ink excellent in color development, sharpness and color reproducibility of the printed matter in addition to storage stability and discharge stability. Specifically, D50 measured using the particle size distribution measuring instrument used for measuring the particle size distribution of the binder resin (Microtrac UPAEX-150, manufactured by Microtrac Bell Corporation) is preferably from 30 to 300 nm, more preferably from 50 to 260 nm, and particularly preferably from 70 to 220 nm. The cumulative 90% diameter value on a volume basis is preferably 800 nm or less, more preferably 650 nm or less, and particularly preferably 500 nm or less. As described above, the ink used in one embodiment of the present invention contains two or more pigments, but the particle size distribution is measured in a state in which the two or more pigments are contained.

<Ink Set>

The inkjet ink set of the present invention comprises at least a cyan ink, a yellow ink, and the magenta ink described above. In addition, black ink can be added to improve the blackness and the visibility of characters. Furthermore, color reproducibility can be improved by adding colors such as orange and green. When printing is performed on a printing substrate other than white, a clear image can be obtained using white ink together.

A combination including cyan, yellow, and magenta is used as the inkjet ink set of the present invention. A suitable pigment species is selected from the viewpoint of excellent color reproducibility when printing on a low-absorption substrate. As a cyan pigment, a pigment selected from among C. I. Pigment Blue 15:3, C. I. Pigment Blue 15: 4 and C. I. Pigment Blue 15: 6 is preferred. As the yellow pigment, a pigment selected from among C. I. Pigment Yellow 12, C. I. Pigment Yellow 13, C. I. Pigment Yellow 14, C. I. Pigment Yellow 74, C. I. Pigment Yellow 83, C. I. Pigment Yellow 120, C. I. Pigment Yellow 150 and C. I. Pigment Yellow 180 is preferably used, and from the viewpoint of suppressing mixed color bleeding and obtaining high color reproducibility, the yellow pigment is more preferably a pigment selected from among C. I. Pigment Yellow 14, C. I. Pigment Yellow 74 and C. I. Pigment Yellow 180.

In embodiments of the present invention, it is preferable that the cyan ink and the yellow ink contained in the inkjet ink set contain a diol-based solvent (A-1). In particular, when thermal energy is collectively applied after printing all the inks included in the ink set, the inks come into contact with each other on the printing substrate. In this case, if the cyan ink and the yellow ink contain a diol-based solvent (A-1), the dissolution the azo pigment and the destruction of dispersed states of the azo pigment can be suppressed in the magenta ink that is in contact with the cyan ink and the yellow ink, so that the printed matter excellent in color development and sharpness can be obtained.

In addition, from the viewpoint of obtaining a printed matter particularly excellent in color development, sharpness and color reproducibility, it is preferable that the molar amount of the diol-based solvent (A-1) contained in each of the cyan ink, the yellow ink, and the magenta ink contained in the inkjet ink set is from 5 to 250 times the molar amount of the azo pigment contained in the magenta ink. In particular, from the viewpoint of obtaining a printed matter excellent in color development and sharpness regardless of conditions such as a printing substrate and printing speed, it is particularly preferable that the molar amount of the diol-based solvent (A-1) contained in each of the cyan ink, the yellow ink, and the magenta ink contained in the inkjet ink set is from 10 to 200 times the molar amount of the azo pigment contained in the magenta ink.

Furthermore, from the viewpoint of obtaining a printed matter excellent in color development, sharpness, and color reproducibility regardless of the method of applying thermal energy described below, in an ink obtained by mixing equal amounts of the inks (including at least a magenta ink) which come into contact with each other in a wet state on the substrate during printing, among the inks (including at least a magenta ink) included in the inkjet ink set, the molar amount of the diol-based solvent (A-1) contained relative to the molar amount of the azo pigment contained is from 5 to 250 times, and is preferably from 10 to 200 times.

When the ink set includes a black ink, the black is excluded from the calculation of the molar amounts and the number of the times of the amount. For example, it is preferable that the number of times of the amount calculated using an ink obtained by mixing a cyan ink, a yellow ink, and a magenta ink, which are three primary colors, selected from among the inks included in the ink, in equal amounts, is included in the above range. Further, for example, since all the inks included in the ink set may come into contact with each other in a wet state on the substrate during printing, it is preferable that the number of times of the amount calculated using an ink obtained by mixing all the inks included in the ink set except for the black ink, in equal amounts, is included in the above range. More preferably, both the number of times of the amount calculated using an ink obtained by mixing a cyan ink, a yellow ink, and a magenta ink, which are three primary colors, in equal amounts, and the number of times of the amount calculated by using an ink obtained by mixing all the inks included in the ink set except for the black ink, in equal amounts, are included in the above range.

The cyan ink and the yellow ink preferably contain at least one surfactant having an HLB value of from 8 to 20, and are preferably combined with the magenta ink of the present invention from the viewpoint of exhibiting excellent wet spreadability on low-absorption substrates and suppressing mixed color bleeding between droplets.

Furthermore, in order to improve wet spreadability at the time of impact on a low-absorption substrate and to achieve excellent printing image quality and color reproducibility, the dynamic surface tension at 10 milliseconds calculated by the maximum bubble pressure method is preferably from 25 to 45 mN/m, and more preferably from 25 to 35 mN/m, for each ink.

<Ink Preparation Method>

Examples of the method for preparing an ink containing the types of component as described above include the following methods.

<(1) Production of Pigment Dispersion>

When a water-soluble pigment dispersing resin is used as the pigment dispersing resin, the water-soluble pigment dispersing resin, and water, and as necessary, a water-soluble organic solvent such as a diol-based solvent (A-1) are mixed and stirred to prepare a water-soluble pigment dispersing resin mixture liquid. Pigments are added to the water-soluble pigment dispersing resin mixture liquid, and mixing and stirring (premixing) are performed, and then the resulting mixture is subjected to a dispersion treatment using a dispersion device. Thereafter, centrifugation, filtration, and adjustment of the solid fraction concentration are carried out as necessary to obtain a pigment dispersion.

When a dispersion liquid containing a pigment coated with a water-insoluble pigment dispersing resin is produced, a water-insoluble pigment dispersing resin solution is prepared in advance in which the water-insoluble pigment dispersing resin is dissolved in an organic solvent such as methyl ethyl ketone, and if necessary, the water-insoluble pigment dispersing resin is neutralized. The pigment and water are added to the water-insoluble pigment dispersing resin solution, and mixing and stirring (premixing) are performed, and then the resulting mixture is subjected to a dispersion treatment using a dispersion device. The organic solvent is then distilled off by vacuum distillation, and if necessary, centrifugation, filtration, and adjustment of the solid fraction concentration using water and/or a diol-based solvent (A-1) or the like are performed, whereby a pigment dispersion liquid is obtained.

The dispersion device used in the pigment dispersion treatment may be any commonly used dispersion device, and examples thereof include a ball mill, a roll mill, a sand mill, a bead mill, and a nanomizer. Among the dispersion deices, a bead mill is preferably used. Specifically, the bead mills are commercially available under trade names such as Super Mill, Sand Grinder, Agitator Mill, Grain Mill, Dyno Mills, Pearl Mill, and Cobol Mill.

For any type of the pigment dispersing resin, it is effective to perform premixing prior to the dispersion treatment performed in the preparation of the pigment dispersion. The premixing may be performed by adding a pigment to an aqueous medium in which at least a pigment dispersing resin and water are mixed.

The dispersion devices used in the pigment dispersion treatment may be any commonly used dispersion device, and examples thereof include a ball mill, a roll mill, a sand mill, a bead mill, a microfluidizer, and a nanomizer. Among the dispersion devices, a bead mill is preferably used. Specifically, the bead mills are commercially available under the trade names of Super Mill, Sand Grinder, Agitator Mill, Grain Mill, Dyno Mill, Pearl Mill, and Cobol Mill.

In the pigment premixing and the pigment dispersion treatment, the pigment dispersant may be dissolved or dispersed only in water, or dissolved or dispersed in a mixed solvent of an organic solvent and water.

The pigment contained in the ink preferably has the optimum particle size distribution as described above. In order to obtain a pigment having a desired particle size distribution, the following methods may be used: reducing the size of the grinding media in the aforementioned dispersion device; altering the material used for the grinding media; increasing filling ratio of the grinding media; altering the shape of the stirring member (agitator); lengthening the dispersion treatment time; performing classification with a filter or a centrifugal separator or the like after the dispersion treatment; or a combination of these methods. In an embodiment of the present invention, in order to ensure that the pigment size falls within the preferred particle size range as described above, the diameter of the grinding media in the dispersion device is preferably from 0.1 to 3 mm. Examples of materials that can be used favorably as the grinding media include glass, zircon, zirconia, or titania.

In the production of the ink, the pigment dispersion liquid may be produced for each pigment and then mixed, for the preparation of the ink, or a pigment dispersion containing two or more pigments may be produced for the preparation of the ink. However, when a water-soluble pigment-dispersing resin is used as the pigment-dispersing resin, a method of producing a pigment dispersion liquid containing two or more pigments is preferably selected from the viewpoint that an ink excellent in storage stability and color development can be obtained, although the details are unknown. On the other hand, when a water-insoluble pigment dispersing resin is used as the pigment dispersing resin, a method of producing a pigment dispersion liquid for each pigment is preferably selected from the viewpoint that satisfactory color development and sharpness can be exhibited.

When the pigment dispersion liquid is produced for each pigment, a different pigment dispersing resin may be selected for each pigment dispersion liquid, or the same pigment dispersing resin may be used, but it is preferable to use the same pigment dispersing resin from the viewpoint of storage stability of the ink.

<(2) Preparation of Ink>

Then, a water-soluble organic solvent such as a diol-based solvent (A-1), water, and optionally a binder resin, a surfactant, and/or other additives as described above are added to the pigment dispersion liquid, and the resulting mixture is stirred and mixed. If necessary, the mixture may be stirred and mixed while being heated in the range of from 40 to 100°C.

<(3) Removal of Coarse Particles>

Coarse particles contained in the mixture are removed by a method such as filtration separation or centrifugal separation to obtain an inkjet magenta ink. As the method of filtration separation, any known method may be used as appropriate. The filter opening diameter is not particularly limited as long as the filter can remove the coarse particles and dust, but is preferably from 0.3 to 5 μm, and more preferably from 0.5 to 3 μm. When filtering is performed, a single type of filter may be used or a plurality types of filters may be used in combination.

<Low-absorption Substrate>

The ink can be suitably used not only for high-absorption substrates such as plain paper or dedicated paper, but also for low-absorption substrates. The term "low-absorption substrate" in the present invention means a substrate that either absorbs no water or has a slow absorption rate, and which is a substrate which has a water absorption coefficient, measured by Bristow's method (J. TAPPI Paper Pulp Test Method No. 51-87) described below, of from 0 to 0.6 $ml/m^2msec^{1/2}$. Specific examples of low-absorption substrates include, but are not limited to, paper substrates such as coated papers, art papers, finely coated papers, and cast coated papers, and plastic substrates such as polyvinyl chloride sheets, PET films, and PP films.

The substrate used in embodiments of the present invention may have a smooth surface, an uneven surface, and may be transparent, translucent, or an opaque surface. Two or more kinds of these printing substrates may be bonded to each other. Further, a release adhesive layer or the like may be provided on the opposite side of the printing surface, or an adhesive layer may be provided on the printing surface after printing.

The absorption coefficient as described above can be measured, for example, using an Auto Scan absorption meter manufactured by Kumagai Riki Kogyo Co., Ltd. Specifically, using the above apparatus and water, a relationship plot is generated between the amount of water absorption ($ml/m^2$) in a contact time of 100 to 1,000 milliseconds and the square root of the contact time ($msec^{1/2}$), and using this relationship plot, the gradient of a straight line obtained by the least squares method is deemed to represent the absorption coefficient.

<Method for Producing Printed Matter>

As a method for producing printed matter using the ink set of the present invention, a method is used which includes discharging the ink from an inkjet head to adhere the ink droplets onto a printing substrate. As described above, a low-absorption substrate can be favorably used as the printing substrate.

Further, it is preferable to apply thermal energy to the printing substrate for drying after the ink droplets are adhered onto the printing substrate. The method of applying the thermal energy is not particularly limited, and examples include a heat drying method, a hot air drying method, an infrared drying method, a microwave drying method, and a drum drying method. Any one of these drying methods may be used alone or two or more thereof may be used in combination. For example, using the heat drying method and the hot air drying method together, the ink can be dried more quickly than when either one of them is used alone.

Thermal energy may be applied each time after printing each ink included in the ink set, or the thermal energy may be applied collectively after printing all the inks.

<Inkjet Head>

Generally, the higher the design resolution of the inkjet head is, the smaller the nozzle diameter becomes. Since, in relation to this, the amount of an ink droplet discharged from the nozzle is reduced, the fine details of the printed matter is improved and the image quality is improved. In particular, by using an inkjet head having a design resolution of 600 dpi or higher, a printed matter excellent in image quality can be produced. On the other hand, in order to set the design resolution of the inkjet head to 600 dpi or more, it is preferable to set the distance between adjacent nozzles to be about 42 μm or less, and to reduce the nozzle diameter in accordance therewith. However, the smaller the nozzle diameter, the more susceptible the drying of the ink and the deposition of components such as pigments, and the discharge failure may easily occur. Further, since the amount of ink droplet applied onto the substrate is reduced, it is preferable to use an ink exhibiting excellent color development, sharpness, and color reproducibility even in a small amount.

On the other hand, the magenta ink can be favorably used for an inkjet head having a high design resolution, that is, having a small nozzle diameter, because a high-quality image having a high color development and a high sharpness can be obtained even if the magenta ink is used with a low-absorption substrate, the magenta ink has excellent discharge stability and drying properties, and, when the magenta ink is used in an ink set, high color reproducibility can be realized.

The nozzle diameter of the inkjet head used in the method for producing the printed matter using the ink set containing the magenta ink of one embodiment of the present invention is preferably from 10 to 30 μm, more preferably from 12 to 25 μm, and particularly preferably from 15 to 20 μm. By using an inkjet head having a smaller nozzle diameter, the discharge amount of an ink droplet can be reduced, and high-quality printed matter can be produced. The design resolution of the inkjet head is preferably from 600 to 1,600 dpi, and more preferably from 1,200 to 1,600 dpi.

<Spectral Reflectance of Ink Coating>

The magenta ink preferably has a spectral reflectance of a coating having a wet film thickness of 6 μm produced on a printing substrate of not more than 10% in a wavelength region of from 480 to 580 nm. As described above, it is thought that, in the magenta ink, the balance of the azo pigment, the diol-based solvent (A-1), and other materials is an important factor, and the present inventors have found that the range of formulations capable of obtaining a favorable balance differs depending on the type of azo pigment. Although the detailed factors are unknown, it is thought that the balance of the amounts contained is lost due to the aggregation of a part of the azo pigment in the ink, and that the favorable color development and color reproducibility inherent in the azo pigment cannot be sufficiently developed due to the aggregation. In addition, it is thought that when printing is performed on a low-absorption substrate, deterioration in quality such as color development and color reproducibility may easily occur.

If the degree of aggregation is high, the presence or absence of aggregation can be determined, for example, by measuring the particle size distribution of the ink, but if the degree of aggregation is such that a part of the pigment is slightly aggregated, there is a possibility that the presence or absence of aggregation cannot be determined by measuring the particle size distribution of the ink. Accordingly, as a result of the intensive investigation by the present inventors, it was found that even a small amount of aggregation can be judged significantly by measuring the spectral reflectance in the wavelength region of from 480 to 580 nm. This is because the component volatilized from the ink by drying hardly affects the reflectance in this wavelength region, and, therefore, the value of the coating obtained by wet coating and the value of the coating after drying hardly differ. By suppressing the spectral reflectance of a coating having a wet film thickness of 6 μm prepared on a printing substrate in the wavelength region of from 480 to 580 nm to 10% or less, the width of a formulation capable of maintaining a balance with a diol-based solvent (A-1) may be widened, and a magenta ink capable of exhibiting good color development and color reproducibility originally possessed by an azo pigment can be obtained. That is, the range of selection of the kind and amount of the components contained in the ink can be widened.

Specific examples of the method of measuring the spectral reflectance in embodiments of the present invention include a method which includes coating a printing substrate with a magenta ink using K Control Coater K 202 manufactured by Matsuo Sangyo Co., Ltd., and Wire bar No. 1, followed by drying in an air oven at 60°C for 3 minutes to obtain a coating, and measuring the spectral reflectance of the coating using i1Pro2 manufacture by X-rite. In the measurement of the spectral reflectance, it is particularly preferable that the measurement is performed for the wavelength region of from 480 to 580 nm at intervals of 10 nm, and the spectral reflectance in all the regions is 10% or less.

As the coating, for example, a solid image printed on a printing substrate using an inkjet printer in which the ink discharge amount is adjusted so that the wet film thickness is 6 ± 0.3 μm, may be used. As the printing substrate, for example, OK topcoat + (basis weight of 104.7 $g/m^2$) manufactured by Oji Paper can be used.

For the same pigment, examples of the methods for keeping the spectral reflectance in the wavelength region of from 480 to 580 nm within the above range include adjusting the type and blending ratio of the pigments to be used together, adjusting the dispersion time and the grinding media of the disperser in the above dispersion step, using the above pigment dispersing resin as well as adjusting the type and amount thereof, and using a dispersant such as a pigment derivative together.

Examples

The present invention is described below in further detail using a series of examples and comparative examples. In the following descriptions, unless particularly stated otherwise, "parts" and "%" respectively represent "parts by mass" and "% by mass".

In the examples, the weight average molecular weight is a polystyrene-equivalent value measured using a TSKgel column (manufactured by Tosoh Corporation), a GPC (HLC-8120 GPC, manufactured by Tosoh Corporation) fitted with an RI detector, and using THF as the eluent. The acid value (mgKOH/g) is a value obtained by titration with a KOH solution in an ethanol/toluene mixed solvent using "automatic potentiometric titrator AT-610" manufactured by Kyoto Electronics Manufacturing Co., Ltd. The glass transition temperature (°C) is a value obtained by reading the endothermic peak temperature of a chart obtained under a temperature increasing condition of 5°C/min using "differential scanning calorimeter DSC-60 PLUS" manufactured by Shimadzu Corporation.

<I. Production of Ink Materials>

<Production Example for Pigment Dispersing Resin 1>

A reaction container fitted with a gas inlet tube, a thermometer, a condenser, and a stirrer is charged with 93.4 parts of butanol and the container was flushed with nitrogen gas. The contents of the reaction container were heated to 110°C, and a mixture containing 30 parts of acrylic acid, 40 parts of methyl methacrylate, and 30 parts of stearyl methacrylate as polymerizable monomers, and 6 parts of V-601 (manufactured by Wako Pure Chemical Industries, Ltd.) as a polymerization initiator was added dropwise to the container over a period of two hours to carry out a polymerization reaction. After completion of the dropwise addition, reaction was continued at 110 °C for a further three hours, an additional 0.6 parts of V-601 (manufactured by Wako Pure Chemical Industries) was then added, and the reaction was continued at 110°C for a further one hour, thus obtaining a solution of a dispersing resin 1. After cooling the solution to room temperature, 37.1 parts of dimethylaminoethanol was added for neutralization, 100 parts of water was added, and the resulting mixture was stirred. Thereafter, the mixture was heated to 100°C or higher, and the butanol was removed by azeotropic distillation with the water to adjust the solid fraction to 50%. Thus, an aqueous solution of the pigment dispersing resin 1 having a solid fraction of 50% (solution containing solvent containing water and a component dispersed and/or dissolved in the solvent) was obtained. The pigment dispersing resin 1 was water-soluble.

<Production Examples for Pigment Dispersing Resins 2 to 5>

With the exception of use of the monomers shown in Table 1 as the polymerizable monomers, aqueous solutions of dispersing resins 2 to 5 having a solid fraction of 50% were obtained by the same operation as that of the pigment dispersing resin 1. The pigment dispersing resins 2 to 5 were all water-soluble.

[Table 1]

Table 1

| | Monomer component | | | | | Weight average molecular weight | Acid value |
|---|---|---|---|---|---|---|---|
| | St | AA | MMA | 2EHA | STMA | | |
| Pigment dispersing resin 1 | | 30 | 40 | | 30 | 18,000 | 230 |
| Pigment dispersing resin 2 | 40 | 30 | | | 30 | 25,000 | 234 |
| Pigment dispersing resin 3 | 40 | 30 | | | 30 | 48,000 | 232 |
| Pigment dispersing resin 4 | 40 | 30 | | | 30 | 6,000 | 225 |
| Pigment dispersing resin 5 | 40 | 30 | | 30 | | 25,000 | 230 |

The abbreviations in Table 1 are as follows.

- St: styrene
- AA: acrylic acid
- MMA: methyl methacrylate
- 2EHA: 2-ethylhexyl acrylate
- STMA: stearyl methacrylate

<Production Examples for Methyl Ethyl Ketone Solutions of Pigment Dispersing Resins 6 to 7>

A reaction container fitted with a gas inlet tube, a thermometer, a condenser, and a stirrer was charged with 95 parts of methyl ethyl ketone and the container was flushed with nitrogen gas. The contents of the reaction container were heated to 80°C, and a mixture of 70 parts of styrene, 5 parts of acrylic acid, 10 parts of methyl methacrylate, and 15 parts of polypropylene glycol methacrylate (Blemmer PP-500 manufactured by NOF Corporation) as polymerization monomers, and 3.5 parts of V-65 (manufactured by Wako Pure Chemical Industries) as a polymerization initiator was added dropwise over a time period of three hours to carry out a polymerization reaction. After completion of the dropwise addition, reaction was continued at 80°C for a further one hour, an additional 0.7 parts of V-65 (manufactured by Wako Pure Chemical Industries) was then added, and the reaction was continued at 80°C for a further four hours to obtain a solution of a pigment dispersing resin 6. Thereafter, 25 parts of methyl ethyl ketone was added, the reaction system was cooled to normal temperature, the mixed solution was taken out from the reaction container, and was adjusted with methyl ethyl ketone so that the solid fraction was 30%, thus obtaining a methyl ethyl ketone solution (30% solid fraction) of the pigment dispersing resin 6. With the exception of altering the type and amount of the polymerizable monomers as shown in Table 2 below, a methyl ethyl ketone solution (30% solid fraction) of a pigment dispersing resin 7 was obtained in the same manner as the pigment dispersing resin 6. Both of the pigment dispersing resins 6 and 7 were water-insoluble.

[Table 2]

Table 2

| | Monomer component | | | | | Weight average molecular weight | Acid value |
|---|---|---|---|---|---|---|---|
| | St | AA | MMA | VMA | PP500 | | |
| Pigment dispersing resin 6 | 70 | 5 | 10 | | 15 | 25,500 | 30 |
| Pigment dispersing resin 7 | 45 | 5 | 20 | 30 | | 35,000 | 30 |

Of the abbreviations listed in Table 2, those not listed in Table 1 are as follows.

- VMA: behenyl methacrylate
- PP 500: polypropylene glycol methacrylate (Blemmer PP-500 manufactured by NOF Corporation)

<Production Examples for Binder Resins 1 to 8>

As the binder resins used in the examples, aqueous solutions of binder resins 1 to 8 having a solid fraction of 50% were obtained by the same operation as that of the pigment dispersing resin 1 except that the monomers shown in Table 3 were used. Then, to 100 parts of each of the thus obtained aqueous solutions of the binder resins 1 to 8, 25 parts of water was added and the resulting mixture was mixed well, whereby adjusting a solid fraction of the aqueous solution of binder resins 1 to 8 to 40%. The binder resins 1 to 8 were all water-soluble.

[Table 3]

Table 3

| | Monomer component | | | | | | Weight average molecular weight | Acid value | Tg |
|---|---|---|---|---|---|---|---|---|---|
| | St | αMSt | AA | MAA | MMA | BMA | | | |
| Binder resin 1 | 20 | | 5 | | 75 | | 16,000 | 33 | 107 |
| Binder resin 2 | 20 | | 10 | | 70 | | 15,500 | 78 | 103 |
| Binder resin 3 | 20 | | | 8 | 72 | | 16,500 | 55 | 104 |
| Binder resin 4 | | 30 | 5 | | 65 | | 17,000 | 38 | 128 |
| Binder resin 5 | | 15 | 5 | | 80 | | 17,000 | 36 | 118 |
| Binder resin 6 | 15 | | 5 | | 30 | 50 | 18,500 | 39 | 53 |
| Binder resin 7 | 15 | | 5 | | 15 | 65 | 19,500 | 38 | 41 |

(continued)

| | Monomer component | | | | | | Weight average molecular weight | Acid value | Tg |
|---|---|---|---|---|---|---|---|---|---|
| | St | αMSt | AA | MAA | MMA | BMA | | | |
| Binder resin 8 | 15 | | 5 | | | 80 | 21,000 | 39 | 30 |

Of the abbreviations shown in Table 3, those not shown in Tables 1 to 2 are as follows.

- αMSt: α-methylstyrene
- MAA: methacrylic acid
- BMA: butyl methacrylate

<Other Binder Resins>

The following styrene acrylic resin fine particles were also used as the binder resins. Hereinafter, a dispersion liquid in which a solid fraction had been adjusted to 40% using water was used.

- Joncryl 537 J: manufactured by BASF Corporation, acid value: 40 mgKOH/g, Tg: 49°C
- Neocryl A-1091: manufactured by DSM Coating Resins, acid value: 34 mgKOH/g, Tg: 98°C
- Neocryl A-1092: manufactured by DSM Coating Resins, acid value: 24 mgKOH/g, Tg: 9°C

<Production Example for Magenta Pigment Dispersion Liquid 1>

Ten (10) parts of C. I. Pigment Red 150, 10 parts of C. I. Pigment Red 48:3, 10 parts of the aqueous solution of the pigment dispersing resin 1, and 70 parts of water were mixed well with a disper mixer (stirrer), and the obtained mixture was then subjected to a main dispersion treatment using a Dyno mill with a capacity of 0.6 L filled with 1,800 g of zirconia beads having a diameter of 0.5 mm, thus obtaining a magenta pigment dispersion liquid 1 (MB1).

<Production Examples for Magenta Pigment Dispersion Liquids 2 to 53, 56, 57, 60 and 61>

With the exception of using the raw materials shown in Table 4, the pigments were dispersed by the same operation as that of the magenta pigment dispersing resin 1, thus obtaining magenta pigment dispersion liquids 2 to 53, 56, 57, 60, and 61 (MB2 to 53, 56, 57, 60 and 61).

<Production Examples for Magenta Pigment Dispersion Liquids 54, 55, 58 and 59>

To a mixing container fitted with a stirrer, 16.7 parts of a methyl ethyl ketone solution (solid faction concentration 30%) of the pigment dispersing resin 6 and 13.1 parts of methyl ethyl ketone were added, and then, while stirring, 50 parts of water and 0.2 parts of dimethylaminoethanol were added, and the mixture was stirred for further 30 minutes. Then, 18 parts of C. I. Pigment Red 150 and 2 parts of C. I. Pigment Red 48:3 were added thereto, and mixing was performed well with a disper mixer (stirrer). Thereafter, the obtained mixture was subjected to a main dispersion treatment using a Dyno mill with a capacity of 0.6 L filled with 1,800 g of zirconia beads having a diameter of 0.5 mm. Then, the obtained dispersion liquid was taken out, 15 parts of water was added thereto, and methyl ethyl ketone was distilled off under reduced pressure using an evaporator. Thereafter, the pigment concentration was adjusted to 20%, thus obtaining a magenta pigment dispersion liquid 54 (MB 54).

Further, with the exception of using the raw materials shown in Table 4, the same operations as that of the magenta pigment dispersion liquid 54 were performed to obtain magenta pigment dispersion liquids 55, 58, and 59 (MB55, 58, and 59).

[TABLE 4-1]

Table 4

| | | Pigment | | | | | | | | | | | | | | Pigment dispersing resin | | Water |
|---|---|---|---|---|---|---|---|---|---|---|---|---|---|---|---|---|---|---|
| | | Naphthol AS pigment | | | | | | Other azo pigments | | Azo-lake pigment | | Quinacridone pigment | | | | Type | Amount | |
| | | P.R. 150 | P.R. 146 | P.R. 147 | P.R. 170 | P.R. 266 | P.R. 269 | P.R. 1 | P.R. 166 | P.R. 48:1 | P.R. 48:3 | P.R. 122 | P.R. 202 | P.R. 209 | QCD solid solution | | | |
| Magenta pigment dispersion liquid 1 | MB1 | 10% | | | | | | | | | 10% | | | | | Pigment dispersing resin 1 | 10% | Balance |
| Magenta pigment dispersion liquid 2 | MBz | 18% | | | | | | | | | 2% | | | | | Pigment dispersing resin 1 | 10% | Balance |
| Magenta pigment dispersion liquid 3 | MB3 | 2% | | | | | | | | | 18% | | | | | Pigment dispersing resin 1 | 10% | Balance |
| Magenta pigment dispersion liquid 4 | MB4 | 2% | | | | | | | | 18% | | | | | | Pigment dispersing resin 1 | 10% | Balance |
| Magenta pigment dispersion liquid 5 | MB5 | | 7% | | | | | | | | | 13% | | | | Pigment dispersing resin 1 | 10% | Balance |
| Magenta pigment dispersion liquid 6 | MB6 | | 11% | | | | | | | | | 9% | | | | Pigment dispersing resin 1 | 10% | Balance |

(continued)

| | | Pigment | | | | | | | | | | | | | | Pigment dispersing resin | | Water |
|---|---|---|---|---|---|---|---|---|---|---|---|---|---|---|---|---|---|---|
| | | Naphthol AS pigment | | | | | | Other azo pigments | | Azo-lake pigment | | Quinacridone pigment | | | | Type | Amount | |
| | | P.R. 150 | P.R. 146 | P.R. 147 | P.R. 170 | P.R. 266 | P.R. 269 | P.R. 1 | P.R. 166 | P.R. 48:1 | P.R. 48:3 | P.R. 122 | P.R. 202 | P.R. 209 | QCD solid solution | | | |
| Magenta pigment dispersion liquid 7 | MB7 | | 16% | | | | | | | | | 4% | | | | Pigment dispersing resin 1 | 10% | Balance |
| Magenta pigment dispersion liquid 8 | MB8 | 10% | | | | | | 10% | | | | | | | | Pigment dispersing resin 1 | 10% | Balance |
| Magenta pigment dispersion liquid 9 | MB9 | 10% | | | | | | | 10% | | | | | | | Pigment dispersing resin 1 | 10% | Balance |
| Magenta pigment dispersion liquid 10 | MB 10 | 10% | | | | | | | | | | 10% | | | | Pigment dispersing resin 1 | 10% | Balance |
| Magenta pigment dispersion liquid 11 | MB11 | | 18% | 2% | | | | | | | | | | | | Pigment dispersing resin 1 | 10% | Balance |
| Magenta pigment dispersion liquid 12 | MB 12 | | 10% | 10% | | | | | | | | | | | | Pigment dispersing resin 1 | 10% | Balance |
| Magenta pigment dispersion liquid 13 | MB 13 | | 2% | 18% | | | | | | | | | | | | Pigment dispersing resin 1 | 10% | Balance |

(continued)

| | | Pigment | | | | | | | | | | | | | | Pigment dispersing resin | | Water |
|---|---|---|---|---|---|---|---|---|---|---|---|---|---|---|---|---|---|---|
| | | Naphthol AS pigment | | | | | | Other azo pigments | | Azo-lake pigment | | Quinacridone pigment | | | | Type | Amount | |
| | | P.R. 150 | P.R. 146 | P.R. 147 | P.R. 170 | P.R. 266 | P.R. 269 | P.R. 1 | P.R. 166 | P.R. 48:1 | P.R. 48:3 | P.R. 122 | P.R. 202 | P.R. 209 | QCD solid solution | | | |
| Magenta pigment dispersion liquid 14 | MB 14 | 18% | | 2% | | | | | | | | | | | | Pigment dispersing resin 1 | 10% | Balance |
| Magenta pigment dispersion liquid 15 | MB 15 | 10% | | 10% | | | | | | | | | | | | Pigment dispersing resin 1 | 10% | Balance |
| Magenta pigment dispersion liquid 16 | MB 16 | 2% | | 18% | | | | | | | | | | | | Pigment dispersing resin 1 | 10% | Balance |
| Magenta pigment dispersion liquid 17 | MB 17 | 10% | | | 10% | | | | | | | | | | | Pigment dispersing resin 1 | 10% | Balance |
| Magenta pigment dispersion liquid 18 | MB 18 | 2% | | | 18% | | | | | | | | | | | Pigment dispersing resin 1 | 10% | Balance |
| Magenta pigment dispersion liquid 19 | MB 19 | | 18% | | | | | | | | 2% | | | | | Pigment dispersing resin 1 | 10% | Balance |
| Magenta pigment dispersion liquid 20 | MB20 | | 10% | | | | | | | | 10% | | | | | Pigment dispersing resin 1 | 10% | Balance |

(continued)

| | | Pigment | | | | | | | | | | | | | | Pigment dispersing resin | | Water |
|---|---|---|---|---|---|---|---|---|---|---|---|---|---|---|---|---|---|---|
| | | Naphthol AS pigment | | | | | | Other azo pigments | | Azo-lake pigment | | Quinacridone pigment | | | | Type | Amount | |
| | | P.R. 150 | P.R. 146 | P.R. 147 | P.R. 170 | P.R. 266 | P.R. 269 | P.R. 1 | P.R. 166 | P.R. 48:1 | P.R. 48:3 | P.R. 122 | P.R. 202 | P.R. 209 | QCD solid solution | | | |
| Magenta pigment dispersion liquid 21 | MB21 | | 2% | | | | | | | | 18% | | | | | Pigment dispersing resin 1 | 10% | Balance |
| Magenta pigment dispersion liquid 22 | MB22 | | | | 10% | | | | | | 10% | | | | | Pigment dispersing resin 1 | 10% | Balance |
| Magenta pigment dispersion liquid 23 | MB23 | | | | 2% | | | | | | 18% | | | | | Pigment dispersing resin 1 | 10% | Balance |
| Magenta pigment dispersion liquid 24 | MB24 | | | | | 18% | | | | | 2% | | | | | Pigment dispersing resin 1 | 10% | Balance |
| Magenta pigment dispersion liquid 25 | MB25 | | | | | 10% | | | | | 10% | | | | | Pigment dispersing resin 1 | 10% | Balance |
| Magenta pigment dispersion liquid 26 | MB26 | | | | | 2% | | | | | 18% | | | | | Pigment dispersing resin 1 | 10% | Balance |
| Magenta pigment dispersion liquid 27 | MB27 | | | | | | 18% | | | | 2% | | | | | Pigment dispersing resin 1 | 10% | Balance |

(continued)

| | | Pigment | | | | | | | | | | | | | | Pigment dispersing resin | | Water |
|---|---|---|---|---|---|---|---|---|---|---|---|---|---|---|---|---|---|---|
| | | Naphthol AS pigment | | | | | | Other azo pigments | | Azo-lake pigment | | Quinacridone pigment | | | | Type | Amount | |
| | | P.R. 150 | P.R. 146 | P.R. 147 | P.R. 170 | P.R. 266 | P.R. 269 | P.R. 1 | P.R. 166 | P.R. 48:1 | P.R. 48:3 | P.R. 122 | P.R. 202 | P.R. 209 | QCD solid solution | | | |
| Magenta pigment dispersion liquid 28 | ME28 | | | | | | 10% | | | | 10% | | | | | Pigment dispersing resin 1 | 10% | Balance |
| Magenta pigment dispersion liquid 29 | MB29 | | | | | | 2% | | | | 18% | | | | | Pigment dispersing resin 1 | 10% | Balance |

[TABLE 4-2]

Table 4 (continued from previous page)

| | | Pigment | | | | | | | | | | | | | | Pigment dispersing resin | | Water |
|---|---|---|---|---|---|---|---|---|---|---|---|---|---|---|---|---|---|---|
| | | Naphthol AS pigment | | | | | | Other azo pigments | | Azo-lake pigment | | Quinacridone pigment | | | | Type | Amount | |
| | | P.R. 150 | P.R. 146 | P.R. 147 | P.R. 170 | P.R. 266 | P.R. 269 | P.R. 1 | P.R. 166 | P.R. 48:1 | P.R. 48:3 | P.R. 122 | P.R. 202 | P.R. 209 | QCD solid solution | | | |
| Magenta pigment dispersion liquid 30 | MB30 | 11% | | | | | | | | | | 9% | | | | Pigment dispersing resin 1 | 10% | Balance |
| Magenta pigment dispersion liquid 31 | MB31 | 16% | | | | | | | | | | 4% | | | | Pigment dispersing resin 1 | 10% | Balance |
| Magenta pigment dispersion liquid 32 | MB32 | | | 11% | | | | | | | | 9% | | | | Pigment dispersing resin 1 | 10% | Balance |
| Magenta pigment dispersion liquid 33 | MB33 | | | 16% | | | | | | | | 4% | | | | Pigment dispersing resin 1 | 10% | Balance |
| Magenta pigment dispersion liquid 34 | MB34 | | | | | 11% | | | | | | 9% | | | | Pigment dispersing resin 1 | 10% | Balance |
| Magenta pigment dispersion liquid 35 | MB35 | | | | | 16% | | | | | | 4% | | | | Pigment dispersing resin 1 | 10% | Balance |

(continued)

| | | Pigment | | | | | | | | | | | | | | Pigment dispersing resin | | Water |
|---|---|---|---|---|---|---|---|---|---|---|---|---|---|---|---|---|---|---|
| | | Naphthol AS pigment | | | | | | Other azo pigments | | Azo-lake pigment | | Quinacridone pigment | | | | Type | Amount | |
| | | P.R. 150 | P.R. 146 | P.R. 147 | P.R. 170 | P.R. 266 | P.R. 269 | P.R. 1 | P.R. 166 | P.R. 48:1 | P.R. 48:3 | P.R. 122 | P.R. 202 | P.R. 209 | QCD solid solution | | | |
| Magenta pigment dispersion liquid 36 | MB36 | | | | | | 11% | | | | | 9% | | | | Pigment dispersing resin 1 | 10% | Balance |
| Magenta pigment dispersion liquid 37 | MB37 | | | | | | 16% | | | | | 4% | | | | Pigment dispersing resin 1 | 10% | Balance |
| Magenta pigment dispersion liquid 38 | MB38 | 14% | | | | | | | | | 4% | 2% | | | | Pigment dispersing resin 1 | 10% | Balance |
| Magenta pigment dispersion liquid 39 | MB39 | 11% | | | | | | | | | | | 9% | | | Pigment dispersing resin 1 | 10% | Balance |
| Magenta pigment dispersion liquid 40 | MB40 | 16% | | | | | | | | | | | 4% | | | Pigment dispersing resin 1 | 10% | Balance |
| Magenta pigment dispersion liquid 41 | MB41 | 11% | | | | | | | | | | | | 9% | | Pigment dispersing resin 1 | 10% | Balance |
| Magenta pigment dispersion liquid 42 | MB42 | 16% | | | | | | | | | | | | 4% | | Pigment dispersing resin 1 | 10% | Balance |

(continued)

| | | Pigment | | | | | | | | | | | | | | Pigment dispersing resin | | Water |
|---|---|---|---|---|---|---|---|---|---|---|---|---|---|---|---|---|---|---|
| | | Naphthol AS pigment | | | | | | Other azo pigments | | Azo-lake pigment | | Quinacridone pigment | | | | Type | Amount | |
| | | P.R. 150 | P.R. 146 | P.R. 147 | P.R. 170 | P.R. 266 | P.R. 269 | P.R. 1 | P.R. 166 | P.R. 48:1 | P.R. 48:3 | P.R. 122 | P.R. 202 | P.R. 209 | QCD solid solution | | | |
| Magenta pigment dispersion liquid 43 | MB43 | 16% | | | | | | | | | | | | | 4% | Pigment dispersing resin 1 | 10% | Balance |
| Magenta pigment dispersion liquid 44 | MB44 | | | | | | | | | | 7% | 13% | | | | Pigment dispersing resin 1 | 10% | Balance |
| Magenta pigment dispersion liquid 45 | MB45 | | | | | | | | | | 10% | 10% | | | | Pigment dispersing resin 1 | 10% | Balance |
| Magenta pigment dispersion liquid 46 | MB46 | | | | | | | | | | 7% | | 13% | | | Pigment dispersing resin 1 | 10% | Balance |
| Magenta pigment dispersion liquid 47 | MB47 | | | | | | | | | | 10% | | 10% | | | Pigment dispersing resin 1 | 10% | Balance |
| Magenta pigment dispersion liquid 48 | MB48 | | | | | | | | | | 7% | | | 13% | | Pigment dispersing resin 1 | 10% | Balance |
| Magenta pigment dispersion liquid 49 | MB49 | | | | | | | | | | 10% | | | 10% | | Pigment dispersing resin 1 | 10% | Balance |

(continued)

| | | Pigment | | | | | | | | | | | | | | Pigment dispersing resin | | Water |
|---|---|---|---|---|---|---|---|---|---|---|---|---|---|---|---|---|---|---|
| | | Naphthol AS pigment | | | | | | Other azo pigments | | Azo-lake pigment | | Quinacridone pigment | | | | Type | Amount | |
| | | P.R. 150 | P.R. 146 | P.R. 147 | P.R. 170 | P.R. 266 | P.R. 269 | P.R. 1 | P.R. 166 | P.R. 48:1 | P.R. 48:3 | P.R. 122 | P.R. 202 | P.R. 209 | QCD solid solution | | | |
| Magenta pigment dispersion liquid 50 | MB50 | 18% | | | | | | | | | 2% | | | | | Pigment dispersing resin 2 | 10% | Balance |
| Magenta pigment dispersion liquid 51 | MB51 | 18% | | | | | | | | | 2% | | | | | Pigment dispersing resin 3 | 10% | Balance |
| Magenta pigment dispersion liquid 52 | MB52 | 18% | | | | | | | | | 2% | | | | | Pigment dispersing resin 4 | 10% | Balance |
| Magenta pigment dispersion liquid 53 | MB53 | 18% | | | | | | | | | 2% | | | | | Pigment dispersing resin 5 | 10% | Balance |
| Magenta pigment dispersion liquid 54 | MB54 | 18% | | | | | | | | | 2% | | | | | Pigment dispersing resin 6 | 10% | Balance |
| Magenta pigment dispersion liquid 55 | MB55 | 18% | | | | | | | | | 2% | | | | | Pigment dispersing resin 7 | 10% | Balance |
| Magenta pigment dispersion liquid 56 | MB56 | 20% | | | | | | | | | | | | | | Pigment dispersing resin 1 | 10% | Balance |

(continued)

| | | Pigment | | | | | | | | | | | | | | Pigment dispersing resin | | Water |
|---|---|---|---|---|---|---|---|---|---|---|---|---|---|---|---|---|---|---|
| | | Naphthol AS pigment | | | | | | Other azo pigments | | Azo-lake pigment | | Quinacridone pigment | | | | Type | Amount | |
| | | P.R. 150 | P.R. 146 | P.R. 147 | P.R. 170 | P.R. 266 | P.R. 269 | P.R. 1 | P.R. 166 | P.R. 48:1 | P.R. 48:3 | P.R. 122 | P.R. 202 | P.R. 209 | QCD solid solution | | | |
| Magenta pigment dispersion liquid 57 | MB57 | | | | | | | | | | 20% | | | | | Pigment dispersing resin 1 | 10% | Balance |
| Magenta pigment dispersion liquid 58 | MB58 | 20% | | | | | | | | | | | | | | Pigment dispersing resin 6 | 10% | Balance |
| Magenta pigment dispersion liquid 59 | MB59 | | | | | | | | | | 20% | | | | | Pigment dispersing resin 6 | 10% | Balance |
| Magenta pigment dispersion liquid 60 | MB60 | 2% | | | | | | | | | | 18% | | | | Pigment dispersing resin 1 | 10% | Balance |
| Magenta pigment dispersion liquid 61 | MB61 | | | | | | | | | | | 20% | | | | Pigment dispersing resin 1 | 10% | Balance |

The abbreviations in Table 4 are as follows.

- P. R. 150: C. I. Pigment Red 150
- P. R. 146: C. I. Pigment Red 146
- P. R. 147: C. I. Pigment Red 147
- P. R. 170: C. I. Pigment Red 170
- P. R. 266: C. I. Pigment Red 266
- P. R. 269: C. I. Pigment Red 269
- P. R. 1: C. I. Pigment Red 1
- P. R. 166: C. I. Pigment Red 166
- P. R. 48:1: C. I. Pigment Red 48:1
- P. R. 48:3: C. I. Pigment Red 48:3
- P. R. 122: C. I. Pigment Red 122
- P. R. 202: C. I. Pigment Red 202
- P. R. 209: C. I. Pigment Red 209
- QCD solid solution: a solid solution of C. I. Pigment Red 202 and C. I. Pigment Violet 19

(Cinquasia Red K 4330 manufactured by BASF)

<Production Examples for Yellow Pigment Dispersion Liquids 1 to 3>

Twenty (20) parts of C. I. Pigment Yellow 74 as the pigment, 10 parts of the aqueous solution of the pigment dispersing resin 1, and 70 parts of water were mixed, and a preliminary dispersion treatment was performed using a disper mixer. The obtained mixture was then subjected to a main dispersion treatment using a Dyno mill with a capacity of 0.6 L filled with 1,800 g of zirconia beads having a diameter of 0.5 mm, thus obtaining a yellow pigment dispersion liquid 1.

With the exception of altering the pigment to C. I. Pigment Yellow 14, or to C. I. Pigment Yellow 120 respectively, pigment dispersion is performed by the same operation as that of the yellow pigment dispersion liquid 1 to obtain a yellow pigment dispersions 2 and 3.

<Production Example for Cyan Pigment Dispersion Liquid 1>

Twenty (20) parts of C. I. Pigment Blue 15:3 as a pigment, 10 parts of the aqueous solution of the pigment dispersing resin 1, and 70 parts of water were mixed and a preliminary dispersion treatment was performed using a disper mixer. The obtained mixture was then subjected to a main dispersion treatment using a Dyno mill with a capacity of 0.6 L filled with 1,800 g of zirconia beads having a diameter of 0.5 mm, thus obtaining a cyan pigment dispersion liquid 1.

< II. Production and Evaluation of Magenta Ink>

<Production Example for Magenta Ink 1 (M1)>

First, 10 parts of the magenta pigment dispersion liquid 1 (MB1), 15 parts of propylene glycol, 5 parts of diethylene glycol monobutyl ether, 1 part of Surfynol 440, and 10 parts (solid fraction: 4 parts) of the aqueous solution of the binder resin 1 were added sequentially to a mixing container, and sufficient water was then added to make the total ink amount up to 100 parts. The resulting mixture of these components was stirred until sufficiently uniform using a disper mixer. The obtained mixture was then filtered through a membrane filter having a pore size of 1 $\mu$m to remove coarse particles that can cause head blockage, thus obtaining a magenta ink 1 (M1).

<Production Example for Magenta Inks 2 to 123 (M2 to 123)>

With the exception of using the raw materials shown in Table 5 to 6, magenta inks 2 to 123 (M2 to M123) were produced in the same manner as the production example of magenta ink 1.

[TABLE 5-1]

**Table 5**

| | | | | Example 1 | Example 2 | Example 3 | Example 4 | Example 5 | Example 6 |
|---|---|---|---|---|---|---|---|---|---|
| | | | | M1 | M2 | M3 | M4 | M5 | M6 |
| Pigment dispersion | Magenta pigment dispersion (Pigment concentration = 20%) | | Type | MB1 | MB2 | MB1 | MB3 | MB4 | MB1 |
| | | | Amount | 10.0% | 18.8% | 18.5% | 18.0% | 18.0% | 25.0% |
| | Pigment | Naphthol AS | P.R.150 | 1.00% | 3.38% | 1.85% | 0.36% | 0.36% | 2.50% |
| | | | P.R.146 | | | | | | |
| | | | P.R.147 | | | | | | |
| | | | P.R.170 | | | | | | |
| | | | P.R.266 | | | | | | |
| | | | P.R.269 | | | | | | |
| | | Other azo | P.R.1 | | | | | | |
| | | | P.R.166 | | | | | | |
| | | Azo-lake | P.R.48:1 | | | | | 3.24% | |
| | | | P.R.48:3 | 1.00% | 0.38% | 1.85% | 3.24% | | 2.50% |
| | | Quinacridone | P.R.122 | | | | | | |
| | | | P.R.202 | | | | | | |
| | | | P.R.209 | | | | | | |
| | | | QCD solid solution | | | | | | |
| Water-soluble organic solvent | Water-soluble organic solvent (A-1) | EG (boiling point: 197°C) | HLB: 11.0 | | | | | | |
| | | DEG (boiling point: 244°C) | HLB: 9.4 | | | | | | |
| | | PG (boiling point: 188°C) | HLB: 8.9 | 15.0% | 32.5% | 25.0% | 25.0% | 25.0% | 35.0% |
| | | DPG (boiling point: 231°C) | HLB: 7.5 | | | | | | |
| | Water-soluble organic solvent (A-2) | TEG (boiling point: 288°C) | HLB: 8.8 | | | | | | |
| | | TPG (boiling point: 273°C) | HLB: 6.9 | | | | | | |
| | Cyclic amide-based solvent | 2Py (boiling point: 245°C) | HLB: 10.1 | | | | | | |
| | | NMP (boiling point: 202°C) | HLB: 8.5 | | | | | | |
| | Other water-soluble organic solvents | 1,2-BD (boiling point: 191°C) | HLB: 7.6 | | | | | | |
| | | 1,2-HD (boiling point: 224°C) | HLB: 5.8 | | | | | | |
| | | DPM (boiling point: 188°C) | HLB: 2.3 | | | | | | |
| | | BDG (boiling point: 230°C) | HLB: 13.0 | 5.0% | 5.0% | 5.0% | 5.0% | 5.0% | 5.0% |
| | | GLY (boiling point: 290°C) | HLB: 11.1 | | | | | | |
| Surfactant | Acetylene-based surfactant | Surfynol 104 | HLB: 3.0 | | | | | | |
| | | Surfynol 440 | HLB: 9.9 | 1.0% | 1.0% | 1.0% | 1.0% | 1.0% | 1.0% |
| | | Surfynol 485 | HLB: 17.5 | | | | | | |
| | Glycol ether-based surfactant | Emalex 703 | HLB: 9.4 | | | | | | |
| | | Emalex 630 | HLB: 16.7 | | | | | | |
| | | Emalex 750 | HLB: 18.6 | | | | | | |
| | | Nonion K-2100W | HLB: 19.3 | | | | | | |
| | Siloxane-based surfactant | TegoWet280 | HLB: 3.5 | | | | | | |
| Binder resin | Aqueous solution of water-soluble resin (solid fraction: 40%) | Binder resin 1 | Acid value: 33 Tg: 107 | 10.0% | 10.0% | 10.0% | 10.0% | 10.0% | 10.0% |
| | | Binder resin 2 | Acid value: 78 Tg: 103 | | | | | | |
| | | Binder resin 3 | Acid value: 55 Tg: 104 | | | | | | |
| | | Binder resin 4 | Acid value: 38 Tg: 128 | | | | | | |
| | | Binder resin 5 | Acid value: 36 Tg: 118 | | | | | | |
| | | Binder resin 6 | Acid value: 39 Tg: 53 | | | | | | |
| | | Binder resin 7 | Acid value: 38 Tg: 41 | | | | | | |
| | | Binder resin 8 | Acid value: 39 Tg: 30 | | | | | | |
| | Aqueous deispersion liquid of resin fine particles (solid fraction: 40%) | Joncryl 537J | Acid value: 40 Tg: 49 | | | | | | |
| | | Neocryl A-1091 | Acid value: 34 Tg: 98 | | | | | | |
| | | Neocryl A-1092 | Acid value: 24 Tg: 9 | | | | | | |
| Water | | | | Balance | Balance | Balance | Balance | Balance | Balance |
| Parameters | Amount of azo pigment | | | 2.0% | 3.8% | 3.7% | 3.6% | 3.6% | 5.0% |
| | Ratio of azo pigment (in total mass of pigment) | | | 100% | 100% | 100% | 100% | 100% | 100% |
| | Molar amount of diol-based solvent (A-1) relative to molar amount of azo pigment (times) | | | 46.4 | 50.8 | 41.8 | 45.5 | 49.5 | 43.3 |
| | Molar amount of diol-based solvent (A-2) relative to molar amount of diol-based solvent (A-1) (times) | | | 0.00 | 0.00 | 0.00 | 0.00 | 0.00 | 0.00 |
| | Amount of water-soluble organic solvent having a boiling point of 250°C or higher (1) | | | 0.0% | 0.0% | 0.0% | 0.0% | 0.0% | 0.0% |
| | Amount of water-soluble organic solvent having a boiling point of 290°C or higher (2) | | | 0.0% | 0.0% | 0.0% | 0.0% | 0.0% | 0.0% |
| | Weighted average boiling point of water-soluble organic solvent (°C) | | | 198.5 | 193.6 | 195.0 | 195.0 | 195.0 | 193.3 |
| Evaluations | Evaluation 1 | Storage stability | | AA | A | AA | AA | AA | AA |
| | Evaluation 2 | Discharge stability | | AA | A | AA | AA | A | AA |
| | Evaluation 3 | Voids of printed matter | | B | B | B | B | B | B |
| | Evaluation 4 | Density of printed matter | | A | A | A | A | B | A |
| | Evaluation 5 | Chroma of printed matter | | AA | AA | AA | AA | AA | AA |
| | Evaluation 6 | Drying properties of printed matter | | A | B | A | A | A | A |

**Table 5 (continued from previous page)**

| Example 7 | Example 8 | Example 9 | Example 10 | Example 11 | Example 12 | Example 13 | Example 14 | Example 15 | Example 16 |
|---|---|---|---|---|---|---|---|---|---|
| M7 | M8 | M9 | M10 | M11 | M12 | M13 | M14 | M15 | M16 |
| MB1 | MB1 | MB5 | MB5 | MB5 | MB6 | MB7 | MB1 | MB1 | MB1 |
| 32.5% | 40.0% | 7.1% | 14.3% | 18.0% | 18.0% | 18.0% | 18.5% | 18.5% | 18.5% |
| 3.25% | 4.00% | | | | | | 1.85% | 1.85% | 1.85% |
| | | 0.50% | 1.00% | 1.26% | 1.98% | 2.88% | | | |
| | | | | | | | | | |
| | | | | | | | | | |
| | | | | | | | | | |
| | | | | | | | | | |
| | | | | | | | | | |
| | | | | | | | | | |
| | | | | | | | | | |
| 3.25% | 4.00% | | | | | | 1.85% | 1.85% | 1.85% |
| | | 0.93% | 1.86% | 2.34% | 1.62% | 0.72% | | | |
| | | | | | | | | | |
| | | | | | | | | | |
| | | | | | | | | | |
| | | | | | | | | | |
| | | | | | | | | | |
| 35.0% | 40.0% | 5.0% | 10.0% | 12.5% | 12.5% | 12.5% | 25.0% | 25.0% | 25.0% |
| | | | | | | | | | |
| | | | | | | | 4.5% | 2.4% | 0.9% |
| | | | | | | | | | |
| | | | | | | | | | |
| | | | | | | | | | |
| | | 5.0% | 5.0% | 5.0% | 5.0% | 5.0% | | | |
| | | | | | | | | | |
| | | | | | | | | | |
| 5.0% | 5.0% | | | | | | 0.5% | 2.6% | 4.0% |
| | | | | | | | | | |
| | | | | | | | | | |
| 1.0% | 1.0% | 1.0% | 1.0% | 1.0% | 1.0% | 1.0% | 1.0% | 1.0% | 1.0% |
| | | | | | | | | | |
| | | | | | | | | | |
| | | | | | | | | | |
| | | | | | | | | | |
| | | | | | | | | | |
| | | | | | | | | | |
| 10.0% | 10.0% | 10.0% | 10.0% | 10.0% | 10.0% | 10.0% | 10.0% | 10.0% | 10.0% |
| | | | | | | | | | |
| | | | | | | | | | |
| | | | | | | | | | |
| | | | | | | | | | |
| | | | | | | | | | |
| | | | | | | | | | |
| | | | | | | | | | |
| | | | | | | | | | |
| | | | | | | | | | |
| | | | | | | | | | |
| Balance | Balance | Balance | Balance | Balance | Balance | Balance | Balance | Balance | Balance |
| 6.5% | 8.0% | 0.5% | 1.0% | 1.3% | 2.0% | 2.9% | 3.7% | 3.7% | 3.7% |
| 100% | 100% | 35% | 35% | 35% | 55% | 80% | 100% | 100% | 100% |
| 33.3 | 31.0 | 80.3 | 80.3 | 79.7 | 50.7 | 34.9 | 41.8 | 41.8 | 41.8 |
| 0.00 | 0.00 | 0.00 | 0.00 | 0.00 | 0.00 | 0.00 | 0.09 | 0.05 | 0.02 |
| 0.0% | 0.0% | 0.0% | 0.0% | 0.0% | 0.0% | 0.0% | 4.5% | 2.4% | 0.9% |
| 0.0% | 0.0% | 0.0% | 0.0% | 0.0% | 0.0% | 0.0% | 0.0% | 0.0% | 0.0% |
| 193.3 | 192.7 | 189.5 | 189.0 | 188.9 | 188.9 | 188.9 | 203.7 | 199.6 | 196.6 |
| AA | A | AA | AA | AA | AA | AA | A | AA | AA |
| A | B | AA | AA | AA | AA | AA | A | A | AA |
| B | B | B | B | B | B | B | A | B | B |
| A | AA | B | B | B | A | A | B | A | A |
| AA | A | A | A | A | AA | AA | A | AA | AA |
| A | A | A | A | A | A | A | B | A | A |

[TABLE 5-2]

**Table 5 (continued from previous page)**

| | Example 17 | Example 18 | Example 19 | Example 20 | Example 21 | Example 22 | Example 23 | Example 24 |
|---|---|---|---|---|---|---|---|---|
| | M17 | M18 | M19 | M20 | M21 | M22 | M23 | M24 |
| Magenta pigment dispersion | MB1 18.5% | MB1 18.5% | MB1 18.5% | MB1 18.5% | MB8 18.5% | MB9 18.5% | MB5 7.1% | MB5 7.1% |
| P.R.150 | 1.85% | 1.85% | 1.85% | 1.85% | 1.85% | 1.85% | | |
| P.R.146 | | | | | | | 0.50% | 0.50% |
| P.R.147 | | | | | | | | |
| P.R.170 | | | | | | | | |
| P.R.266 | | | | | | | | |
| P.R.269 | | | | | | | | |
| P.R.1 | | | | | 1.85% | | | |
| P.R.166 | | | | | | 1.85% | | |
| P.R.48:1 | | | | | | | | |
| P.R.48:3 | 1.85% | 1.85% | 1.85% | 1.85% | | | | |
| P.R.122 | | | | | | | 0.93% | 0.93% |
| P.R.202 | | | | | | | | |
| P.R.209 | | | | | | | | |
| QCD solid solution | | | | | | | | |
| EG | | | | | | | | |
| DEG | | | | | | | | |
| PG | 25.0% | 25.0% | 25.0% | 25.0% | 25.0% | 25.0% | 0.5% | 2.5% |
| DPG | | | | | | | | |
| TEG | | | | | | | | |
| TPG | | | | | | | | |
| 2Py | 4.5% | 2.0% | 1.0% | | | | | |
| NMP | | | | 2.0% | | | | |
| 1,2-BD | 0.5% | 3.0% | 4.0% | 3.0% | | | 5.0% | 5.0% |
| 1,2-HD | | | | | | | | |
| DPM | | | | | | | | |
| BDG | | | | | 5.0% | 5.0% | | |
| GLY | | | | | | | | |
| Surfynol 104 | | | | | | | | |
| Surfynol 440 | 1.0% | 1.0% | 1.0% | 1.0% | 1.0% | 1.0% | 1.0% | 1.0% |
| Surfynol 485 | | | | | | | | |
| Emalex 703 | | | | | | | | |
| Emalex 630 | | | | | | | | |
| Emalex 750 | | | | | | | | |
| Nonion K-2100W | | | | | | | | |
| TegoWet280 | | | | | | | | |
| Binder resin 1 | 10.0% | 10.0% | 10.0% | 10.0% | 10.0% | 10.0% | 10.0% | 10.0% |
| Binder resin 2 | | | | | | | | |
| Binder resin 3 | | | | | | | | |
| Binder resin 4 | | | | | | | | |
| Binder resin 5 | | | | | | | | |
| Binder resin 6 | | | | | | | | |
| Binder resin 7 | | | | | | | | |
| Binder resin 8 | | | | | | | | |
| Joncryl 537J | | | | | | | | |
| Neocryl A-1091 | | | | | | | | |
| Neocryl A-1092 | | | | | | | | |
| Water | Balance | Balance | Balance | Balance | Balance | Balance | Balance | Balance |
| Amount of azo pigment | 3.7% | 3.7% | 3.7% | 3.7% | 3.7% | 3.7% | 0.5% | 0.5% |
| Ratio of azo pigment | 100% | 100% | 100% | 100% | 100% | 100% | 35% | 35% |
| Molar amount of diol-based solvent (A-1) | 41.8 | 41.8 | 41.8 | 41.8 | 31.3 | 50.3 | 8.0 | 40.2 |
| Molar amount of diol-based solvent (A-2) | 0.00 | 0.00 | 0.00 | 0.00 | 0.00 | 0.00 | 0.00 | 0.00 |
| Amount of soluvent (1) | 0.0% | 0.0% | 0.0% | 0.0% | 0.0% | 0.0% | 0.0% | 0.0% |
| Amount of soluvent (2) | 0.0% | 0.0% | 0.0% | 0.0% | 0.0% | 0.0% | 0.0% | 0.0% |
| Weighted average boiling point | 196.6 | 192.1 | 190.3 | 189.2 | 195.0 | 195.0 | 190.7 | 190.0 |
| Storage stability | B | A | AA | A | AA | AA | A | AA |
| Discharge stability | A | AA | AA | AA | A | A | A | AA |
| Voids of printed matter | B | B | B | B | B | B | B | B |
| Density of printed matter | A | A | A | A | B | B | B | B |
| Chroma of printed matter | A | A | AA | A | AA | AA | A | A |
| Drying properties of printed matter | A | A | A | A | A | A | A | A |

Table 5 (continued from previous page)

| Example 25 | Example 26 | Example 27 | Example 28 | Example 29 | Example 30 | Example 31 | Example 32 | Example 33 | Example 34 | Example 35 |
|---|---|---|---|---|---|---|---|---|---|---|
| M25 | M26 | M27 | M28 | M29 | M30 | M31 | M32 | M33 | M34 | M35 |
| MB5 | MB5 | MB5 | MB11 | MB12 | MB13 | MB14 | MB15 | MB16 | MB17 | MB18 |
| 7.1% | 7.1% | 7.1% | 18.0% | 18.0% | 18.0% | 18.0% | 18.0% | 18.0% | 18.0% | 18.0% |
| | | | | | | 3.24% | 1.80% | 0.36% | 1.80% | 0.36% |
| 0.50% | 0.50% | 0.50% | 3.24% | 1.80% | 0.36% | | | | | |
| | | | 0.36% | 1.80% | 3.24% | 0.36% | 1.80% | 3.24% | | |
| | | | | | | | | | 1.80% | 3.24% |
| | | | | | | | | | | |
| | | | | | | | | | | |
| | | | | | | | | | | |
| | | | | | | | | | | |
| | | | | | | | | | | |
| | | | | | | | | | | |
| 0.93% | 0.93% | 0.93% | | | | | | | | |
| | | | | | | | | | | |
| | | | | | | | | | | |
| | | | | | | | | | | |
| | | | | | | | | | | |
| | | | | | | | | | | |
| 10.0% | 12.5% | 15.0% | 15.0% | 15.0% | 15.0% | 15.0% | 15.0% | 15.0% | 15.0% | 15.0% |
| | | | 5.0% | 5.0% | 5.0% | 5.0% | 5.0% | 5.0% | 5.0% | 5.0% |
| | | | | | | | | | | |
| | | | | | | | | | | |
| | | | | | | | | | | |
| | | | | | | | | | | |
| 5.0% | 5.0% | 5.0% | | | | | | | | |
| | | | 5.0% | 5.0% | 5.0% | 5.0% | 5.0% | 5.0% | 5.0% | 5.0% |
| | | | | | | | | | | |
| | | | | | | | | | | |
| | | | | | | | | | | |
| | | | | | | | | | | |
| 1.0% | 1.0% | 1.0% | 1.0% | 1.0% | 1.0% | 1.0% | 1.0% | 1.0% | 1.0% | 1.0% |
| | | | | | | | | | | |
| | | | | | | | | | | |
| | | | | | | | | | | |
| | | | | | | | | | | |
| | | | | | | | | | | |
| | | | | | | | | | | |
| 10.0% | 10.0% | 10.0% | 10.0% | 10.0% | 10.0% | 10.0% | 10.0% | 10.0% | 10.0% | 10.0% |
| | | | | | | | | | | |
| | | | | | | | | | | |
| | | | | | | | | | | |
| | | | | | | | | | | |
| | | | | | | | | | | |
| | | | | | | | | | | |
| | | | | | | | | | | |
| | | | | | | | | | | |
| | | | | | | | | | | |
| | | | | | | | | | | |
| Balance | Balance | Balance | Balance | Balance | Balance | Balance | Balance | Balance | Balance | Balance |
| 0.5% | 0.5% | 0.5% | 3.6% | 3.6% | 3.6% | 3.6% | 3.6% | 3.6% | 3.6% | 3.6% |
| 35% | 35% | 35% | 100% | 100% | 100% | 100% | 100% | 100% | 100% | 100% |
| 160.6 | 200.8 | 240.9 | 39.5 | 38.2 | 37.1 | 29.3 | 32.2 | 35.8 | 29.1 | 29.5 |
| 0.00 | 0.00 | 0.00 | 0.00 | 0.00 | 0.00 | 0.00 | 0.00 | 0.00 | 0.00 | 0.00 |
| 0.0% | 0.0% | 0.0% | 0.0% | 0.0% | 0.0% | 0.0% | 0.0% | 0.0% | 0.0% | 0.0% |
| 0.0% | 0.0% | 0.0% | 0.0% | 0.0% | 0.0% | 0.0% | 0.0% | 0.0% | 0.0% | 0.0% |
| 189.0 | 188.9 | 188.8 | 203.8 | 203.8 | 203.8 | 203.8 | 203.8 | 203.8 | 203.8 | 203.8 |
| A | A | A | AA | AA | AA | AA | AA | AA | AA | AA |
| AA | A | A | AA | AA | AA | AA | AA | AA | AA | AA |
| B | B | B | B | B | B | B | B | B | B | B |
| B | B | B | B | B | B | A | A | A | A | A |
| A | A | B | A | A | A | AA | AA | AA | AA | AA |
| A | A | A | A | A | A | A | A | A | A | A |

[TABLE 5-3]

**Table 5 (continued from previous page)**

| | Example 36 | Example 37 | Example 38 | Example 39 | Example 40 | Example 41 | Example 42 | Example 43 | Example 44 | Example 45 | Example 46 |
|---|---|---|---|---|---|---|---|---|---|---|---|
| | M36 | M37 | M38 | M39 | M40 | M41 | M42 | M43 | M44 | M45 | M46 |
| Magenta pigment dispersion | MB19 | MB20 | MB21 | MB22 | MB23 | MB24 | MB25 | MB26 | MB27 | MB28 | MB29 |
| | 20.0% | 18.8% | 17.5% | 20.0% | 18.0% | 20.0% | 19.0% | 18.0% | 20.0% | 20.0% | 20.0% |
| P.R.150 | | | | | | | | | | | |
| P.R.146 | 3.60% | 1.88% | 0.35% | | | | | | | | |
| P.R.147 | | | | | | | | | | | |
| P.R.170 | | | | 1.90% | 0.36% | | | | | | |
| P.R.266 | | | | | | 3.60% | 1.90% | 0.36% | | | |
| P.R.269 | | | | | | | | | 3.60% | 2.00% | 0.40% |
| P.R.1 | | | | | | | | | | | |
| P.R.166 | | | | | | | | | | | |
| P.R.48:1 | | | | | | | | | | | |
| P.R.48:3 | 0.40% | 1.88% | 3.15% | 1.90% | 3.24% | 0.40% | 1.90% | 3.24% | 0.40% | 2.00% | 3.60% |
| P.R.122 | | | | | | | | | | | |
| P.R.202 | | | | | | | | | | | |
| P.R.209 | | | | | | | | | | | |
| QCD solid solution | | | | | | | | | | | |
| EG | | | | | | | | | | | |
| DEG | 14.5% | 14.5% | 14.5% | 14.5% | 14.5% | 14.5% | 14.5% | 14.5% | 14.5% | 14.5% | 14.5% |
| PG | | | | | | | | | | | |
| DPG | | | | | | | | | | | |
| TEG | | | | | | | | | | | |
| TPG | | | | | | | | | | | |
| 2Py | | | | | | | | | | | |
| NMP | | | | | | | | | | | |
| 1,2-BD | | | | | | | | | | | |
| 1,2-HD | | | | | | | | | | | |
| DPM | | | | | | | | | | | |
| BDG | 5.0% | 5.0% | 5.0% | 5.0% | 5.0% | 5.0% | 5.0% | 5.0% | 5.0% | 5.0% | 5.0% |
| GLY | 5.0% | 5.0% | 5.0% | 5.0% | 5.0% | 5.0% | 5.0% | 5.0% | 5.0% | 5.0% | 5.0% |
| Surfynol 104 | | | | | | | | | | | |
| Surfynol 440 | 1.0% | 1.0% | 1.0% | 1.0% | 1.0% | 1.0% | 1.0% | 1.0% | 1.0% | 1.0% | 1.0% |
| Surfynol 485 | | | | | | | | | | | |
| Emalex 703 | | | | | | | | | | | |
| Emalex 630 | | | | | | | | | | | |
| Emalex 750 | | | | | | | | | | | |
| Nonion K-2100W | | | | | | | | | | | |
| TegoWet280 | | | | | | | | | | | |
| Binder resin 1 | 10.0% | 10.0% | 10.0% | 10.0% | 10.0% | 10.0% | 10.0% | 10.0% | 10.0% | 10.0% | 10.0% |
| Binder resin 2 | | | | | | | | | | | |
| Binder resin 3 | | | | | | | | | | | |
| Binder resin 4 | | | | | | | | | | | |
| Binder resin 5 | | | | | | | | | | | |
| Binder resin 6 | | | | | | | | | | | |
| Binder resin 7 | | | | | | | | | | | |
| Binder resin 8 | | | | | | | | | | | |
| Joncryl 537J | | | | | | | | | | | |
| Neocryl A-1091 | | | | | | | | | | | |
| Neocryl A-1092 | | | | | | | | | | | |
| Water | Balance | Balance | Balance | Balance | Balance | Balance | Balance | Balance | Balance | Balance | Balance |
| Amount of azo pigment | 4.0% | 3.8% | 3.5% | 3.8% | 3.6% | 4.0% | 3.8% | 3.6% | 4.0% | 4.0% | 4.0% |
| Ratio of azo pigment | 100% | 100% | 100% | 100% | 100% | 100% | 100% | 100% | 100% | 100% | 100% |
| Molar amount of diol-based solvent (A-1) | 20.5 | 20.2 | 20.1 | 17.2 | 19.0 | 15.2 | 16.9 | 18.9 | 19.6 | 18.5 | 17.5 |
| Molar amount of diol-based solvent (A-2) | 0.00 | 0.00 | 0.00 | 0.00 | 0.00 | 0.00 | 0.00 | 0.00 | 0.00 | 0.00 | 0.00 |
| Amount of soluvent (1) | 5.0% | 5.0% | 5.0% | 5.0% | 5.0% | 5.0% | 5.0% | 5.0% | 5.0% | 5.0% | 5.0% |
| Amount of soluvent (2) | 5.0% | 5.0% | 5.0% | 5.0% | 5.0% | 5.0% | 5.0% | 5.0% | 5.0% | 5.0% | 5.0% |
| Weighted average boiling point | 250.5 | 250.5 | 250.5 | 250.5 | 250.5 | 250.5 | 250.5 | 250.5 | 250.5 | 250.5 | 250.5 |
| Storage stability | A | A | AA | A | A | A | A | A | A | A | A |
| Discharge stability | A | A | A | A | A | A | A | A | A | A | A |
| Voids of printed matter | B | B | B | B | B | B | B | B | B | B | B |
| Density of printed matter | A | A | A | A | A | A | A | A | A | A | A |
| Chroma of printed matter | A | AA | AA | AA | AA | A | AA | AA | A | AA | AA |
| Drying properties of printed matter | B | B | A | B | A | B | B | A | B | B | B |

**Table 5 (continued from previous page)**

| Example 47 | Example 48 | Example 49 | Example 50 | Example 51 | Example 52 | Example 53 | Example 54 | Example 55 |
|---|---|---|---|---|---|---|---|---|
| M47 | M48 | M49 | M50 | M51 | M52 | M53 | M54 | M55 |
| MB30 | MB31 | MB32 | MB33 | MB34 | MB35 | MB36 | MB37 | MB38 |
| 17.5% | 18.0% | 18.0% | 18.0% | 18.0% | 18.0% | 18.0% | 18.0% | 18.0% |
| 1.93% | 2.88% | | | | | | | 2.52% |
| | | | | | | | | |
| | | 1.98% | 2.88% | | | | | |
| | | | | | | | | |
| | | | | 1.98% | 2.88% | | | |
| | | | | | | 1.98% | 2.88% | |
| | | | | | | | | |
| | | | | | | | | |
| | | | | | | | | |
| | | | | | | | | 0.72% |
| 1.58% | 0.72% | 1.62% | 0.72% | 1.62% | 0.72% | 1.62% | 0.72% | 0.36% |
| | | | | | | | | |
| | | | | | | | | |
| | | | | | | | | |
| 2.5% | 2.5% | 2.5% | 2.5% | 2.5% | 2.5% | 2.5% | 2.5% | 2.5% |
| | | | | | | | | |
| 20.0% | 20.0% | 20.0% | 20.0% | 20.0% | 20.0% | 20.0% | 20.0% | 20.0% |
| | | | | | | | | |
| | | | | | | | | |
| | | | | | | | | |
| | | | | | | | | |
| | | | | | | | | |
| 5.0% | 5.0% | 5.0% | 5.0% | 5.0% | 5.0% | 5.0% | 5.0% | 5.0% |
| | | | | | | | | |
| | | | | | | | | |
| | | | | | | | | |
| | | | | | | | | |
| | | | | | | | | |
| 1.0% | 1.0% | 1.0% | 1.0% | 1.0% | 1.0% | 1.0% | 1.0% | 1.0% |
| | | | | | | | | |
| | | | | | | | | |
| | | | | | | | | |
| | | | | | | | | |
| | | | | | | | | |
| | | | | | | | | |
| 10.0% | 10.0% | 10.0% | 10.0% | 10.0% | 10.0% | 10.0% | 10.0% | 10.0% |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| Balance | Balance | Balance | Balance | Balance | Balance | Balance | Balance | Balance |
| 1.9% | 2.9% | 2.0% | 2.9% | 2.0% | 2.9% | 2.0% | 2.9% | 3.2% |
| 55% | 80% | 55% | 80% | 55% | 80% | 55% | 80% | 90% |
| 69.4 | 46.4 | 86.5 | 59.5 | 67.4 | 46.4 | 88.9 | 61.2 | 42.4 |
| 0.00 | 0.00 | 0.00 | 0.00 | 0.00 | 0.00 | 0.00 | 0.00 | 0.00 |
| 0.0% | 0.0% | 0.0% | 0.0% | 0.0% | 0.0% | 0.0% | 0.0% | 0.0% |
| 0.0% | 0.0% | 0.0% | 0.0% | 0.0% | 0.0% | 0.0% | 0.0% | 0.0% |
| 189.4 | 189.4 | 189.4 | 189.4 | 189.4 | 189.4 | 189.4 | 189.4 | 189.4 |
| AA | AA | AA | AA | AA | AA | AA | AA | AA |
| AA | AA | AA | AA | AA | AA | AA | AA | AA |
| B | B | B | B | B | B | B | B | B |
| A | A | A | A | A | A | A | A | A |
| AA | AA | A | AA | A | AA | A | A | AA |
| A | A | A | A | A | A | A | A | A |

[TABLE 5-4]

**Table 5 (continued from previous page)**

| | Example 56 | Example 57 | Example 58 | Example 59 | Example 60 | Example 61 | Example 62 | Example 63 | Example 64 | Example 65 | Example 66 |
|---|---|---|---|---|---|---|---|---|---|---|---|
| | M56 | M57 | M58 | M59 | M60 | M61 | M62 | M63 | M64 | M65 | M66 |
| Magenta pigment dispersion | MB39 | MB40 | MB41 | MB42 | MB43 | MB44 | MB45 | MB46 | MB47 | MB48 | MB49 |
| | 18.0% | 18.0% | 18.0% | 18.0% | 18.0% | 18.0% | 18.0% | 18.0% | 18.0% | 18.0% | 18.0% |
| P.R.150 | 1.98% | 2.88% | 1.98% | 2.88% | 2.88% | | | | | | |
| P.R.146 | | | | | | | | | | | |
| P.R.147 | | | | | | | | | | | |
| P.R.170 | | | | | | | | | | | |
| P.R.266 | | | | | | | | | | | |
| P.R.269 | | | | | | | | | | | |
| P.R.1 | | | | | | | | | | | |
| P.R.166 | | | | | | | | | | | |
| P.R.48:1 | | | | | | | | | | | |
| P.R.48:3 | | | | | | 1.26% | 1.80% | 1.26% | 1.80% | 1.26% | 1.80% |
| P.R.122 | | | | | | 2.34% | 1.80% | | | | |
| P.R.202 | 1.62% | 0.72% | | | | | | 2.34% | 1.80% | | |
| P.R.209 | | | 1.62% | 0.72% | | | | | | 2.34% | 1.80% |
| QCD solid solution | | | | | 0.72% | | | | | | |
| EG | | | | | | 5.0% | 5.0% | 5.0% | 5.0% | 5.0% | 5.0% |
| DEG | | | | | | | | | | | |
| PG | 10.0% | 10.0% | 10.0% | 10.0% | 10.0% | | | | | | |
| DPG | 5.0% | 5.0% | 5.0% | 5.0% | 5.0% | | | | | | |
| TEG | | | | | | | | | | | |
| TPG | 2.5% | 2.5% | 2.5% | 2.5% | 2.5% | | | | | | |
| 2Py | | | | | | | | | | | |
| NMP | | | | | | | | | | | |
| 1,2-BD | 10.0% | 10.0% | 10.0% | 10.0% | 10.0% | 20.0% | 20.0% | 20.0% | 20.0% | 20.0% | 20.0% |
| 1,2-HD | | | | | | 5.0% | 5.0% | 5.0% | 5.0% | 5.0% | 5.0% |
| DPM | | | | | | | | | | | |
| BDG | | | | | | | | | | | |
| GLY | | | | | | | | | | | |
| Surfynol 104 | | | | | | | | | | | |
| Surfynol 440 | 1.0% | 1.0% | 1.0% | 1.0% | 1.0% | 1.0% | 1.0% | 1.0% | 1.0% | 1.0% | 1.0% |
| Surfynol 485 | | | | | | | | | | | |
| Emalex 703 | | | | | | | | | | | |
| Emalex 630 | | | | | | | | | | | |
| Emalex 750 | | | | | | | | | | | |
| Nonion K-2100W | | | | | | | | | | | |
| TegoWet280 | | | | | | | | | | | |
| Binder resin 1 | 10.0% | 10.0% | 10.0% | 10.0% | 10.0% | 10.0% | 10.0% | 10.0% | 10.0% | 10.0% | 10.0% |
| Binder resin 2 | | | | | | | | | | | |
| Binder resin 3 | | | | | | | | | | | |
| Binder resin 4 | | | | | | | | | | | |
| Binder resin 5 | | | | | | | | | | | |
| Binder resin 6 | | | | | | | | | | | |
| Binder resin 7 | | | | | | | | | | | |
| Binder resin 8 | | | | | | | | | | | |
| Joncryl 537J | | | | | | | | | | | |
| Neocryl A-1091 | | | | | | | | | | | |
| Neocryl A-1092 | | | | | | | | | | | |
| Water | Balance | Balance | Balance | Balance | Balance | Balance | Balance | Balance | Balance | Balance | Balance |
| Amount of azo pigment | 2.0% | 2.9% | 2.0% | 2.9% | 2.9% | 1.3% | 1.8% | 1.3% | 1.8% | 1.3% | 1.8% |
| Ratio of azo pigment | 55% | 80% | 55% | 80% | 80% | 35% | 50% | 35% | 50% | 35% | 50% |
| Molar amount of diol-based solvent (A-1) | 37.5 | 25.8 | 37.5 | 25.8 | 25.8 | 32.4 | 22.7 | 32.4 | 22.7 | 32.4 | 22.7 |
| Molar amount of diol-based solvent (A-2) | 0.08 | 0.08 | 0.08 | 0.08 | 0.08 | 0.00 | 0.00 | 0.00 | 0.00 | 0.00 | 0.00 |
| Amount of soluvent (1) | 2.5% | 2.5% | 2.5% | 2.5% | 2.5% | 0.0% | 0.0% | 0.0% | 0.0% | 0.0% | 0.0% |
| Amount of soluvent (2) | 0.0% | 0.0% | 0.0% | 0.0% | 0.0% | 0.0% | 0.0% | 0.0% | 0.0% | 0.0% | 0.0% |
| Weighted average boiling point | 204.6 | 204.6 | 204.6 | 204.6 | 204.6 | 197.5 | 197.5 | 197.5 | 197.5 | 197.5 | 197.5 |
| Storage stability | AA | AA | AA | AA | AA | AA | AA | AA | AA | AA | AA |
| Discharge stability | AA | AA | AA | AA | AA | AA | AA | AA | AA | AA | AA |
| Voids of printed matter | B | B | B | B | B | B | B | B | B | B | B |
| Density of printed matter | A | A | A | A | A | A | A | A | A | A | A |
| Chroma of printed matter | A | AA | A | AA | AA | A | AA | A | A | A | A |
| Drying properties of printed matter | A | A | A | A | A | A | A | A | A | A | A |

**Table 5 (continued from previous page)**

| Example 67 | Example 68 | Example 69 | Example 70 | Example 71 | Example 72 | Example 73 | Example 74 |
|---|---|---|---|---|---|---|---|
| M67 | M68 | M69 | M70 | M71 | M72 | M73 | M74 |
| MB15 | MB1 | MB50 | MB51 | MB52 | MB53 | MB54 | MB55 |
| 18.0% | 18.5% | 18.8% | 18.8% | 18.8% | 18.8% | 18.8% | 18.8% |
| 1.80% | 1.85% | 3.38% | 3.38% | 3.38% | 3.38% | 3.38% | 3.38% |
| | | | | | | | |
| 1.80% | | | | | | | |
| | | | | | | | |
| | | | | | | | |
| | | | | | | | |
| | | | | | | | |
| | | | | | | | |
| | | | | | | | |
| | 1.85% | 0.38% | 0.38% | 0.38% | 0.38% | 0.38% | 0.38% |
| | | | | | | | |
| | | | | | | | |
| | | | | | | | |
| | | | | | | | |
| | | | | | | | |
| | 14.5% | | | | | | |
| 25.0% | 5.5% | 25.0% | 25.0% | 25.0% | 25.0% | 25.0% | 25.0% |
| | | | | | | | |
| | | | | | | | |
| | | | | | | | |
| | | | | | | | |
| | | | | | | | |
| | | | | | | | |
| | | | | | | | |
| | | | | | | | |
| 5.0% | 5.0% | 5.0% | 5.0% | 5.0% | 5.0% | 5.0% | 5.0% |
| | | | | | | | |
| | | | | | | | |
| 1.0% | 1.0% | 1.0% | 1.0% | 1.0% | 1.0% | 1.0% | 1.0% |
| | | | | | | | |
| | | | | | | | |
| | | | | | | | |
| | | | | | | | |
| | | | | | | | |
| | | | | | | | |
| 10.0% | 10.0% | 10.0% | 10.0% | 10.0% | 10.0% | 10.0% | 10.0% |
| | | | | | | | |
| | | | | | | | |
| | | | | | | | |
| | | | | | | | |
| | | | | | | | |
| | | | | | | | |
| | | | | | | | |
| | | | | | | | |
| | | | | | | | |
| | | | | | | | |
| Balance | Balance | Balance | Balance | Balance | Balance | Balance | Balance |
| 3.6% | 3.7% | 3.8% | 3.8% | 3.8% | 3.8% | 3.8% | 3.8% |
| 100% | 100% | 100% | 100% | 100% | 100% | 100% | 100% |
| 45.2 | 26.6 | 39.1 | 39.1 | 39.1 | 39.1 | 39.1 | 39.1 |
| 0.00 | 0.00 | 0.00 | 0.00 | 0.00 | 0.00 | 0.00 | 0.00 |
| 0.0% | 0.0% | 0.0% | 0.0% | 0.0% | 0.0% | 0.0% | 0.0% |
| 0.0% | 0.0% | 0.0% | 0.0% | 0.0% | 0.0% | 0.0% | 0.0% |
| 195.0 | 228.9 | 195.0 | 195.0 | 195.0 | 195.0 | 195.0 | 195.0 |
| AA | A | AA | AA | A | A | AA | AA |
| AA | AA | AA | AA | AA | A | AA | A |
| B | A | B | B | B | B | B | B |
| A | A | AA | AA | A | A | A | AA |
| AA | AA | AA | AA | AA | AA | AA | AA |
| A | B | B | B | B | B | B | B |

[TABLE 5-5]

**Table 5 (continued from previous page)**

| | Example 75 | Example 76 | Example 77 | Example 78 | Example 79 | Example 80 | Example 81 | Example 82 | Example 83 | Example 84 |
|---|---|---|---|---|---|---|---|---|---|---|
| | M75 | M76 | M77 | M78 | M79 | M80 | M81 | M82 | M83 | M84 |
| Magenta pigment dispersion | MB1 | MB1 | MB1 | MB1 | MB1 | MB1 | MB1 | MB1 | MB56 / MB57 | MB58 / MB59 |
| | 18.5% | 18.5% | 18.5% | 18.5% | 18.5% | 18.5% | 18.5% | 18.5% | 9.3% / 9.3% | 16.9% / 1.9% |
| P.R.150 | 1.85% | 1.85% | 1.85% | 1.85% | 1.85% | 1.85% | 1.85% | 1.85% | 1.85% | 3.38% |
| P.R.146 | | | | | | | | | | |
| P.R.147 | | | | | | | | | | |
| P.R.170 | | | | | | | | | | |
| P.R.266 | | | | | | | | | | |
| P.R.269 | | | | | | | | | | |
| P.R.1 | | | | | | | | | | |
| P.R.166 | | | | | | | | | | |
| P.R.48:1 | | | | | | | | | | |
| P.R.48:3 | 1.85% | 1.85% | 1.85% | 1.85% | 1.85% | 1.85% | 1.85% | 1.85% | 1.85% | 0.38% |
| P.R.122 | | | | | | | | | | |
| P.R.202 | | | | | | | | | | |
| P.R.209 | | | | | | | | | | |
| QCD solid solution | | | | | | | | | | |
| EG | | | | | | | | | | |
| DEG | | | | | | | | | | |
| PG | 25.0% | 25.0% | 25.0% | 25.0% | 25.0% | 25.0% | 25.0% | 25.0% | 30.0% | 30.0% |
| DPG | | | | | | | | | | |
| TEG | | | | | | | | | | |
| TPG | | | | | | | | | | |
| 2Py | | | | | | | | | | |
| NMP | | | | | | | | | | |
| 1,2-BD | | | | | | | | | | |
| 1,2-HD | | | | | | | | | | |
| DPM | | | | | | | | | | |
| BDG | 5.0% | 5.0% | 5.0% | 5.0% | 5.0% | 5.0% | 5.0% | 5.0% | 5.0% | 5.0% |
| GLY | | | | | | | | | | |
| Surfynol 104 | 1.0% | | | | | | | | | |
| Surfynol 440 | | | | | | | | 1.0% | 1.0% | 1.0% |
| Surfynol 485 | | 1.0% | | | | | | | | |
| Emalex 703 | | | 1.0% | | | | | | | |
| Emalex 630 | | | | 1.0% | | | | | | |
| Emalex 750 | | | | | 1.0% | | | | | |
| Nonion K-2100W | | | | | | 1.0% | | | | |
| TegoWet280 | | | | | | | 1.0% | 1.0% | | |
| Binder resin 1 | 10.0% | 10.0% | 10.0% | 10.0% | 10.0% | 10.0% | 10.0% | 10.0% | 10.0% | 10.0% |
| Binder resin 2 | | | | | | | | | | |
| Binder resin 3 | | | | | | | | | | |
| Binder resin 4 | | | | | | | | | | |
| Binder resin 5 | | | | | | | | | | |
| Binder resin 6 | | | | | | | | | | |
| Binder resin 7 | | | | | | | | | | |
| Binder resin 8 | | | | | | | | | | |
| Joncryl 537J | | | | | | | | | | |
| Neocryl A-1091 | | | | | | | | | | |
| Neocryl A-1092 | | | | | | | | | | |
| Water | Balance | Balance | Balance | Balance | Balance | Balance | Balance | Balance | Balance | Balance |
| Amount of azo pigment | 3.7% | 3.7% | 3.7% | 3.7% | 3.7% | 3.7% | 3.7% | 3.7% | 3.7% | 3.8% |
| Ratio of azo pigment | 100% | 100% | 100% | 100% | 100% | 100% | 100% | 100% | 100% | 100% |
| Molar amount of diol-based solvent (A-1) | 41.8 | 41.8 | 41.8 | 41.8 | 41.8 | 41.8 | 41.8 | 41.8 | 50.2 | 46.8 |
| Molar amount of diol-based solvent (A-2) | 0.00 | 0.00 | 0.00 | 0.00 | 0.00 | 0.00 | 0.00 | 0.00 | 0.00 | 0.00 |
| Amount of soluvent (1) | 0.0% | 0.0% | 0.0% | 0.0% | 0.0% | 0.0% | 0.0% | 0.0% | 0.0% | 0.0% |
| Amount of soluvent (2) | 0.0% | 0.0% | 0.0% | 0.0% | 0.0% | 0.0% | 0.0% | 0.0% | 0.0% | 0.0% |
| Weighted average boiling point | 195.0 | 195.0 | 195.0 | 195.0 | 195.0 | 195.0 | 195.0 | 195.0 | 194.0 | 194.0 |
| Storage stability | A | AA | AA | AA | AA | A | A | AA | A | AA |
| Discharge stability | A | AA | AA | AA | AA | AA | A | AA | AA | AA |
| Voids of printed matter | B | B | B | B | B | B | B | A | B | B |
| Density of printed matter | A | A | A | A | A | A | A | AA | B | AA |
| Chroma of printed matter | A | AA | AA | AA | AA | AA | A | AA | AA | AA |
| Drying properties of printed matter | A | A | A | A | A | A | A | A | A | B |

**Table 5 (continued from previous page)**

| Example 85 | Example 86 | Example 87 | Example 88 | Example 89 | Example 90 | Example 91 | Example 92 | Example 93 | Example 94 |
|---|---|---|---|---|---|---|---|---|---|
| M85 | M86 | M87 | M88 | M89 | M90 | M91 | M92 | M93 | M94 |
| MB2 | MB2 | MB2 | MB2 | MB2 | MB2 | MB2 | MB2 | MB2 | MB2 |
| 18.8% | 18.8% | 18.8% | 18.8% | 18.8% | 18.8% | 18.8% | 18.8% | 18.8% | 18.8% |
| 3.38% | 3.38% | 3.38% | 3.38% | 3.38% | 3.38% | 3.38% | 3.38% | 3.38% | 3.38% |
| | | | | | | | | | |
| | | | | | | | | | |
| | | | | | | | | | |
| | | | | | | | | | |
| | | | | | | | | | |
| | | | | | | | | | |
| | | | | | | | | | |
| | | | | | | | | | |
| 0.38% | 0.38% | 0.38% | 0.38% | 0.38% | 0.38% | 0.38% | 0.38% | 0.38% | 0.38% |
| | | | | | | | | | |
| | | | | | | | | | |
| | | | | | | | | | |
| | | | | | | | | | |
| | | | | | | | | | |
| | | | | | | | | | |
| 32.5% | 32.5% | 32.5% | 32.5% | 32.5% | 32.5% | 32.5% | 32.5% | 32.5% | 32.5% |
| | | | | | | | | | |
| | | | | | | | | | |
| | | | | | | | | | |
| | | | | | | | | | |
| | | | | | | | | | |
| | | | | | | | | | |
| | | | | | | | | | |
| | | | | | | | | | |
| 5.0% | 5.0% | 5.0% | 5.0% | 5.0% | 5.0% | 5.0% | 5.0% | 5.0% | 5.0% |
| | | | | | | | | | |
| | | | | | | | | | |
| 1.0% | 1.0% | 1.0% | 1.0% | 1.0% | 1.0% | 1.0% | 1.0% | 1.0% | 1.0% |
| | | | | | | | | | |
| | | | | | | | | | |
| | | | | | | | | | |
| | | | | | | | | | |
| | | | | | | | | | |
| | | | | | | | | | |
| | | | | | | | | | |
| 10.0% | | | | | | | | | |
| | 10.0% | | | | | | | | |
| | | 10.0% | | | | | | | |
| | | | 10.0% | | | | | | |
| | | | | 10.0% | | | | | |
| | | | | | 10.0% | | | | |
| | | | | | | 10.0% | | | |
| | | | | | | | 10.0% | | |
| | | | | | | | | 10.0% | |
| | | | | | | | | | 10.0% |
| Balance | Balance | Balance | Balance | Balance | Balance | Balance | Balance | Balance | Balance |
| 3.8% | 3.8% | 3.8% | 3.8% | 3.8% | 3.8% | 3.8% | 3.8% | 3.8% | 3.8% |
| 100% | 100% | 100% | 100% | 100% | 100% | 100% | 100% | 100% | 100% |
| 50.8 | 50.8 | 50.8 | 50.8 | 50.8 | 50.8 | 50.8 | 50.8 | 50.8 | 50.8 |
| 0.00 | 0.00 | 0.00 | 0.00 | 0.00 | 0.00 | 0.00 | 0.00 | 0.00 | 0.00 |
| 0.0% | 0.0% | 0.0% | 0.0% | 0.0% | 0.0% | 0.0% | 0.0% | 0.0% | 0.0% |
| 0.0% | 0.0% | 0.0% | 0.0% | 0.0% | 0.0% | 0.0% | 0.0% | 0.0% | 0.0% |
| 193.6 | 193.6 | 193.6 | 193.6 | 193.6 | 193.6 | 193.6 | 193.6 | 193.6 | 193.6 |
| A | A | A | A | A | A | B | B | A | B |
| A | A | B | A | A | B | B | B | B | B |
| B | B | B | B | B | B | B | B | B | B |
| A | A | B | A | A | A | A | A | A | A |
| AA | AA | A | A | AA | AA | A | AA | AA | A |
| B | B | B | B | B | B | B | A | A | B |

[TABLE 5-6]

**Table 5 (continued from previous page)**

| | Example 95 | Example 96 | Example 97 | Example 98 | Example 99 | Example 100 | Example 101 | Example 102 | Example 103 | Example 104 |
|---|---|---|---|---|---|---|---|---|---|---|
| | M95 | M96 | M97 | M98 | M99 | M100 | M101 | M102 | M103 | M104 |
| Magenta pigment dispersion | MB30 | MB30 | MB30 | MB30 | MB32 | MB44 | MB30 | MB30 | MB30 | MB10 |
| | 17.5% | 17.5% | 17.5% | 17.5% | 18.0% | 18.0% | 17.5% | 17.5% | 17.5% | 17.5% |
| P.R.150 | 1.93% | 1.93% | 1.93% | 1.93% | | | 1.93% | 1.93% | 1.93% | 1.75% |
| P.R.146 | | | | | | | | | | |
| P.R.147 | | | | | 1.98% | | | | | |
| P.R.170 | | | | | | | | | | |
| P.R.266 | | | | | | | | | | |
| P.R.269 | | | | | | | | | | |
| P.R.1 | | | | | | | | | | |
| P.R.166 | | | | | | | | | | |
| P.R.48:1 | | | | | | | | | | |
| P.R.48:3 | | | | | | 1.26% | | | | |
| P.R.122 | 1.58% | 1.58% | 1.58% | 1.58% | 1.62% | 2.34% | 1.58% | 1.58% | 1.58% | 1.75% |
| P.R.202 | | | | | | | | | | |
| P.R.209 | | | | | | | | | | |
| QCD solid solution | | | | | | | | | | |
| EG | 2.5% | 2.5% | 2.5% | 2.5% | 2.5% | 5.0% | 2.5% | 2.5% | 2.5% | 2.5% |
| DEG | | | | | | | | | | |
| PG | 20.0% | 20.0% | 20.0% | 20.0% | 20.0% | | 20.0% | 20.0% | 20.0% | 17.5% |
| DPG | | | | | | | | | | |
| TEG | | | | | | | | | | |
| TPG | | | | | | | | | | |
| 2Py | | | | | | | | | | |
| NMP | | | | | | | | | | |
| 1,2-BD | 5.0% | 5.0% | 5.0% | 5.0% | | | 5.0% | 5.0% | 5.0% | 5.0% |
| 1,2-HD | | | | | | 5.0% | | | | |
| DPM | | | | | 5.0% | 20.0% | | | | |
| BDG | | | | | | | | | | |
| GLY | | | | | | | | | | |
| Surfynol 104 | | | | | | | 1.0% | | | |
| Surfynol 440 | 1.0% | 1.0% | 1.0% | 1.0% | 1.0% | 1.0% | | | 1.0% | 1.0% |
| Surfynol 485 | | | | | | | | | | |
| Emalex 703 | | | | | | | | | | |
| Emalex 630 | | | | | | | | | | |
| Emalex 750 | | | | | | | | | | |
| Nonion K-2100W | | | | | | | | | | |
| TegoWet280 | | | | | | | | 1.0% | 1.0% | |
| Binder resin 1 | | | | | 10.0% | 10.0% | 10.0% | 10.0% | 10.0% | 10.0% |
| Binder resin 2 | | | | | | | | | | |
| Binder resin 3 | | | | | | | | | | |
| Binder resin 4 | 10.0% | | | | | | | | | |
| Binder resin 5 | | 10.0% | | | | | | | | |
| Binder resin 6 | | | | | | | | | | |
| Binder resin 7 | | | 10.0% | | | | | | | |
| Binder resin 8 | | | | 10.0% | | | | | | |
| Joncryl 537J | | | | | | | | | | |
| Neocryl A-1091 | | | | | | | | | | |
| Neocryl A-1092 | | | | | | | | | | |
| Water | Balance | Balance | Balance | Balance | Balance | Balance | Balance | Balance | Balance | Balance |
| Amount of azo pigment | 1.9% | 1.9% | 1.9% | 1.9% | 2.0% | 1.3% | 1.9% | 1.9% | 1.9% | 1.8% |
| Ratio of azo pigment | 55% | 55% | 55% | 55% | 55% | 35% | 55% | 55% | 55% | 50% |
| Molar amount of diol-based solvent (A-1) | 69.4 | 69.4 | 69.4 | 69.4 | 86.5 | 32.4 | 69.4 | 69.4 | 69.4 | 68.0 |
| Molar amount of diol-based solvent (A-2) | 0.00 | 0.00 | 0.00 | 0.00 | 0.00 | 0.00 | 0.00 | 0.00 | 0.00 | 0.00 |
| Amount of soluvent (1) | 0.0% | 0.0% | 0.0% | 0.0% | 0.0% | 0.0% | 0.0% | 0.0% | 0.0% | 0.0% |
| Amount of soluvent (2) | 0.0% | 0.0% | 0.0% | 0.0% | 0.0% | 0.0% | 0.0% | 0.0% | 0.0% | 0.0% |
| Weighted average boiling point | 189.4 | 189.4 | 189.4 | 189.4 | 188.8 | 195.5 | 189.4 | 189.4 | 189.4 | 189.5 |
| Storage stability | AA | AA | AA | A | A | A | AA | AA | AA | AA |
| Discharge stability | AA | AA | AA | A | A | A | AA | AA | AA | A |
| Voids of printed matter | B | B | B | B | B | B | A | A | A | B |
| Density of printed matter | B | A | A | A | A | A | A | A | AA | A |
| Chroma of printed matter | AA | AA | AA | A | A | A | AA | AA | AA | A |
| Drying properties of printed matter | A | A | A | A | A | A | A | A | A | A |

Table 5 (continued from previous page)

| Example 105 | Example 106 | Example 107 | Example 108 | Example 109 | Example 110 | Example 111 | Example 112 | Example 113 | Example 114 |
|---|---|---|---|---|---|---|---|---|---|
| M105 | M106 | M107 | M108 | M109 | M110 | M111 | M112 | M113 | M114 |
| MB19 | MB20 | MB1 | MB1 | MB1 | MB30 | MB30 | MB31 | MB32 | MB34 |
| 18.8% | 18.5% | 18.5% | 18.5% | 18.5% | 17.5% | 17.5% | 18.0% | 17.5% | 17.5% |
| | | 1.85% | 1.85% | 1.85% | 1.93% | 1.93% | 2.88% | | |
| 3.38% | 1.85% | | | | | | | | |
| | | | | | | | | 1.93% | |
| | | | | | | | | | |
| | | | | | | | | | 1.93% |
| | | | | | | | | | |
| | | | | | | | | | |
| | | | | | | | | | |
| | | | | | | | | | |
| 0.38% | 1.85% | 1.85% | 1.85% | 1.85% | | | | | |
| | | | | | 1.58% | 1.58% | 0.72% | 1.58% | 1.58% |
| | | | | | | | | | |
| | | | | | | | | | |
| | | | | | | | | | |
| | | | | | 2.5% | 2.5% | | 2.5% | 2.5% |
| | | | | | | | | | |
| 25.0% | 25.0% | 3.0% | 35.0% | 50.0% | 17.5% | 25.0% | 40.0% | 12.0% | 17.5% |
| | | | | | | | | | |
| | | | | | | | | | |
| | | | | | | | | | |
| | | | | | | | | | |
| | | | | | | | | | |
| | | 22.5% | | | 5.0% | | | 5.0% | 5.0% |
| | | | | | | | | | |
| | | | | | | | | | |
| 5.0% | 5.0% | 5.0% | 5.0% | 5.0% | | | | | |
| | | | | | | | | | |
| | | | | | | | | | |
| 1.0% | 1.0% | 1.0% | 1.0% | 1.0% | 1.0% | 1.0% | 1.0% | 1.0% | 1.0% |
| | | | | | | | | | |
| | | | | | | | | | |
| | | | | | | | | | |
| | | | | | | | | | |
| | | | | | | | | | |
| | | | | | | | | | |
| 10.0% | 10.0% | 10.0% | 10.0% | 10.0% | 10.0% | 10.0% | 10.0% | 10.0% | 10.0% |
| | | | | | | | | | |
| | | | | | | | | | |
| | | | | | | | | | |
| | | | | | | | | | |
| | | | | | | | | | |
| | | | | | | | | | |
| | | | | | | | | | |
| | | | | | | | | | |
| | | | | | | | | | |
| | | | | | | | | | |
| Balance | Balance | Balance | Balance | Balance | Balance | Balance | Balance | Balance | Balance |
| 3.8% | 3.7% | 3.7% | 3.7% | 3.7% | 1.9% | 1.9% | 2.9% | 1.9% | 1.9% |
| 100% | 100% | 100% | 100% | 100% | 55% | 55% | 80% | 55% | 55% |
| 52.3 | 49.2 | 5.0 | 58.6 | 83.7 | 61.8 | 84.4 | 80.4 | 58.1 | 61.8 |
| 0.00 | 0.00 | 0.00 | 0.00 | 0.00 | 0.00 | 0.00 | 0.00 | 0.00 | 0.00 |
| 0.0% | 0.0% | 0.0% | 0.0% | 0.0% | 0.0% | 0.0% | 0.0% | 0.0% | 0.0% |
| 0.0% | 0.0% | 0.0% | 0.0% | 0.0% | 0.0% | 0.0% | 0.0% | 0.0% | 0.0% |
| 195.0 | 195.0 | 197.1 | 193.3 | 191.8 | 189.5 | 188.8 | 188.0 | 189.9 | 189.5 |
| AA | A | A | AA | AA | AA | AA | AA | AA | AA |
| A | A | B | AA | A | AA | AA | AA | A | AA |
| B | B | B | B | A | B | B | B | B | B |
| A | A | A | A | A | A | A | A | A | A |
| A | AA | A | AA | AA | AA | AA | AA | A | A |
| A | A | A | A | B | A | A | A | A | A |

[Table 6]

Table 6

| | | | | | Comparative Example 1 | Comparative Example 2 | Comparative Example 3 | Comparative Example 4 |
|---|---|---|---|---|---|---|---|---|
| | | | | | M115 | M116 | M117 | M118 |
| Pigment dispersion | Magenta pigment dispersion (Pigment concentration = 20%) | | | Type | MB60 | MB56 | MB61 | MB1 |
| | | | | Amount | 17.0% | 18.5% | 20.0% | 45.0% |
| | | Pigment | Naphthol AS | P.R.150 | 0.68% | 3.70% | | 4.50% |
| | | | | P.R.146 | | | | |
| | | | | P.R.147 | | | | |
| | | | | P.R.170 | | | | |
| | | | | P.R.266 | | | | |
| | | | | P.R.269 | | | | |
| | | | Other azo | P.R.1 | | | | |
| | | | | P.R.166 | | | | |
| | | | Azo-lake | P.R.48:1 | | | | |
| | | | | P.R.48:3 | | | | 4.50% |
| | | | Quinacridone | P.R.122 | 2.72% | | 4.00% | |
| | | | | P.R.202 | | | | |
| | | | | P.R.209 | | | | |
| | | | | QCD solid solution | | | | |
| Water-soluble organic solvent | Water-soluble organic solvent (A-1) | EG (boiling point: 197°C) | | HLB: 11.0 | 2.5% | | | |
| | | DEG (boiling point: 244°C) | | HLB: 9.4 | | | | |
| | | PG (boiling point: 188°C) | | HLB: 8.9 | 20.0% | 25.0% | 25.0% | 42.5% |
| | | DPG (boiling point: 231°C) | | HLB: 7.5 | | | | |
| | Water-soluble organic solvent (A-2) | TEG (boiling point: 288°C) | | HLB: 8.8 | | | | |
| | | TPG (boiling point: 273°C) | | HLB: 6.9 | | | | |
| | Cyclic amide-based solvent | 2Py (boiling point: 245°C) | | HLB: 10.1 | | | | |
| | | NMP (boiling point: 202°C) | | HLB: 8.5 | | | | |
| | Other water-soluble organic solvents | 1,2-BD (boiling point: 191°C) | | HLB: 7.6 | 5.0% | | | |
| | | 1,2-HD (boiling point: 224°C) | | HLB: 5.8 | | | | |
| | | DPM (boiling point: 188°C) | | HLB: 2.3 | | | | |
| | | BDG (boiling point: 230°C) | | HLB: 13.0 | | 5.0% | 5.0% | 5.0% |
| | | GLY (boiling point: 290°C) | | HLB: 11.1 | | | | |
| Surfactant | Acetylene-based surfactant | Surfynol 104 | | HLB: 3.0 | | | | |
| | | Surfynol 440 | | HLB: 9.9 | 1.0% | 1.0% | 1.0% | 1.0% |
| | | Surfynol 485 | | HLB: 17.5 | | | | |
| | Glycol ether-based surfactant | Emalex 703 | | HLB: 9.4 | | | | |
| | | Emalex 630 | | HLB: 16.7 | | | | |
| | | Emalex 750 | | HLB: 18.6 | | | | |
| | | Nonion K-2100W | | HLB: 19.3 | | | | |
| | Siloxane-based surfactant | TegoWet280 | | HLB: 3.5 | | | | |
| Binder resin | Aqueous solution of water-soluble resin (solid fraction: 40%) | Binder resin 1 | | Acid value: 33 Tg: 107 | 10.0% | 10.0% | 10.0% | 10.0% |
| | | Binder resin 2 | | Acid value: 78 Tg: 103 | | | | |
| | | Binder resin 3 | | Acid value: 55 Tg: 104 | | | | |
| | | Binder resin 4 | | Acid value: 38 Tg: 128 | | | | |
| | | Binder resin 5 | | Acid value: 36 Tg: 118 | | | | |
| | | Binder resin 6 | | Acid value: 39 Tg: 53 | | | | |
| | | Binder resin 7 | | Acid value: 38 Tg: 41 | | | | |
| | | Binder resin 8 | | Acid value: 39 Tg: 30 | | | | |
| | Aqueous deispersion liquid of resin fine particles (solid fraction: 40%) | Joncryl 537J | | Acid value: 40 Tg: 49 | | | | |
| | | Neocryl A-1091 | | Acid value: 34 Tg: 98 | | | | |
| | | Neocryl A-1092 | | Acid value: 24 Tg: 9 | | | | |
| Water | | | | | Balance | Balance | Balance | Balance |
| Parameters | Amount of azo pigment | | | | 0.7% | 3.7% | 0.0% | 9.0% |
| | Ratio of azo pigment (in total mass of pigment) | | | | 20% | 100% | 0% | 100% |
| | Molar amount of diol-based solvent (A-1) relative to molar amount of azo pigment (times) | | | | 196.3 | 39.1 | --- | 29.2 |
| | Molar amount of diol-based solvent (A-2) relative to molar amount of diol-based solvent (A-1) (times) | | | | 0.00 | 0.00 | 0.00 | 0.00 |
| | Amount of water-soluble organic solvent having a boiling point of 250°C or higher (1) | | | | 0.0% | 0.0% | 0.0% | 0.0% |
| | Amount of water-soluble organic solvent having a boiling point of 290°C or higher (2) | | | | 0.0% | 0.0% | 0.0% | 0.0% |
| | Weighted average boiling point of water-soluble organic solvent (°C) | | | | 189.4 | 195.0 | 195.0 | 192.4 |
| Evaluations | Evaluation 1 | Storage stability | | | AA | B | AA | B |
| | Evaluation 2 | Discharge stability | | | AA | C | AA | C |
| | Evaluation 3 | Voids of printed matter | | | B | B | B | B |
| | Evaluation 4 | Density of printed matter | | | B | A | C | AA |
| | Evaluation 5 | Chroma of printed matter | | | C | AA | C | A |
| | Evaluation 6 | Drying properties of printed matter | | | A | A | A | B |

**Table 6 (continued from previous page)**

| Comparative Example 5 | Comparative Example 6 | Comparative Example 7 | Comparative Example 8 | Comparative Example 9 |
|---|---|---|---|---|
| M119 | M120 | M121 | M122 | M123 |
| MB5 | MB5 | MB1 | MB1 | MB1 |
| 7.1% | 7.1% | 18.5% | 18.5% | 18.5% |
| | | 1.85% | 1.85% | 1.85% |
| 0.50% | 0.50% | | | |
| | | | | |
| | | | | |
| | | | | |
| | | | | |
| | | | | |
| | | | | |
| | | | | |
| | | 1.85% | 1.85% | 1.85% |
| 0.93% | 0.93% | | | |
| | | | | |
| | | | | |
| | | | | |
| | | | | |
| | | | | |
| 0.3% | 17.5% | 24.5% | 25.0% | 35.0% |
| | | | | |
| | | 5.5% | | |
| | | | | |
| | | | 5.0% | |
| | | | | |
| 5.0% | 5.0% | | | |
| | | | | |
| | | | | |
| | | | | 5.0% |
| | | | | |
| | | | | |
| 1.0% | 1.0% | 1.0% | 1.0% | |
| | | | | |
| | | | | |
| | | | | |
| | | | | |
| | | | | |
| | | | | |
| 10.0% | 10.0% | 10.0% | 10.0% | 10.0% |
| | | | | |
| | | | | |
| | | | | |
| | | | | |
| | | | | |
| | | | | |
| | | | | |
| | | | | |
| | | | | |
| | | | | |
| Balance | Balance | Balance | Balance | Balance |
| 0.5% | 0.5% | 3.7% | 3.7% | 3.7% |
| 35% | 35% | 100% | 100% | 100% |
| 4.8 | 281.1 | 41.0 | 41.8 | 58.6 |
| 0.00 | 0.00 | 0.11 | 0.00 | 0.00 |
| 0.0% | 0.0% | 5.5% | 0.0% | 0.0% |
| 0.0% | 0.0% | 0.0% | 0.0% | 0.0% |
| 190.8 | 188.7 | 206.3 | 197.5 | 193.3 |
| B | A | B | C | AA |
| C | B | C | B | AA |
| B | B | A | B | C |
| C | C | B | B | A |
| B | B | B | B | A |
| A | B | B | A | B |

The abbreviations and materials used in Tables 5 to 6 are as follows.

- EG: ethylene glycol (boiling point: 197°C)
- DEG: diethylene glycol (boiling point: 244°C)
- PG: propylene glycol (boiling point: 188°C)
- DPG: dipropylene glycol (boiling point: 231°C)
- TEG: triethylene glycol (boiling point: 288°C)
- TPG: tripropylene Glycol (boiling point: 273°C)
- 2Py: 2-pyrrolidone (boiling point: 245°C)
- NMP: N-methylpyrrolidone (boiling point: 202°C)
- 1,2-BD: 1,2-butanediol (boiling point: 191°C, surface tension: 32 mN/m, HLB value: 7.6)
- 1,2-HD: 1,2-hexanediol (boiling point: 224°C, surface tension: 26 mN/m, HLB value: 5.8)
- DPM: dipropylene glycol monomethyl ether (boiling point: 188°C, surface tension: 27 mN/m, HLB value: 2.3)
- BDG: diethylene glycol monobutyl ether (boiling point: 230°C, surface tension: 28 mN/m, HLB value: 13.0)
- Gly: glycerol (boiling point: 290°C, surface tension: 62 mN/m, HLB value: 11.1)
- Surfynol 104: an acetylene-based surfactant (manufactured by Nisshin Chemical Industry, Inc. HLB: 3.0)
- Surfynol 440: an acetylene-based surfactant having an ethylene oxide group (manufactured by Nisshin Chemical Industry, Inc. HLB: 9.9)
- Surfynol 485: an acetylene-based surfactant having an ethylene oxide group (manufactured by Nisshin Chemical Industry, Inc. HLB: 17.5)
- Emalex 703: a glycol ether-based surfactant represented by formula (2) having R of a lauryl group, and having 3 ethylene oxide groups (manufactured by Nihon Emulsion Co., Ltd. HLB: 9.4)
- Emalex 630: a glycol ether-based surfactant represented by formula (2) having R of a stearyl group, and having 30 ethylene oxide groups (manufactured by Nihon Emulsion Co., Ltd. HLB: 16.7)
- Emalex 750: a glycol ether-based surfactant represented by formula (2) having R of a lauryl group, and having 50 ethylene oxide groups (manufactured by Nihon Emulsion Co., Ltd. HLB: 18.6)
- Nonion K -2100W: a glycol ether-based surfactant represented by formula (2) having R of a lauryl group, and having 100 ethylene oxide groups (manufactured by Nihon Emulsion Co., Ltd. HLB: 19.3)
- Tego Wet 280: a siloxane-based surfactant having an ethylene oxide group (Manufactured by Evonik Japan, HLB: 3.5)

<Examples 1 to 114 and Comparative Examples 1 to 9>

The magenta inks 1 to 123 (M1 to M 123) produced as described above were evaluated as follows. The evaluation results obtained were as shown in Tables 5 to 6.

<Evaluation 1: Evaluation of Storage Stability of Magenta Ink>

For each of the magenta inks M1 to M 123, the viscosity was measured using an E-type viscometer (TVE-20 L manufactured by Toki Sangyo Co., Ltd.), under conditions including a temperature of 25°C and a rotational rate of 50 rpm. The ink was then placed in a sealed container and stored in a thermostatic chamber at 70°C. Then, after the lapse of the predetermined period, the viscosity of the ink in the sealed container taken out from the thermostatic chamber was measured, and the storage stability was evaluated by calculating the ratio of the change in the viscosity of the ink before and after the storage. The evaluation criteria were as follows, with evaluations of AA, A, and B representing practically usable levels.

AA: the ratio of the change in viscosity after storage for 4 weeks was less than ± 5%.

A: the ratio of the change in viscosity after storage for 2weeks was less than ± 5%, but the ratio of the change in viscosity after storage for 4 weeks was at least ± 5%

B: the ratio of the change in viscosity after storage for 1 week was less than ± 5%, but the ratio of the change in viscosity after storage for 2 weeks was at least ± 5%

C: the ratio of the change in viscosity after storage for 1 week was at least ± 5%.

<Evaluation 2: Evaluation of Discharge Stability of Magenta Ink>

Each of the magenta inks M1 to M123 was charged into an inkjet discharge apparatus fitted with an inkjet head (KJ4B-QA model, design resolution: 600 dpi) manufactured by Kyocera Corporation. After confirming that there was no nozzle misfiring (phenomenon in which no ink is discharged from the nozzle), the inkjet discharge apparatus was allowed to stand by for a predetermined time under an environment of 25°C. After the lapse of a predetermined time, a nozzle check pattern was printed, and the number of nozzle misfires was visually counted to evaluate the discharge stability. The evaluation criteria were as follows, with evaluations of AA, A, and B representing practically usable levels.

AA: when printing was performed after standby of 4 hours, absolutely no nozzle misfires occurred.

A: when printing was performed after standby of 2 hours, absolutely no nozzle misfires occurred, but when printing was performed after standby of 4 hours, at least one nozzle misfire occurred.
B: when printing was performed after standby of 1 hour, absolutely no nozzle misfires occurred, but when printing was performed after standby of 2 hours, at least one nozzle misfire occurred.
C: when printing was performed after standby of 1 hour, at least one nozzle misfire occurred.

<Evaluation 3: Evaluation of Voids of Magenta Ink Printed Matter>

Each of the magenta inks M1 to M123 was charged into an inkjet discharge apparatus fitted with an inkjet head (KJ4B-QA model, design resolution: 600 dpi) manufactured by Kyocera Corporation. Then, under printing conditions of a frequency of 20 kHz and 600 × 600 dpi, solid printing with a print ratio of 100% was performed on a OK topcoat + (basis weight: 104.7 g/$m^2$) manufactured by Oji Paper Co., Ltd., and the resulting product was then subjected to drying using a 60°C air oven for 3 minutes, whereby a solid printed matter was produced. Then, a void evaluation was performed by inspecting the obtained solid printed matter under a magnifying glass and with the naked eye. The evaluation criteria were as follows, with evaluations of A and B representing practically usable levels.

A: no voids were visible under the magnifying glass or with the naked eye
B: slight voids were visible under the magnifying glass, but no voids were visible with the naked eye
C: voids were clearly visible with the naked eye

<Evaluation 4: Evaluation of Density of Magenta Ink Printed Matter>

Using the solid printed matter having a print ratio of 100% produced in the evaluation of voids, the measurement of the density (OD value) was performed. The evaluation criteria were as follows, with evaluations of AA, A, and B representing practically usable levels. For the measurement of the density, "eXact Standard" manufactured by X-Rite, Inc. was used. The measurement conditions were as follows: observation light source: D50; observation field of view: 2°; density: status E; white standard Abs; measurement mode: M0.
AA: OD value was more than 1.6.

A: OD value was at least 1.5 but less than 1.6
B: OD value was at least 1.4 but less than 1.5
C: OD value was less than 1.4

<Evaluation 5: Chroma Evaluation of Magenta Ink Printed Matter>

Using the solid printed matter having a printing ratio of 100% produced in the evaluation of voids, the CIE-Lab value (L*a*b* values) was measured under the same measuring instrument as that used in the evaluation of the density ("eXact Standard" manufactured by X-Rite, Inc.) and the same measuring conditions as those used in the evaluation of the density. The Chroma C* (= $(a^{*2} + b^{*2})^{1/2}$) was calculated from the obtained a* value and b* value. The evaluation criteria were as follows, with evaluations of AA, A, and B representing practically usable levels.
AA: the C* value was at least 78.

A: the C* value was at least 76 but less than 78
B: the C* value was at least 74 but less than 76
C: the C* value was less than 74

<Evaluation 6: Evaluation of Drying Properties of Magenta Ink Printed Material>

A solid printing with a print ratio of 100% was carried out using a printing substrate under the same printing conditions (printing condition) as in the evaluation of the voids as described above. After printing, the printed matter was put in a 60°C air oven, and the drying properties of the printed matter was evaluated by touching the printed matter with a finger every 15 seconds. The evaluation criteria were as follows, with evaluations of A and B representing practically usable levels.

A: even when the printed matter was touched with a finger 15 seconds after putting in the oven, no ink adhered to the finger.

B: ink adhered to the finger 15 seconds after putting in the oven, but did not adhere to the fingers 30 seconds after putting in the oven.

C: ink adhered to fingers even 30 seconds after putting in the oven.

< III. Production and Evaluation of Ink Set>

<Production of Yellow Inks 1 to 15 (Y1 to 15)>

First, 20 parts of the yellow pigment dispersion 1, 25 parts of propylene glycol, 5 parts of diethylene glycol monobutyl ether, 1 part of Surfynol 440, and 10 parts (solid fraction: 4 parts) of the aqueous solution of the binder resin 1 were sequentially charged into a mixing container, and sufficient water was then added to make the total ink amount up to 100 parts. The resulting mixture of these components was stirred until sufficiently uniform using a disper mixer. Thereafter, the obtained mixture was filtered through a membrane filter having a pore size of 1 μm to remove coarse particles that can cause head blockages, thus obtaining a yellow ink 1 (Y1).

With the exception of using the raw materials shown in Table 7, each of yellow inks 2 to 15 (Y2 to Y15) was produced in the same manner as the production example of the yellow ink 1.

[Table 7]

**Table 7**

| | | Y1 | Y2 | Y3 | Y4 | Y5 | Y6 | Y7 | Y8 | Y9 | Y10 | Y11 | Y12 | Y13 | Y14 | Y15 |
|---|---|---|---|---|---|---|---|---|---|---|---|---|---|---|---|---|
| Pigment dispersion | Yellow pigment dispersion 1 (pigment concentration = 20%) | 20.0% | | | 20.0% | 20.0% | 20.0% | 20.0% | 20.0% | 20.0% | 20.0% | 20.0% | 20.0% | 20.0% | 20.0% | 20.0% |
| | Yellow pigment dispersion2 (pigment concentration = 20%) | | 20.0% | | | | | | | | | | | | | |
| | Yellow pigment dispersion 3 (pigment concentration = 20%) | | | 20.0% | | | | | | | | | | | | |

(continued)

| | | | Y1 | Y2 | Y3 | Y4 | Y5 | Y6 | Y7 | Y8 | Y9 | Y10 | Y11 | Y12 | Y13 | Y14 | Y15 |
|---|---|---|---|---|---|---|---|---|---|---|---|---|---|---|---|---|---|
| Water-soluble organic solvent | Water-soluble organic solvent (A-1) | EG (boilingpoint: 197°C) | | | | 2.5% | | | | | | | | | 2.5% | 2.5% | 2.5% |
| | | DEG (boiling point: 244°C) | | | | | 14.5% | | | | | | | | | | |
| | | PG (boilingpoint: 188°C) | 25.0% | 25.0% | 25.0% | 20.0% | 5.5% | 25.0% | 25.0% | 2.5% | 35.0% | 40.0% | 500% | 17.5% | 17.5% | 12.5% | 25.0% |
| | Water-soluble organic Solvent (A-2) | TEG (boiling point: 288°C) | | | | | | 4.5% | | | | | | | | | |
| | Other water-soluble organic solvents | 1,2-BD (boiling point: 191°C) | | | | 5.0% | | | | 22.5% | | | | 5.0% | 5.0% | 5.0% | |
| | | BDG (boiling point: 230°C1 | 5.0% | 5.0% | 5.0% | | 5.0% | 0.5% | 5.0% | 5.0% | 5.0% | 5.0% | 5.0% | | | | |
| Surfactant | Acetylene-based surfactant | Surfynol 104 | | | | | | | 1.0% | | | | | | | | |
| | | Surfvnol 440 | 1.0% | 1.0% | 1.0% | 1.0% | 1.0% | 1.0% | | 1.0% | 1.0% | 1.0% | 1.0% | 1.0% | 1.0% | 1.0% | 1.0% |
| Binder resin | Aqueous solution of water-soluble resin 1 (solid fraction: 40%) | | 10.0% | 10.0% | 10.0% | 10.0% | 10.0% | 10.0% | 10.0% | 10.0% | 10.0% | 10.0% | 10.0% | 10.0% | 10.0% | 10.0% | 10.0% |
| Water | | | Balance | Balance | Balance | Balance | Balance | Balance | Balance | Balance | Balance | Balance | Balance | Balance | Balance | Balance | Balance |

<Production of Cyan Inks 1 to 13 (C1 to 13)>

First, 20 parts of the cyan pigment dispersion 1, 25 parts of propylene glycol, 5 parts of diethylene glycol monobutyl ether, 1 part of Surfynol 440, and 10 parts (solid fraction: 4 parts) of the aqueous solution of the binder resin 1 were sequentially charged into a mixing container, and sufficient water was then added to make the total amount up to 100 parts. The resulting mixture of these components was stirred until sufficiently uniform using a disper mixer. Thereafter, the obtained mixture was filtered through a membrane filter having a pore size of 1 μm to remove coarse particles that can cause head blockages, thus obtaining a cyan ink 1 (C1).

With the exception of using the raw materials shown in Table 8, each of cyan inks 2 to 13 (C2 to C3) was produced in the same manner as in the production example of the cyan ink 1.

[Table 8]

Table 8

| | | | C1 | C2 | C3 | C4 | C5 | C6 | C7 | C8 | C9 | C10 | C11 | C12 | C13 |
|---|---|---|---|---|---|---|---|---|---|---|---|---|---|---|---|
| Pigment dispersion | Cyan pigment dispersion 1 (pigment concentration = 20%) | | 20.0% | 20.0% | 20.0% | 20.0% | 20.0% | 20.0% | 20.0% | 20.0% | 20.0% | 20.0% | 20.0% | 20.0% | 20.0% |
| Water-soluble organic solvent | Water-soluble organic solvent (A-1) | EG (boiling point: 197°C) | | 2.5% | | | | | | | | | 2.5% | 2.5% | 2.5% |
| | | DEG (boiting point: 244°C) | | | 14.5% | | | | | | | | | | |
| | | PG (boling point: 188°C) | 25.0% | 20.0% | 5.5% | 25.0% | 25.0% | 2.5% | 35.0% | 40.0% | 50.0% | 17.5% | 17.5% | 12.5% | 25.0% |
| | Water-soluble organic Solvent (A-2) | TEG (boiling point: 288°C) | | | | 4.5% | | | | | | | | | |
| | Other water-soluble organic solvents | 1,2-BD (boiling point: 191°C) | | 5.0% | | | | 22.5% | | | | 5.0% | 5.0% | 5.0% | |
| | | BDG (boiling point: 230°C) | 5.0% | | 5.0% | 0.5% | 5.0% | 5.0% | 5.0% | 5.0% | 5.0% | | | | |

(continued)

| | | | C1 | C2 | C3 | C4 | C5 | C6 | C7 | C8 | C9 | C10 | C11 | C12 | C13 |
|---|---|---|---|---|---|---|---|---|---|---|---|---|---|---|---|
| Surfactant | Acetylene-based surfactant | Surfynol 104 | | | | | 1.0% | | | | | | | | |
| | | Surfvnol 440 | 1.0% | 1.0% | 1.0% | 1.0% | | 1.0% | 1.0% | 1.0% | 1.0% | 1.0% | 1.0% | 1.0% | 1.0% |
| Binder resin | Aqueous solution of water-soluble resin 1 (solid fraction: 40%) | | 10.0% | 10.0% | 10.0% | 10.0% | 10.0% | 10.0% | 10.0% | 10.0% | 10.0% | 10.0% | 10.0% | 10.0% | 10.0% |
| Water | | | Balance | Balance | Balance | Balance | Balance | Balance | Balance | Balance | Balance | Balance | Balance | Balance | Balance |

<Examples 115 to 139 and Comparative Examples 10 to 11>

The magenta inks, yellow inks, and cyan inks produced above were used in the combination (ink set) shown in Table 9, and the following evaluations were performed. The evaluation results obtained were as shown in Table 9.

<Evaluation 7: Evaluation of Mixed Color Bleeding of Inkjet Ink Sets>

Each of the combinations of inks shown in Table 9 was used as an ink set and each ink set was charged into in an inkjet discharge apparatus fitted with 3 inkjet heads (KJ4B-QA model, design resolution: 600 dpi) manufactured by Kyocera Corporation. Then, under the printing conditions of a frequency of 30 kHz and 600 × 600 dpi, a color chart image (an image in which patches of 3 colors of cyan, magenta, and yellow with the print ratios varied in 10% steps, respectively, are arranged) was printed by discharging the inks onto a low-absorption substrate, and dried in a 60°C air oven for 3 minutes. Drying was not performed for each color, but after printing of all the inks, the printed matter was put into an air oven to dry the three colors together.

The evaluation of mixed color bleeding was performed by inspecting a portion of the obtained printed matter having a total print ratio (total of the coverage for each color) of 210% (the print ratio of each color is 70%) under a magnifying glass and with the naked eye. The evaluation criteria were as follows, with evaluations of A and B representing practically usable levels. As the low-absorption substrate, OK topcoat + (basis weight: 104.7 g/m$^2$) manufactured by Oji Paper Co., Ltd and FOR #20 (biaxially oriented PP film, 20 μm thickness) manufactured by Futamura Chemical Co., Ltd. were used.

A: no mixed color bleeding was visible under a magnifying glass or with the naked eye
B: slight mixed bleeding was visible under the magnifying glass, but no mixed color bleeding was visible with the naked eye
C: mixed color bleeding was clearly visible with the naked eye.

<Evaluation 8: Evaluation of Color Reproducibility of Inkjet Ink Set>

Each of the combinations of the inks shown in Table 9 was used as an ink set, and each ink set was charged into an inkjet discharge apparatus in which two kinds of inkjet heads shown below were installed such that three inkjet heads were installed per one kind of inkjet head. After charging the inks into the inkjet discharge apparatus, the inks were discharged onto an OK topcoat + (basis weight: 104.7 g/m$^2$) manufactured by Oji Paper Co., Ltd., and a solid patch image (an image in which primary color solid patches (print ratio: 100%) of each color of cyan, magenta, and yellow, and secondary color solid patches (print ratio: 200%) printed by combining 2 of the 3 colors, are arranged) was printed and dried in a 60°C air oven for 3 minutes.

Then, using the same measuring instrument as that used in the evaluation of the density ("eXact Standard" manufactured by X-Rite, Inc.), the CIE-Lab value (L*a*b* values) of each solid patch was measured and compared with the L*a*b* values of the primary solid color and the secondary solid color specified in the Japan Color 2011 for Sheet-fed Offset, thereby evaluating the color reproducibility. The evaluation criteria were as follows, with the evaluations of AA, A, and B representing practically usable levels.

AA: the color reproduction region was equal to exceeding that of Japan color

A: the color reproduction region was equal to that of Japan Color
B: the color reproduction region was slightly less than that of Japan Color
C: the color reproduction region was much narrower than that of Japan Color

The inkjet heads used in the evaluation 8 are as follows.

Head A: inkjet head manufactured by Kyocera Corporation (KJ4B-QA Model, design resolution: 600 dpi, nozzle diameter: 25 μm, print resolution: 600 × 600 dpi)
Head B: inkjet head manufactured by Kyocera Corporation (KJ4B-1200 model, design resolution: 1200 dpi, nozzle diameter: 20 μm, print resolution: 1200 × 1200 dpi)

<Evaluation 9: Evaluation of Sharpness of Printed Matter Produced using Inkjet Ink Set>

Each of the combination of inks shown in Table 9 was used as an ink set and charged into an inkjet discharge device fitted with 3 inkjet heads (KJ4B-QA model, design resolution: 600 dpi) manufactured by Kyocera Corporation. Then, under the printing conditions of a frequency of 30 kHz and 600 × 600 dpi, the inks was discharged onto a low-absorption substrate to print a natural image N5 (bicycle) of JIS X 9201 high-definition color digital standard image data (CMYK/SCID), and drying was performed using a 60°C air oven for 3 minutes. Drying was not performed for each color, but after printing all the inks, the printed matter was put into an air oven to dry the three colors together.

Then, the obtained printed matter was visually inspected and compared relatively to evaluate the sharpness. The evaluation criteria were as follows, with the evaluations of A and B representing practically usable levels. As the low-absorption substrate, OK topcoat + (base weight: 104.7 g/$m^2$) manufactured by Oji Paper Co., Ltd. and FOR # 20 (biaxially oriented PP film, 20 μm thickness) manufactured by Futamura Chemical Co., Ltd. were used.

A: the sharpness was superior to that of the printed matter of Example 131.
B: it had the same sharpness as the printed matter of Example 131.
C: the sharpness was inferior to that of the printed matter of Example 131.

[Table 9-1]

Table 9

| | | | Example 115 | Example 116 | Example 117 | Example 118 | Example 119 | Example 120 | Example 121 | Example 122 | Example 123 | Example 124 | Example 125 |
|---|---|---|---|---|---|---|---|---|---|---|---|---|---|
| Conbination of inks | Magenta ink | | M2 | M3 | M4 | M3 | M3 | M105 | M106 | M107 | M108 | M108 | M109 |
| | Yellow ink | | Y1 | Y1 | Y1 | Y2 | Y3 | Y1 | Y1 | Y8 | Y10 | Y11 | Y11 |
| | Cyan ink | | C1 | C1 | C1 | C1 | C1 | C1 | C1 | C6 | C8 | C9 | C9 |
| Parameters | Molar amount of diol-based solvent (A-1) relative to molar amount of azo pigment (times) in each of ink sets | | 129.0 | 125.5 | 136.6 | 125.5 | 125.5 | 157.4 | 147.5 | 13.4 | 192.5 | 225.9 | 251.0 |
| Evaluations | Evaluation 7 mixed color bleeding | OK topcoat + | A | A | A | A | A | A | A | A | A | A | B |
| | | FOR#20 | B | A | A | A | A | B | A | A | A | B | B |
| | Evaluation 8 color reproducibility | Head A | A | AA | AA | A | B | B | A | A | AA | A | B |
| | | Head B | B | A | AA | A | B | B | B | A | A | B | B |
| | Evaluation 9 sharpness of printed matter | OK topcoat + | A | A | A | A | B | A | A | A | A | A | B |
| | | FOR#20 | A | A | A | A | A | A | A | A | A | B | B |

[Table 9-2]

Table 9 (continued from previous page)

| | | | Example 126 | Example 127 | Example 128 | Example 129 | Example 130 | Example 131 | Example 132 | Example 133 | Example 134 | Example 135 | Example 136 | Example 137 | Example 138 | Example 139 | Comparative Example 10 | Comparative Example 11 |
|---|---|---|---|---|---|---|---|---|---|---|---|---|---|---|---|---|---|---|
| Conbination of inks | Magenta ink | | M110 | M47 | M111 | M48 | M112 | M104 | M12 | M113 | M114 | M67 | M14 | M68 | M75 | M83 | M115 | M117 |
| | Yellow ink | | Y13 | Y4 | Y15 | Y9 | Y10 | Y12 | Y14 | Y14 | Y13 | Y1 | Y6 | Y5 | Y7 | Y1 | Y1 | Y1 |
| | Cyan ink | | C11 | C2 | C13 | C7 | C8 | C10 | C12 | C12 | C11 | C1 | C4 | C3 | C5 | C1 | C1 | C1 |
| Parameters | Molar amount of diol-based solvent (A-1) relative to molar amount of azo pigment (times) in each of ink sets | | 185.5 | 208.1 | 253.2 | 187.1 | 241.2 | 183.8 | 177.0 | 178.2 | 185.5 | 135.5 | 125.5 | 79.8 | 125.5 | 133.2 | 622.0 | - |
| Evaluations | Evaluation 7 mixed color bleeding | OK topcoat + | A | A | B | A | A | A | A | A | A | A | B | B | A | A | A | A |
| | | FOR#20 | A | A | B | A | A | A | A | A | A | A | B | B | B | A | A | A |
| | Evaluation 8 color reproducibility | Head A | AA | AA | A | AA | A | A | AA | A | AA | A | B | AA | A | B | C | C |
| | | Head B | AA | A | B | AA | A | B | A | B | A | B | B | A | B | B | C | C |
| | Evaluation 9 sharpness of printed matter | OK topcoat + | A | A | A | A | A | B | A | B | A | A | B | A | A | B | C | B |
| | | FOR#20 | A | B | B | A | A | B | A | A | A | A | B | A | B | A | B | B |

From Examples 1 to 114 shown in Table 5, it was found that by using the magenta ink for an inkjet, a high-quality image having no voids, high color development, and high sharpness can be obtained even with a low-absorption substrate, and the ink exhibits excellent in storage stability, discharge stability, and drying properties. In addition, according to Examples 115 to 139 shown in Table 9, it was found that by using the ink set containing the magenta ink for an inkjet, a printed matter having high color reproducibility and sharpness and no mixed color bleeding can be obtained even when the design resolution of the inkjet head is large and/or a low-absorption substrate such as a PP film is used.

On the other hand, Comparative Example 1 shown in Table 6 was a system in which the amount of the azo pigment was less than 35% by mass in the total amount of the pigment, Comparative Example 3 which was a system not containing an azo pigment, and both Comparative Example 1 and Comparative Example 3 resulted in inferior color development and sharpness of the printed matter. It was also found that the ink set (Comparative Examples 10 to 11 in Table 9) containing these inks, exhibited insufficient color reproducibility of the printed matter. On the other hand, in Comparative Example 2, which is a system containing only one kind of azo pigment, while the color development and sharpness of the printed matter were good, deterioration in the discharge stability, which was thought to be due to the dissolution of the azo pigment and/or the destruction of dispersed state of the azo pigment, was observed. Similarly, in Comparative Example 4 in which the amount of the azo pigment was more than 8% by mass, the discharge stability was inferior.

Each of Comparative Examples 5 and 6 is a system in which the molar amount of the diol-based solvent (A-1) to the molar amount of the azo pigment is not within a range of 5 to 250 times. Of these, in a system in which the molar amount of the diol-based solvent (A-1) is too small relative to the molar amount of the azo pigment (Comparative Example 5), deterioration in color development of the printed matter and discharge stability was found. It is thought that the protection of the azo pigment was insufficient. On the other hand, in a system in which the molar amount of the diol-based solvent (A-1) is too high relative to the molar amount of the azo pigment (Comparative Example 6), the color development of the printed matter was poor. Although the detailed reason is unknown, the results suggest that an excessive amount of the diol-based solvent (A-1) adversely affects the color development of the printed matter.

Comparative Example 7 contained an excessive amount of a diol-based solvent (A-2), and Comparative Example 8 contained an excessive amount of a cyclic amide-based solvent. Each of Comparative Examples 7 and 9 resulted in poor discharge stability and poor storage stability. Further, in Comparative Example 9 which does not contain a surfactant, voids, which are thought to be caused by insufficient wet spreading on the printing substrate, were observed.

The above results indicate that an inkjet magenta ink having the above configuration and an ink set including the magenta ink can satisfy a combination of favorable storage stability, favorable discharge stability, favorable color development, sharpness and color reproducibility of a printed matter, favorable printing image quality for a low-absorption substrate, and favorable drying properties.

## Claims

1. An inkjet ink set comprising at least a cyan ink, a yellow ink and a magenta ink, wherein

the cyan ink and the yellow ink comprise a diol-based solvent (A-1), and
the magenta ink comprises:

two or more pigments, a water-soluble organic solvent (A), a surfactant and water, wherein the two or more pigments comprise an azo pigment, wherein the azo pigment comprises a naphthol AS pigment and/or a β-oxynaphthoic acid-based lake pigment,
an amount of the azo pigment is from 0.5 to 8% by mass of a total mass of the magenta ink for an inkjet, and from 35 to 100% by mass of a total mass of the pigments,
the water-soluble organic solvent (A) comprises a diol-based solvent (A-1) that is a diol-based solvent represented by formula (1) shown below and has n of 1 and/or 2, in a molar amount of from 5 to 250 times a molar amount of the azo pigment,
a molar amount of a diol-based solvent (A-2) that is a diol-based solvent represented by formula (1) shown below and has n of 3 and/or 4 is 0.1 times or less the molar amount of the diol-based solvent (A-1), and
an amount of a cyclic amide-based solvent in the water-soluble organic solvent (A) is not more than 4.5% by mass of the total mass of the magenta ink for an inkjet:

$$HO\text{-}(AO)n\text{-}H \qquad (1)$$

wherein, in formula (1), AO represents an ethylene oxide group or a propylene oxide group, and n represents an integer of from 1 to 4,

and wherein the molar amount of the diol-based solvent (A-1) is 5 to 250 times the molar amount of the azo pigment contained, calculated using an ink obtained by mixing all the inks included in the ink set except for black ink in equal amounts.

**2.** The ink set according to Claim 1, wherein each of the molar amount of the diol-based solvent (A-1) contained in the magenta ink, a molar amount of the diol-based solvent (A-1) contained in the cyan ink and a molar amount of the diol-based solvent (A-1) contained in the yellow ink is from 5 to 250 times the molar amount of the azo pigment contained in the magenta ink.

**3.** The ink set according to Claim 1 or 2, wherein the azo pigment in the magenta ink comprises a naphthol AS pigment and a β-oxynaphthoic acid-based lake pigment, and an amount of the β-oxynaphthoic acid-based lake pigment is from 50 to 99% by mass relative to a total mass of the naphthol AS pigment and the β-oxynaphthoic acid-based lake pigment.

**4.** The ink set according to Claim 3, wherein the naphthol AS pigment comprises C. I. Pigment Red 150.

**5.** The ink set according to Claim 3 or 4, wherein the β-oxynaphthoic acid-based lake pigment comprises C. I. Pigment Red 48:3.

**6.** The ink set according to any one of Claims 1 to 5, wherein the two or more pigments in the magenta ink further comprise a quinacridone pigment and/or a solid solution pigment that comprises a quinacridone pigment.

**7.** The ink set according to any one of Claims 1 to 6, wherein

the azo pigment in the magenta ink comprises a naphthol AS pigment, and
the amount of the azo pigment is more than 50% by mass but not more than 99% by mass relative to the total mass of the two or more pigments.

**8.** The ink set according to any one of Claims 1 to 7, wherein the magenta ink further comprises a binder resin, wherein the binder resin has a glass transition temperature (Tg) of from 40 to 120°C.

**9.** The ink set according to any one of Claims 1 to 8, wherein the magenta ink has a spectral reflectance of a coating having a wet film thickness of 6 μm produced on a printing substrate of not more than 10% in a wavelength region of from 480 to 580 nm.

**10.** The ink set according to any one of Claims 1 to 9, wherein the surfactant is a combination of an acetylene-based surfactant with a siloxane-based surfactant.

**11.** A method for producing an inkjet printed matter, the method comprising discharging the ink set according to any one of Claims 1 to 10 from an inkjet head to adhere ink droplets to a low-absorption substrate.

**12.** The method for producing an inkjet printed matter according to Claim 11, wherein a nozzle diameter of the inkjet head is from 10 to 30 μm.

**13.** An inkjet printed matter obtained by printing the ink set according to any one of Claims 1 to 10 on a low-absorption substrate.

**Patentansprüche**

**1.** Tintenstrahl-Tintensatz, umfassend mindestens eine cyanfarbene Tinte, eine gelbe Tinte und eine magentafarbene Tinte, wobei

die cyanfarbene Tinte und die gelbe Tinte ein Lösungsmittel auf Diolbasis (A-1) umfassen und
die magentafarbene Tinte umfasst:

zwei oder mehr Pigmente, ein wasserlösliches organisches Lösungsmittel (A), ein Tensid und Wasser, wobei die zwei oder mehr Pigmente ein Azopigment umfassen, wobei das Azopigment ein Naphthol-AS-Pigment und/oder ein Lackpigment auf β-Oxynaphthoesäurebasis umfasst,
eine Menge des Azopigments 0,5 bis 8 Masse-% einer Gesamtmasse der Magenta-Tinte für einen Tintenstrahl und 35 bis 100 Masse-% einer Gesamtmasse der Pigmente beträgt,
das wasserlösliche organische Lösungsmittel (A) ein Lösungsmittel auf Diolbasis (A-1), bei dem es sich um ein Lösungsmittel auf Diolbasis handelt, das durch die unten gezeigte Formel (1) dargestellt ist und ein n von 1 und/oder 2 aufweist, in einer molaren Menge des 5- bis 250-fachen einer molaren Menge des Azopigments umfasst,
eine molare Menge eines Lösungsmittels auf Diolbasis (A-2), bei dem es sich um ein Lösungsmittel auf Diolbasis handelt, das durch die unten gezeigte Formel (1) dargestellt ist und ein n von 3 und/oder 4 aufweist, das 0,1-fache oder weniger der molaren Menge des Lösungsmittels auf Diolbasis (A-1) beträgt und
eine Menge eines Lösungsmittels auf Basis eines cyclischen Amids in dem wasserlöslichen organischen Lösungsmittel (A) nicht mehr als 4,5 Masse-% der Gesamtmasse der magentafarbenen Tinte für einen Tintenstrahl beträgt:

$$HO\text{-}(AO)n\text{-}H \qquad (1)$$

wobei in Formel (1) AO eine Ethylenoxidgruppe oder eine Propylenoxidgruppe darstellt und n eine ganze Zahl von 1 bis 4 darstellt
und wobei die molare Menge des Lösungsmittels auf Diolbasis (A-1) das 5-bis 250-fache der molaren Menge des enthaltenen Azopigments begträgt, berechnet unter Verwendung einer durch Mischen aller in dem Tintensatz enthaltenen Tinten mit Ausnahme der schwarzen Tinte in gleichen Mengen erhaltenen TinteRot.

2. Tintensatz gemäß Anspruch 1, wobei jede der molaren Menge des in der magentafarbenen Tinte enthalten Lösungsmittels auf Diolbasis (A-1), einer molaren Menge des in der cyanfarbenen Tinte enthalten Lösungsmittels auf Diolbasis (A-1) und einer molaren Menge des in der gelben Tinte enthalten Lösungsmittels auf Diolbasis (A-1) das 5- bis 250-fache der molaren Menge des in der magentafarbenen Tinte enthaltenen Azopigments beträgt.

3. Tintensatz gemäß Anspruch 1 oder 2, wobei das Azopigment in der magentafarbenen Tinte ein Naphthol-AS-Pigment und ein Lackpigment auf β-Oxynaphthoesäurebasis umfasst und eine Menge des Lackpigments auf β-Oxynaphthoesäurebasis 50 bis 99 Masse-% relativ zu einer Gesamtmasse des Naphthol-AS-Pigments und des Lackpigments auf β-Oxynaphthoesäurebasis beträgt.

4. Tintensatz gemäß Anspruch 3, wobei das Naphthol-AS-Pigment C. I. Pigment Rot 150 umfasst.

5. Tintensatz gemäß Anspruch 3 oder 4, wobei das Lackpigment auf β-Oxynaphthoesäurebasis C. I. Pigment Rot 48:3 umfasst.

6. Tintensatz gemäß einem der Ansprüche 1 bis 5, wobei die zwei oder mehr Pigmente in der magentafarbenen Tinte ferner ein Chinacridon-Pigment und/oder ein Festlösungspigment umfassen, das ein Chinacridon-Pigment umfasst.

7. Tintensatz gemäß einem der Ansprüche 1 bis 6, wobei

   das Azopigment in der magentafarbenen Tinte ein Naphthol-AS-Pigment umfasst und
   die Menge des Azopigments mehr als 50 Masse-%, aber nicht mehr als 99 Masse-% relativ zur Gesamtmasse der zwei oder mehr Pigmente beträgt.

8. Tintensatz gemäß einem der Ansprüche 1 bis 7, wobei die magentafarbene Tinte ferner ein Bindemittelharz umfasst, wobei das Bindemittelharz eine Glasübergangstemperatur (Tg) von 40 bis 120°C aufweist.

9. Tintensatz gemäß einem der Ansprüche 1 bis 8, wobei die magentafarbene Tinte ein spektrales Reflexionsvermögen einer Beschichtung mit einer Nassfilmdicke von 6 μm, erzeugt auf einem Drucksubstrat, von nicht mehr als 10 % in einem Wellenlängenbereich von 480 bis 580 nm aufweist.

10. Tintensatz gemäß einem der Ansprüche 1 bis 9, wobei es sich bei dem Tensid um eine Kombination eines Tensids auf Acetylenbasis mit einem Tensid auf Siloxanbasis handelt.

11. Verfahren zum Herstellen eines Tintenstrahldruckerzeugnisses, wobei das Verfahren das Ausstoßen des Tintensatzes gemäß einem der Ansprüche 1 bis 10 aus einem Tintenstrahlkopf umfasst, um Tintentröpfchen an ein Substrat mit geringer Absorption zu binden.

**12.** Verfahren zum Herstellen eines Tintenstrahldruckerzeugnisses gemäß Anspruch 11, wobei ein Düsendurchmesser des Tintenstrahlkopfs 10 bis 30 μm beträgt.

**13.** Tintenstrahldruckerzeugnis, erhalten durch Drucken des Tintensatzes gemäß einem der Ansprüche 1 bis 10 auf ein Substrat mit geringer Absorption.

**Revendications**

**1.** Jeu d'encres pour jet d'encre comprenant au moins une encre cyan, une encre jaune et une encre magenta, dans lequel

l'encre cyan et l'encre jaune comprennent un solvant à base de diol (A-1), et
l'encre magenta comprend :

deux pigments ou plus, un solvant organique hydrosoluble (A), un tensioactif et de l'eau, les deux pigments ou plus comprenant un pigment azoïque, le pigment azoïque comprenant un pigment AS de naphtol et/ou un pigment laqué à base d'acide β-oxynaphtoïque,
une quantité du pigment azoïque représentant de 0,5 à 8 % en masse d'une masse totale de l'encre magenta pour jet d'encre, et de 35 à 100 % en masse d'une masse totale des pigments,
le solvant organique hydrosoluble (A) comprenant un solvant à base de diol (A-1) qui est un solvant à base de diol représenté par la formule (1) présentée ci-dessous dans laquelle n vaut 1 et/ou 2, en une quantité molaire allant de 5 à 250 fois une quantité molaire du pigment azoïque,
une quantité molaire du solvant à base de diol (A-2) qui est un solvant à base de diol représenté par la formule (1) présentée ci-dessous dans laquelle n vaut 3 et/ou 4, est égale à 0,1 fois ou moins la quantité molaire du solvant à base de diol (A-1), et
une quantité d'un solvant à base d'amide cyclique dans le solvant organique hydrosoluble (A) n'est pas supérieure à 4,5 % en masse de la masse totale de l'encre magenta pour jet d'encre :

$$HO\text{-}(AO)n\text{-}H \qquad (1)$$

où, dans la formule (1), AO représente un groupe oxyde d'éthylène ou un groupe oxyde de propylène, et n représente un entier de 1 à 4,
et où la quantité molaire du solvant à base de diol (A-1) représente de 5 à 250 fois la quantité molaire du pigment azoïque présent, calculée en utilisant une encre obtenue en mélangeant toutes les encres comprises dans le jeu d'encres, à l'exception de l'encre noire, en quantités égales.

**2.** Jeu d'encres selon la revendication 1, dans lequel chacune de la quantité molaire du solvant à base de diol (A-1) dans l'encre magenta, d'une quantité molaire du solvant à base de diol (A-1) dans l'encre cyan et d'une quantité molaire du solvant à base de diol (A-1) dans l'encre jaune représente 5 à 250 fois la quantité molaire du pigment azoïque présent dans l'encre magenta.

**3.** Jeu d'encres selon la revendication 1 ou 2, dans lequel le pigment azoïque dans l'encre magenta comprend un pigment AS de naphtol et un pigment laqué à base d'acide β-oxynaphtoïque, et une quantité du pigment laqué à base d'acide β-oxynaphtoïque va de 50 à 99 % en masse par rapport à une masse totale du pigment naphtol AS et du pigment laqué à base d'acide β-oxynaphtoïque.

**4.** Jeu d'encres selon la revendication 3, dans lequel le pigment AS de naphtol comprend le pigment C.I. Red 150.

**5.** Jeu d'encres selon la revendication 3 ou 4, dans lequel le pigment laqué à base d'acide β-oxynaphtoïque comprend le pigment C.I. Red 48:3.

**6.** Jeu d'encres selon l'une quelconque des revendications 1 à 5, dans lequel les deux pigments ou plus dans l'encre magenta comprennent en outre un pigment quinacridone et/ou un pigment en solution solide qui comprend un pigment quinacridone.

7. Jeu d'encres selon l'une quelconque des revendications 1 à 6, dans lequel

le pigment azoïque dans l'encre magenta comprend un pigment AS naphtol, et
la quantité du pigment azoïque est supérieure à 50 % en masse mais non supérieure à 99 % en masse par rapport à la masse totale des deux pigments ou plus.

8. Jeu d'encres selon l'une quelconque des revendications 1 à 7, dans lequel l'encre magenta comprend en outre une résine liante, la résine liante ayant une température de transition vitreuse (Tg) de 40 à 120 °C.

9. Jeu d'encres selon l'une quelconque des revendications 1 à 8, dans lequel l'encre magenta présente une réflectance spectrale, pour un revêtement ayant une épaisseur de film humide de 6 μm produit sur une surface d'impression, non supérieur à 10 % dans une région de longueur d'onde allant de 480 à 580 nm.

10. Jeu d'encres selon l'une quelconque des revendications 1 à 9, dans lequel le tensioactif est une association d'un tensioactif à base d'acétylène et d'un tensioactif à base de siloxane.

11. Procédé de production d'une matière imprimée par jet d'encre, le procédé comprenant l'éjection du jeu d'encres selon l'une quelconque des revendications 1 à 10 depuis une tête de jet d'encre pour faire adhérer des gouttelettes d'encre sur un substrat faiblement absorbant.

12. Procédé de production d'une matière imprimée par jet d'encre selon la revendication 11, dans lequel un diamètre de buse de la tête de jet d'encre va de 10 à 30 μm.

13. Matière imprimée par jet d'encre obtenue par impression du jeu d'encres selon l'une quelconque des revendications 1 à 10 sur un substrat faiblement absorbant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H9279070 A
- JP H10219166 A
- JP 2005029626 A
- JP 2007099997 A
- JP 2014214277 A
- WO 2015187143 A1
- US 2002096085 A1
- JP 6061008 B
- WO 2015105503 A1
- JP 2015013971 A
- JP 2015030801 A
- JP 2016074749 A


### Non-patent literature cited in the description


- Surfactant Handbook. Sangyo Tosho Co., Ltd, 1960, 324